(19) Europäisches Patentamt
European Patent Office
Office européen des brevets

(11) Publication number: **0 041 040**
**B1**

(12) **EUROPEAN PATENT SPECIFICATION**

(45) Date of publication of patent specification: **09.01.85**

(21) Application number: **81810171.9**

(22) Date of filing: **06.05.81**

(51) Int. Cl.⁴: **C 09 B 44/00,** C 09 B 45/00, D 06 P 3/32, D 21 H 1/46

(54) **Sulphofree basic azo compounds in metal complex form, in metal-free form and method for preparing the forme.**

(30) Priority: **08.05.80 CH 3601/80**
**08.05.80 CH 3602/80**
**08.05.80 CH 3603/80**
**08.05.80 CH 3604/80**
**08.05.80 CH 3605/80**
**08.05.80 CH 3606/80**
**13.05.80 CH 3735/80**
**13.05.80 CH 3736/80**
**13.05.80 CH 3737/80**
**29.05.80 CH 4183/80**
**29.05.80 CH 4184/80**
**29.05.80 CH 4185/80**
**01.07.80 CH 5079/80**
**01.07.80 CH 5080/80**
**01.07.80 CH 5081/80**
**10.12.80 CH 9104/80**
**10.12.80 CH 9105/80**
**10.12.80 CH 9106/80**

(43) Date of publication of application:
**02.12.81 Bulletin 81/48**

(45) Publication of the grant of the patent:
**09.01.85 Bulletin 85/02**

(84) Designated Contracting States:
**CH DE FR GB IT LI**

(56) References cited:
**CH-A- 472 486**
**FR-A-1 211 425**
**FR-A-1 533 643**

(73) Proprietor: **SANDOZ AG**
**Lichtstrasse 35**
**CH-4002 Basel (CH)**

(72) Inventor: **Doswald, Paul**
**Eschenstrasse 4**
**CH-4142 Münchenstein (CH)**
Inventor: **Moriconi, Emil**
**Passwangstrasse 59**
**CH-4059 Basle (CH)**
Inventor: **Moser, Helmut**
**Libellenstrasse 25**
**CH-4104 Oberwil (CH)**
Inventor: **Schmid, Horst**
**Habshagstrasse 13**
**CH-4153 Reinach (CH)**

(56) References cited:
**GB-A- 883 445**
**GB-A-1 296 857**
**GB-A-1 299 080**
**GB-A-1 338 250**
**GB-A-1 550 830**
**US-A-4 103 092**
**US-A-4 206 144**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 041 040 B1

**Description**

The invention relates to sulpho-free basic azo compounds, in 1:1 metal complex or 1:2 metal complex form, which are useful for dyeing paper and leather, to these compounds in metal-free form, and to a method to prepare the same.

What is meant by a "1:1 metal complex" is that each molecule of the complex has 1 metal atom bonded to 1 dyestuff molecule or has 2 metal atoms bonded to two dyestuff units, which dyestuff units are joined together by a direct bond or a conventional bridging group; and what is meant by a "1:2 metal complex" is that the complex has 1 atom of metal bonded to two dyestuff units, which dyestuff units can be the same or different but which dyestuff units are part of two separate dyestuff molecules.

The invention provides sulpho-free azo compounds, in 1:1 metal complex or 1:2 metal complex form or in metal-free form having on average at leat 1.3 preferably 2, water solubilising basic groups, the compounds being of the formula II

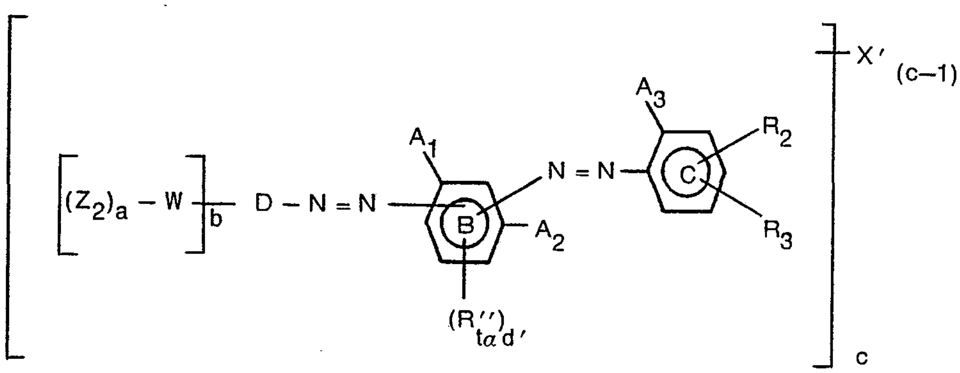

II′

where

c is 1 or 2;

d′ is 0 or 1;

$A_1$ is —OH or —$NH_2$;

$A_3$ is —OH or —$NH_2$;

$A_1$ and $A_3$ form the group —NH—Me—O— or —O—Me—O— or —NH—Me—NH— where Me is either a metal capable of either forming a 1:1 metal complex or a 1:2 metal complex or capable of forming both a 1:1 metal complex and a 1:2 metal complex;

$A_2$ is —OH or —$NH_2$;

D is a usual diazo component;

W is a direct bond or Wa,

where

Wa is

$—(CH_2)_s—$, $—NHCO(\overset{*}{C}H_2)_s—$, $—CONH—(\overset{*}{C}H_2)_s—$ or $—SO_2—NH—(\overset{*}{C}H_2)_s—$,

in which the starred C atom is attached to the N atom of the group $Z_2$ defined below, and s is 1, 2, 3, 4, 5 or 6;

X′ is one of the groups $X_1$ to $X_{53}$ below:

$X_1$ is a direct bond,

$X_2$ a straight or branched chain alkylene group of ($C_{1-4}$) carbon atoms,

$X_3$ –CO–

$X_4$ $-NH-\overset{\overset{S}{\|}}{C}-NH-$, $X_5$ –S–, $X_6$ –O–, $X_7$ –CH=CH–, $X_8$ –S–S–,

$X_9$ $-SO_2-$, $X_{10}$ –NH–, $X_{11}$ –NH–CO–, $X_{12}$ $-\underset{\underset{CH_3}{|}}{N}-CO-$, $X_{13}$ 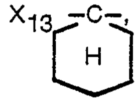

$X_{14}$ 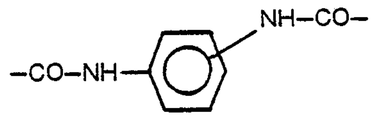 , $X_{15}$ 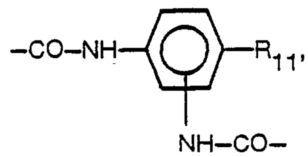

$X_{16}$ 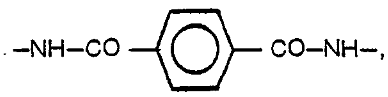 , $X_{17}$ $-SO_2-NH-$, $X_{18}$ 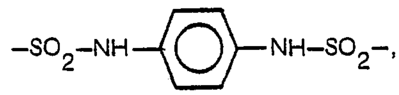

$X_{19}$ 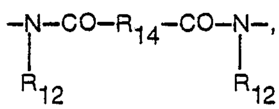 $X_{20}$ 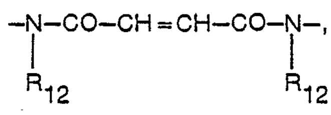 $X_{21}$ 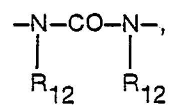

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 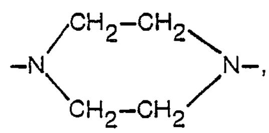

$X_{26}$ 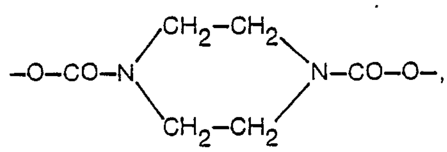 $X_{27}$ 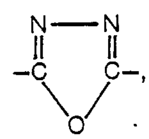 $X_{28}$ 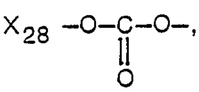

$X_{29}$ 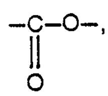 $X_{30}$ 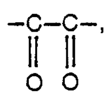 $X_{31}$ $-O-(CH_2)_q-O-$, $X_{32}$ 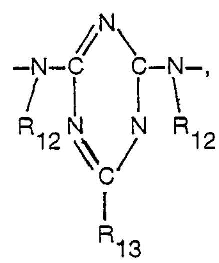

$X_{33}$ 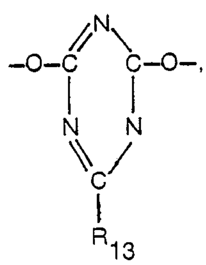 $X_{34}$ 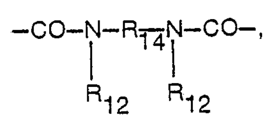

$X_{35}$ 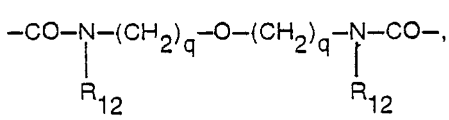

$X_{36}$ 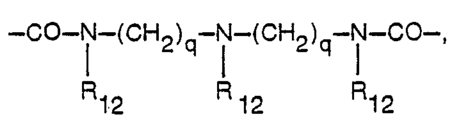

$X_{37}$ 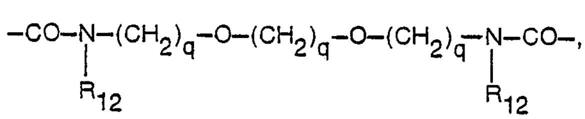 $X_{38}$ 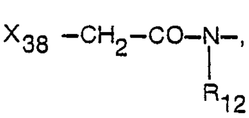

$X_{39}$ 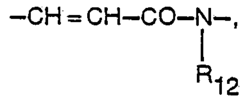 $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-CS-NH-CH_2-$, $X_{47}$ 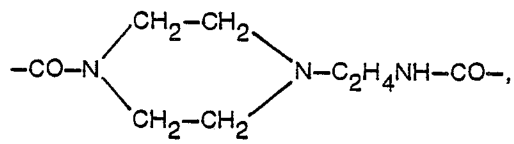

$X_{48}$ 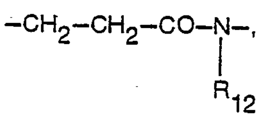

$X_{49}$ $-NH-CO-NH-$,

$X_{50}$ $-O-(CH_2)_q-O-$,

$X_{51}$ 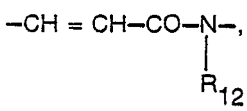

$X_{52}$ 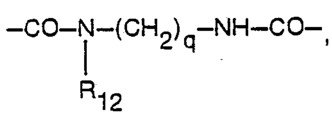

$X_{53}$ 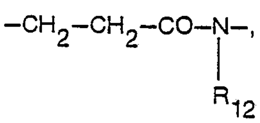

where

$R_{11}$ is halogen, $(C_{1-4})$alkyl or $(C_{1-4})$alkoxy
$R_{12}$ is hydrogen or $(C_{1-4})$alkyl;
$R_{13}$ is halogen, $-NH-CH_2-CH_2-OH$ or $-N(CH_2-CH_2OH)_2$;
$R_{14}$ is a straight or branched $C_{1-4}$alkylene group and q is 1, 2, 3 or 4;
a is 1 or 2;
b is a number between 1 and 2;
$R''_{ta}$ is a group of the formula $\alpha\alpha$ or $\alpha\beta$;

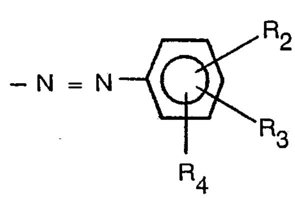 $\alpha\alpha$ or

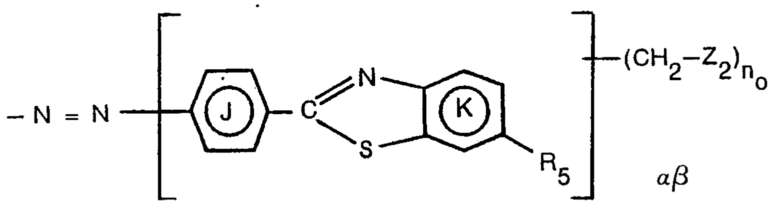

αβ

where

$R_2$ is hydrogen,

$—NO_2$, $SO_2—NH_2$, $SO_2NH—R_1$, 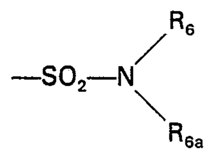

$SO_2—NH—(CH_2)_p—Z_2$, $(C_{1-4})$alkyl or $(C_{1-4})$alkoxy,

where

p is 1, 2 or 3,

$R_1$ is $C_{1-4}$alkyl, $—C_2H_4OH$ or $—(CH_2)_p—N—(R_{1a})_2$ where $R_{1a}$ is propyl or butyl,

$R_6$ is $C_{1-4}$alkyl, $—C_2H_4OH$ or $(CH_2)_p—N—(R_6')_2$ where $R_6'$ is $(C_{1-4})$alkyl and $R_{6a}$ is $(C_{1-4})$alkyl, $—C_2H_4OH$, $—(CH_2)_p—N—(R_6')_2$ or $C_2H_4O—R_6'$;

$R_3$ is hydrogen,

$—NO_2$, $SO_2NH_2$, $SO_2NH—R_1$, 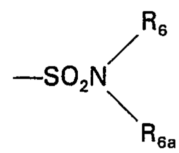

$(C_{1-4})$alkyl, $(C_{1-4})$alkoxy,

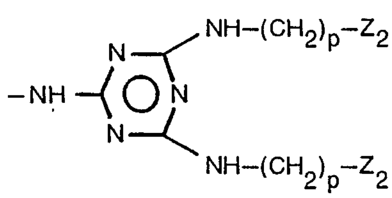

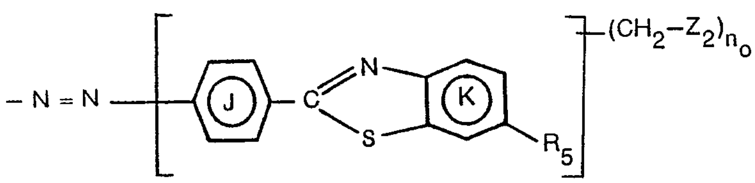

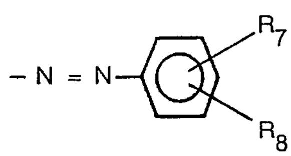

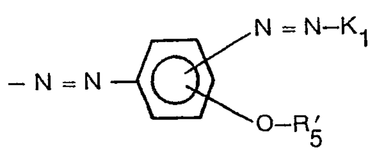 , $—N=N—K_1$ ,

$-CO-NH-(CH_2)_p-Z_2$, $-NH-CO-(CH_2)_p-Z_2$, $-SO_2-NH-(CH_2)_p-Z_2$ or

$-CH_2-Z_2$,

where

$R_5$ is hydrogen, $(C_{1-4})$alkyl or $(C_{1-4})$alkoxy;

$R_5'$ is $C_{1-4}$alkyl;

$n_o$ is a number between 1 and 2 inclusive and the group $(CH_2-Z_2)$ is attached to either of the phenyl groups J or K

$R_7$ is hydrogen, $-OH$, $(C_{1-4})$alkyl, $(C_{1-4})$alkoxy $-NH-CO-NH_2$ or $-NH-CO-CH_3$;

$R_8$ is hydrogen, $-NH-CO-(CH_2)_p-Z_2$ or

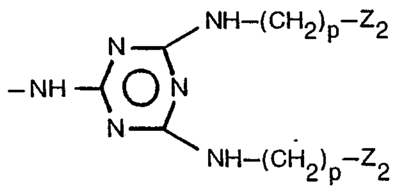

$R_4$ is hydrogen, $-NO_2$, $(C_{1-4})$alkyl or $(C_{1-4})$alkoxy;

$K_1$ is a group of the formula

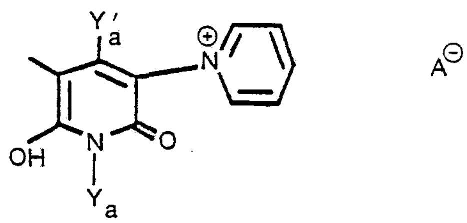

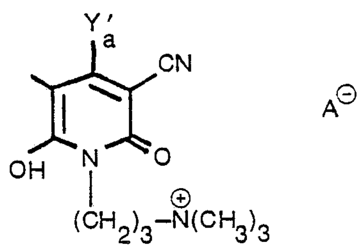

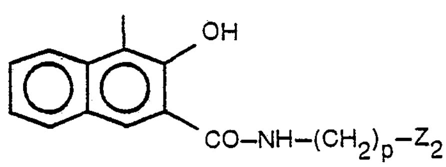

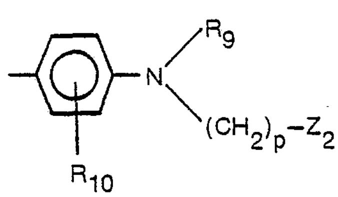

or

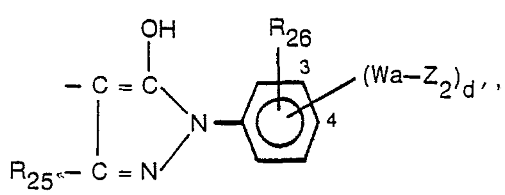

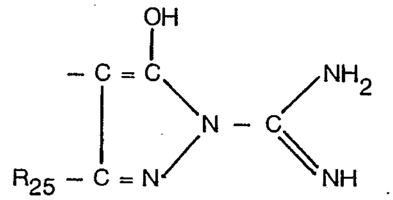

$$R_{124}-CO-\overset{|}{C}H-CO-R_{125}$$

$R_{25}$ is $(C_{1-4})$alkyl, $-COO-(R_{25a})$ or $-COOH$ where $R_{25a}$ is $(C_{1-4})$alkyl;
$R_{26}$ is hydrogen, halogen, $(C_{1-4})$alkyl or $(C_{1-4}$alkoxy;
$R_{124}$ is $(C_{1-4})$alkyl or $-(CH_2)_p-Z_2$;
$Y_a$ is hydrogen, $(C_{1-4})$alkyl, $-C_2H_4OH$ or $(CH_2)_p-Z_2$;
$Y'_a$ is $(C_{1-4})$alkyl, preferably $-CH_3$;
$R_9$ is $(C_{1-4})$alkyl, or $-(CH_2)_p-Z_2$;
$R_{10}$ is hydrogen, $(C_{1-4})$alkyl, $(C_{1-4})$alkoxy, $-NH-CO-CH_3$ or $-NH-CO-NH_2$;
$R_{125}$ is $-(CH_2)_p-Z_2$,

$-NH-(CH_2)_p-Z$ or 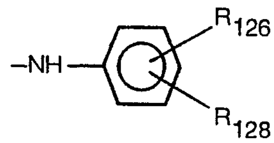

where
$R_{126}$ is hydrogen, $-OH$, $(C_{1-4})$alkoxy,

$-NH-CO-(CH_2)_p-Z_2$, $-CO-NH-(CH_2)_p-Z_2$, $-SO_2-NH-(CH_2)_p-Z_2$, $-(CH_2)_p-Z_2$ or

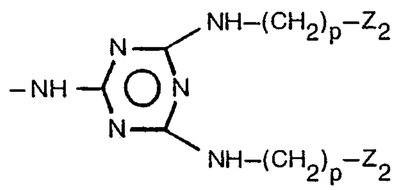

and
$R_{128}$ is hydrogen or $-(CH_2)_p-Z_2$;
$Z_2$ is a group of the formula

$$-NH_2,\ -\overset{\oplus}{N}(R_o)_2,\ -N(R_o)_3\ A^{\ominus},\ -\overset{\oplus}{N}(CH_3)_2-(CH_2)_pNH_2,$$

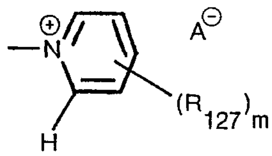 $A^{\ominus}$ or $-\overset{\oplus}{N}(CH_3)_2-(CH_2)_p-N(CH_3)_2\ A^{\ominus}$

where each $R_o$ independently is methyl, ethyl, $\beta$-hydroxyethyl, benzyl,

$-CH_2COCH_3$ or 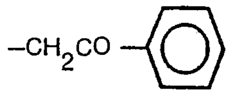

provided that not more than one benzyl,

$-CH_2COCH_3$ or 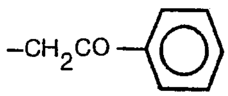

is attached to a nitrogen atom,

$R_{127}$ is methyl or ethyl,

m is 0, 1 or 2

and

$A^{\ominus}$ is a non-chromophoric anion

with the proviso that

i) each of the azo bridges in ring B is ortho to $A_1$ or $A_2$ above;

ii) when c is 2, X′ is attached to $R''_{ta}$ when $R''_{ta}$ is the group $\alpha\alpha$ or to ring C;

iii) when d′ is 1 ring C can be substituted by one or more of halogen, hydroxy, $(C_{1-4})$alkyl, $(C_{1-4})$alkoxy and —NH—CO—$NH_2$.

Preferably when the compounds of the invention are in 1:1 metal complex form Me is copper, chromium, cobalt, iron, nickel or manganese, more preferably copper, chromium or cobalt, most preferably copper. Preferably copper is $Cu^{2+}$; chromium is $Cr^{2+}$; cobalt is $Co^{2+}$; iron is $Fe^{2+}$; nickel is $Ni^{2+}$ and manganese is $Mn^{2+}$.

Preferably when the compounds of the invention are in 1:2 metal complex form, Me is chromium, cobalt, iron or nickel, more preferably chromium, cobalt or iron, most preferably iron. Preferably chromium is $Cr^{3+}$; cobalt is $Co^{3+}$, iron is $Fe^{3+}$ and nickel is $Ni^{3+}$.

Preferably the compounds of the invention when in 1:2 metal complex form and/or in metal free form when $n = 2$, are symmetric, i.e. both dyestuff molecules bonded to the metal ion are the same.

A group of preferred azo compounds of formula II′ in metal-free form are those of formula IIa

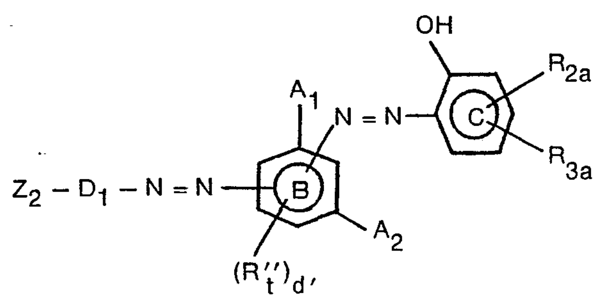

IIa

in which $A_1$ is $-OH$ or $NH_2$,

$R_t''$ is 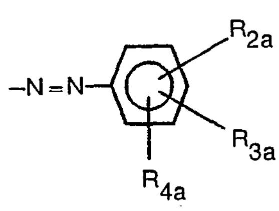

or

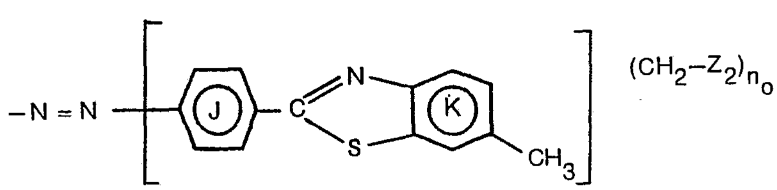 ;

where each $R_{2a}$ independently is hydrogen,

$-NO_2$, $-SO_2NH_2$, $-SO_2-NH-CH_3$, $-SO_2-N(CH_3)_2$,

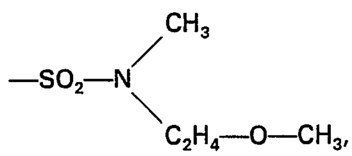

$-SO_2NH-C_2H_4OH$, $-SO_2-N(C_2H_4OH)_2$, $-SO_2-N[C_2H_4-N(CH_3)_2]_2$ or

$-SO_2-NH-(CH_2)_3-Z_2$;

each $R_{3a}$, independently is hydrogen,

$-NO_2$, $-SO_2NH_2$, $-SO_2-NH-CH_3$, $-SO_2-N(CH_3)_2$,

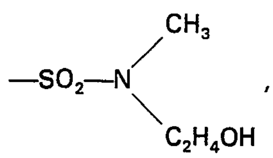

$-SO_2-NH-C_2H_4OH$, $-SO_2-N(C_2H_4OH)_2$, $-NH-CO-(CH_2)_p-Z_2$,

$-CO-NH-(CH_2)_p-Z_2$, $-CH_3$, $-OCH_3$, $-SO_2-NH-(CH_2)_p-Z_2$,

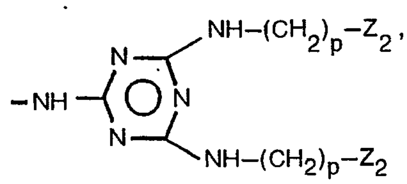

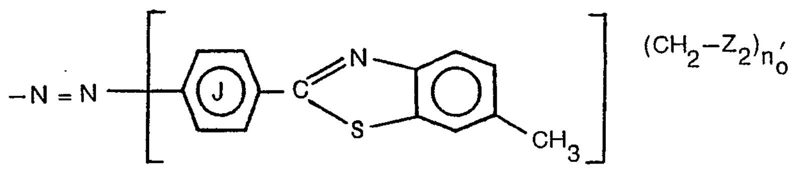

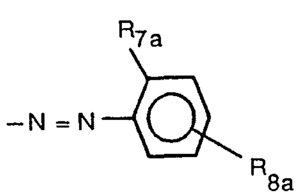

,

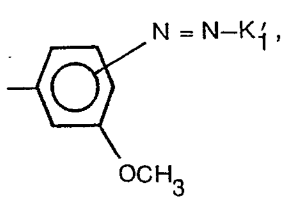

, $-N=N-K_1'$ or $-CH_2-Z_2$,

in which

$R_{7a}$ is hydrogen, $-OH$, $-CH_3$, $-OCH_3$, $-NHCOCH_3$ or $-NHCONH_2$;

$R_{8a}$ is hydrogen, $-NHCO-(CH_2)_p-Z_2$ or

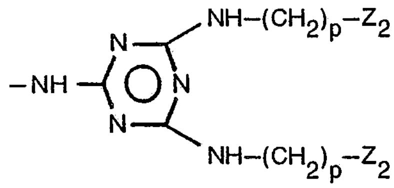

$n'_o$ is an average number between 1.0 and 1.7

$K'_1$ is

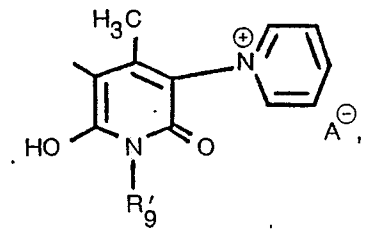

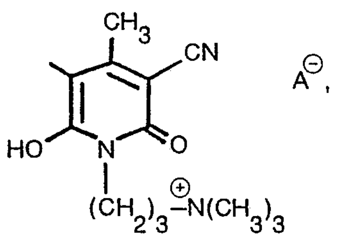 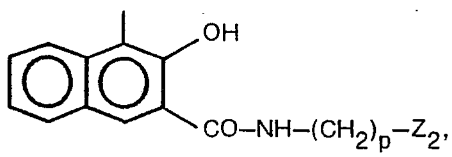

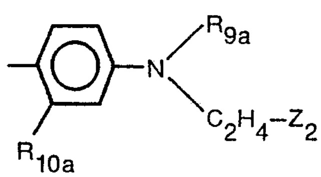 or 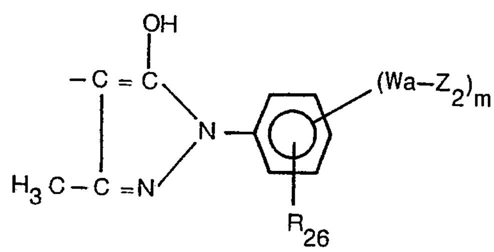

in which

$R_{9a}$ is $-CH_3$ or $C_2H_5$,

$R_{10a}$ is hydrogen, $-CH_3$, $-OCH_3$, $-NH-CO-CH_3$ or $-NH-CO-NH_2$; and

$R'_9$ is hydrogen, $-CH_3$, $-C_2H_5$, n-$C_3H_7$, n-$C_4H_9$, i-$C_3H_7$, i-$C_4H_9$, $-C_2H_4OH$ or $-(CH_2)_p-Z_2$;

$R_{4a}$ is hydrogen, $-NO_2$, $-CH_3$ or $-OCH_3$;

$-D_1-Z_2$ is

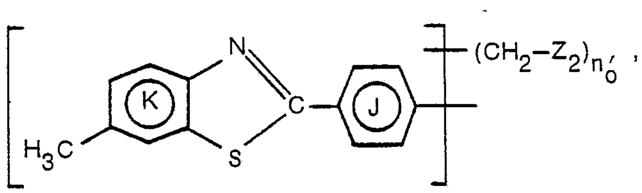 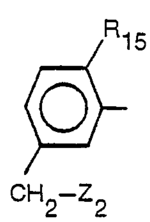 ,

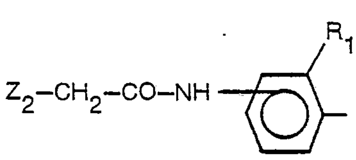 , 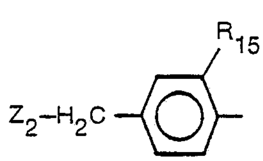 , 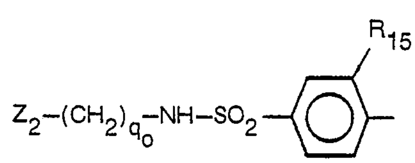 ,

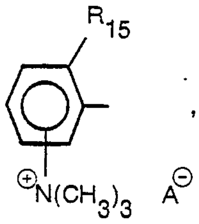
,
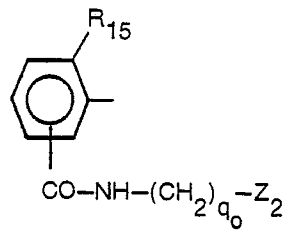
,
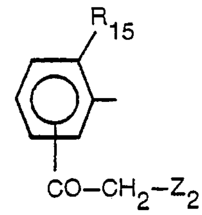
,

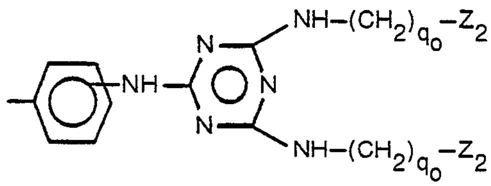
,

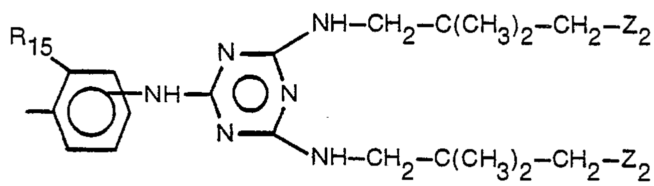
,

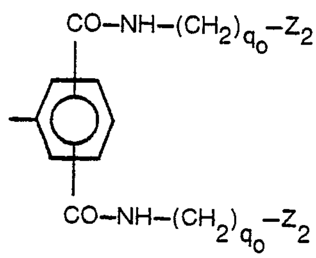
,
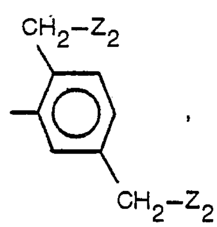
,

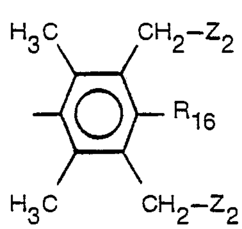
,
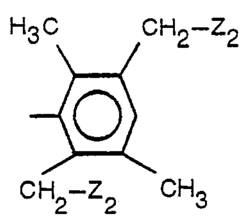
,

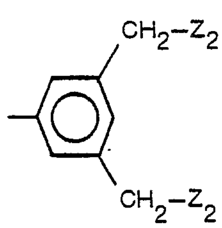
,
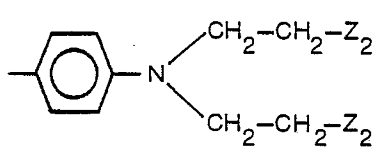
,
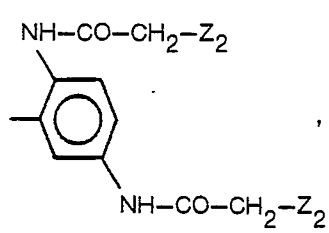
,

or
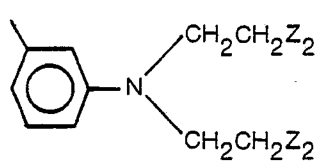

$R_{15}$ is hydrogen, —OH, —$OCH_3$, —$CH_3$ or Cl,
$R_{16}$ is hydrogen or —$CH_3$;
q is 2 to 5, preferably 2 or 3;
and all the other symbols are as defined above.

A further group of preferred metal-free azo compounds of formula II′ are those of formula IIb

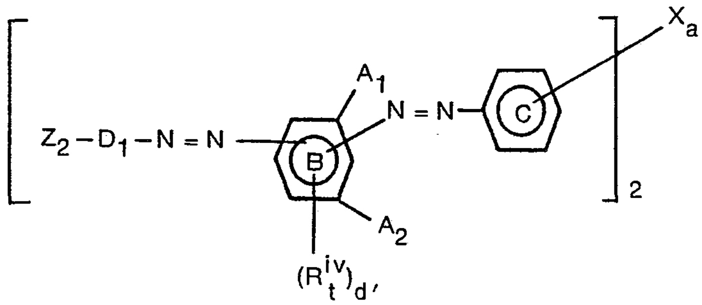

IIb

in which $R_t^{iv}$ is

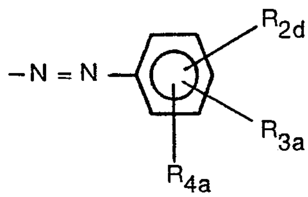

or 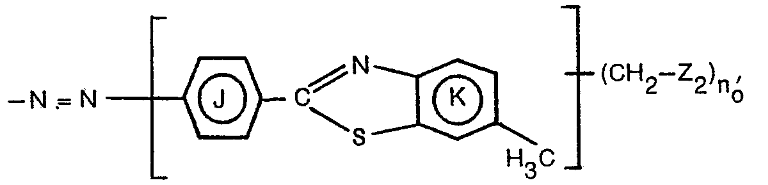 ,

where
$R_{2d}$ is hydrogen, —OH, —$CH_3$ or —$OCH_3$;
and each ring C independently can be substituted in a position ortho to its azo bridge by —$CH_3$ and/or —$OCH_3$ and the group $X_a$ is in a meta- or para-position to the azo bridge of ring C and each azo bridge, in ring B is ortho to $A_1$ or $A_2$ or to both $A_1$ and $A_2$;
$X_a$ is $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ or the following groups $X_2'$—$Ch_2$—, $X_2''$—$(CH_2)_2$, $X_2'''$—$(CH_2)_3$—,

$X_2^{iv}$ $-(CH_2)_4-$, $X_{14}'$ 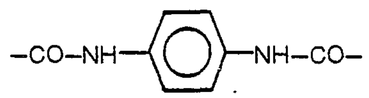

$X_{15}'$ 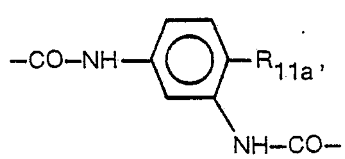 $X_{19}'$ $-NH-CO-CH_2-CH_2-CO-NH-$,

$X_{19}''$ $-NH-CO-(CH_2)_4-CO-NH-$, $X_{19}'''$ 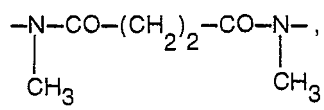

$X'_{20}$ $-NH-CO-CH=CH-CO-NH-$, $X''_{20}$ 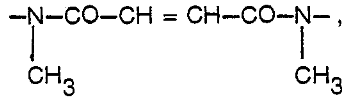

$X'_{21}$ 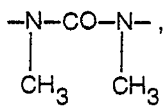 $X'_{32}$ 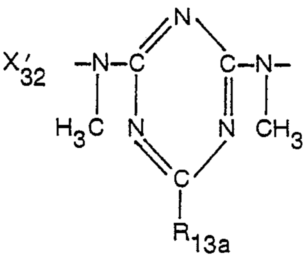

$X''_{32}$ 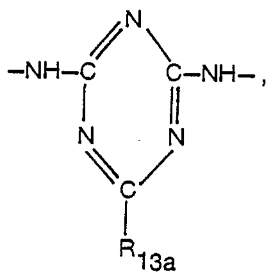 $X'_{34}$ $-CO-NH-(CH_2)_2-NH-CO-$,

$X''_{34}$ $-CO-NH-(CH_2)_3-NH-CO-$, $X'''_{34}$ $-CO-NH-(CH_2)_4-NH-CO-$,

$X^{iv}_{34}$ 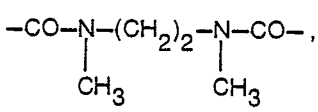 $X^{v}_{34}$ 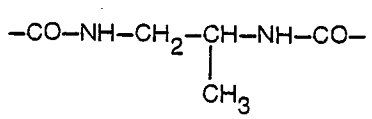

$X^{vi}_{34}$ 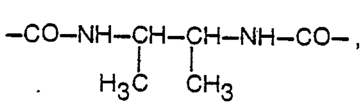

$X''_{14}$ 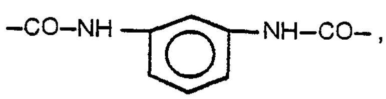

$X''_{15}$ 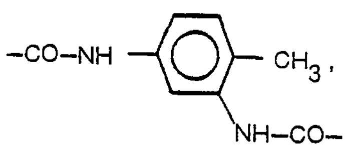

$X'''_{15}$ 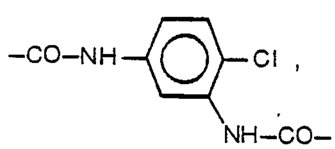

$X^{iv}_{15}$ 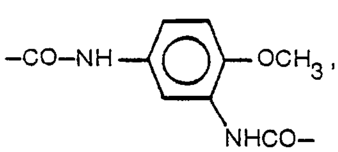

$X_{32}'''$ 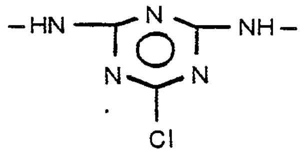 ,

$X_{32}^{iv}$ 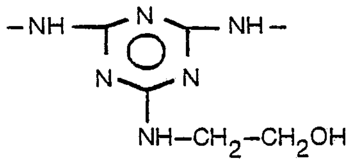 ,

$X_{32}^{v}$ 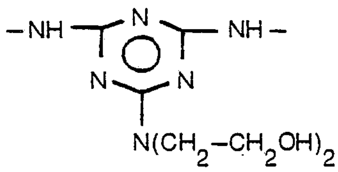 ,

$X_{32}^{vi}$ 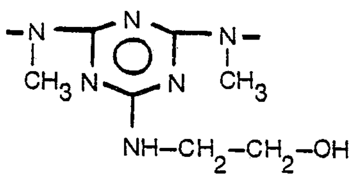 ,

$X_{33}'$ 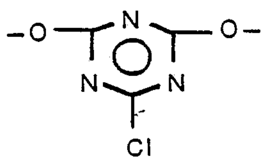 ,

$X_{33}''$ 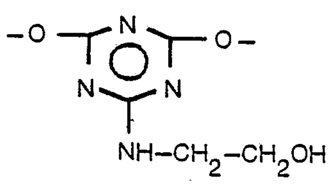 ,

$X_{33}'''$ 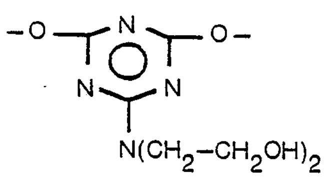 ,

$X_{35}'$ $-CO-NH-(CH_2)_2-O-(CH_2)_2-NH-CO-$ ,

$X_{35}''$ $-CO-NH-(CH_2)_2-O-(CH_2)_2-O-(CH_2)_2-NH-CO-$ ,

$X_{36}'$ $-CO-NH-(CH_2)_2-NH-(CH_2)_2-NH-CO-$ ,

$X''_{36}$ 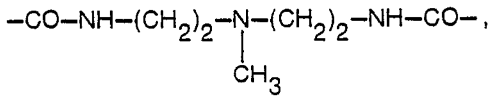

$X'_{48}$ 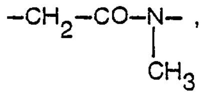

$X'_{50}$ $-O-CH_2-CH_2-O-$ ,

$X''_{50}$ $-O-(CH_2)-O-$ ,

$X'_{51}$ $-CH=CH-CO-NH-$ ,

$X''_{51}$ 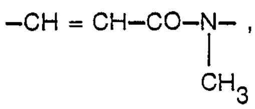

$X'_{52}$ 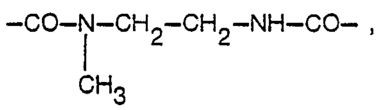

$X'_{53}$ $-CH_2-CH_2-CO-NH-$ ,

$X''_{53}$ 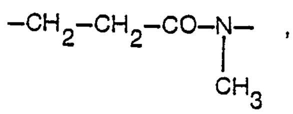

where

$R_{11a}$ is hydrogen, —Cl, —$CH_3$ or —$OCH_3$;

$R_{13a}$ is —Cl, —NH—$CH_2$—$CH_2$—OH or —$N(CH_2—CH_2—OH)_2$; and all the other symbols have been defined above.

Preferred compounds of formula IIb are of the formula IIc

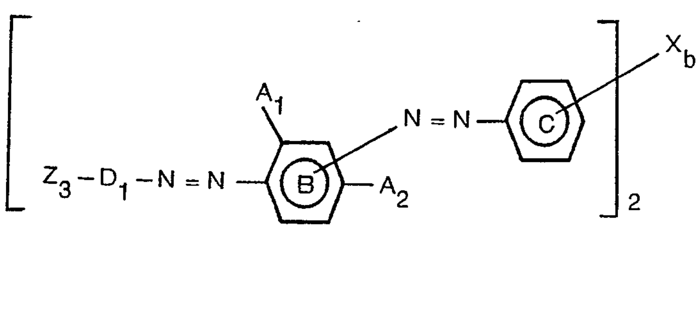

IIc

in which

Xb is $X_1$, $X_{11}$, $X_{12}$, $X_{17}$, $X_{27}$, $X_{49}$, $X_2^{II}$, $X_{14}^{I}$, $X_{19}^{I}$, $X_{19}^{II}$, $X_{19}^{III}$, $X_{20}^{I}$, $X_{20}^{II}$, $X_{32}^{I}$, $X_{34}^{I}$, $X_{34}^{IV}$, $X_{34}^{V}$ or $X_{34}^{VI}$,

$Z_3$ is 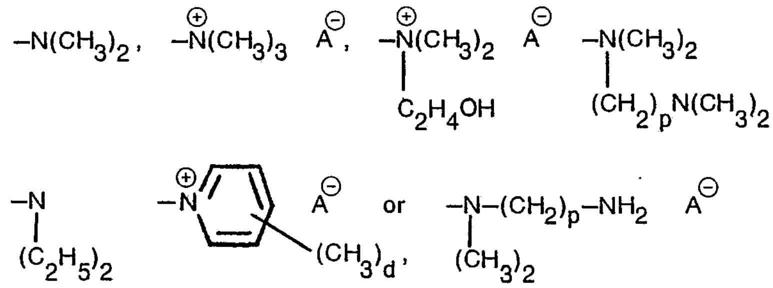

where $-D_1-Z_3$ has the significances of $-D_1-Z_2$ except $Z_2$ is replaced by $Z_3$ with the proviso that in ring C the group $X_b$ is in a meta- or para-position to its azo bridge.

Preferred azo compounds of formula II' when in 1:1 metal complex form and when c =1 are of the formula IId

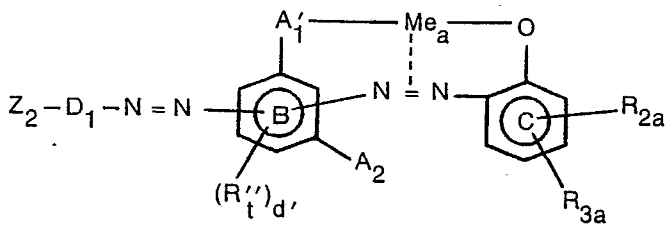
IId

in which $Z_2-D_1$, $R''_t$, $A_2$, $R_{2a}$ and $R_{3a}$ are defined above and $A_1'$ is —NH— or —O— with the proviso that in ring B each azo bridge to the ring C is ortho to $A_1'$ and $Me_a$ is copper, cobalt, iron or chromium.

Preferred compounds of the formula IId are of the formula IIe

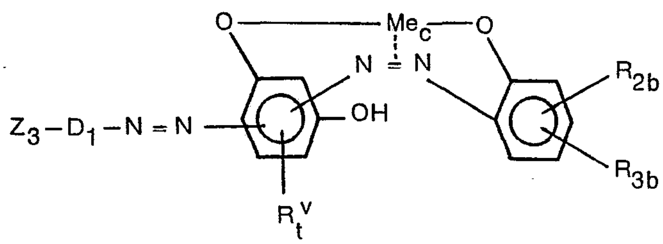
IIe

in which $R_t^V$ is hydrogen,

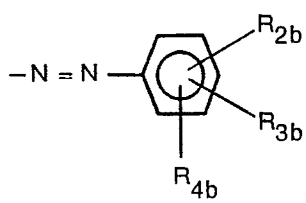

or 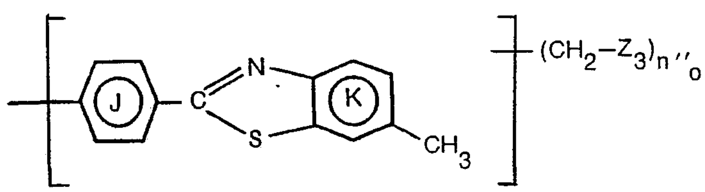

$Me_c$ is copper, cobalt or chromium preferably copper
$R_{2b}$ is hydrogen, $-NO_2$ or $-SO_2-NH_2$,
$R_{3b}$ is hydrogen, $-NO_2$, $-CH_3$, $-OCH_3$, $-SO_2NH_2$,

$-NH-CO-(CH_2)_p-Z_3$, $-CH_2-Z_3$, $-SO_2NH(CH_2)_pZ_3$,

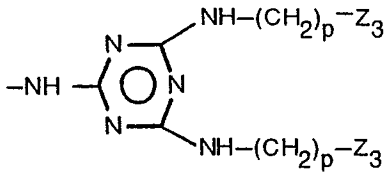

, $-N=N-K'_1$ ,

$-SO_2NHC_2H_4OH$,

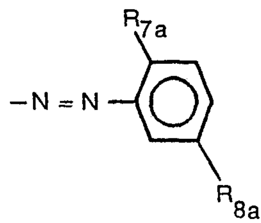

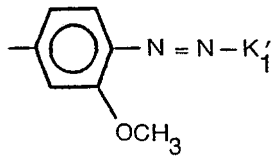

or $-N=N$ 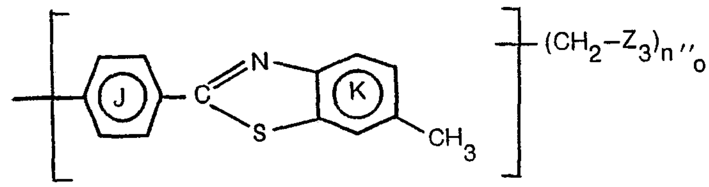

$n''_o$ is from 1.3 to 1.5

$R_{4b}$ is hydrogen or $-NO_2$, and

all the other symbols are as defined above.

Alternatively preferred compounds of formula II' in 1:1 metal complex form where c = 2 are of the formula IIf

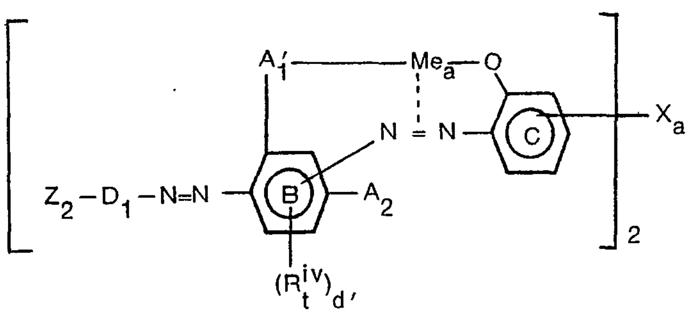

IIf

in which the symbols are above defined and the group Xa is attached to each ring C in the meta- or para-position with respect to the azo bridge and the rings C carry no further substituents.

Preferred compounds of formula IIf are of the formula IIg

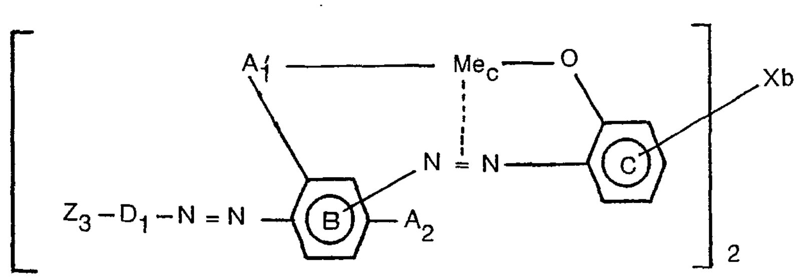

IIg

in which the symbols are as above defined, and with the proviso that Xb is in a meta- or para-position to the azo bridge.

A further group of preferred compounds of formula II' in 1:1 metal complex form are of formula IIh

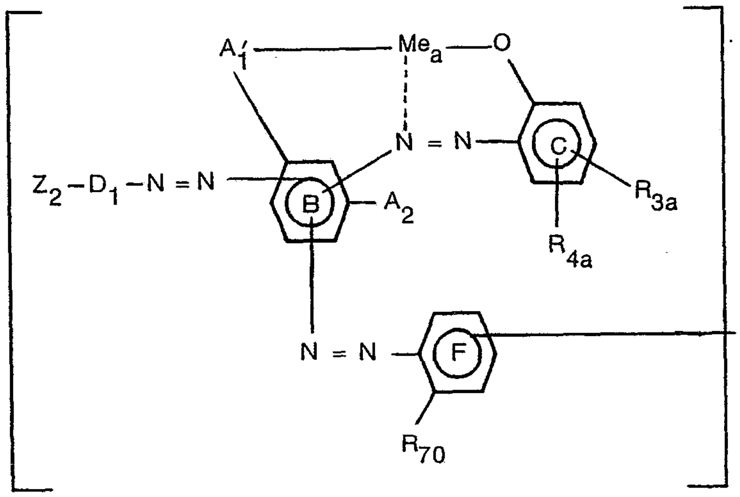

IIh

in which

$D_1$—$Z_2$, $A_1'$, $R_{3a}$, $R_{4a}$, $Me_a$ and Xa are above defined;

$R_{70}$ is hydrogen, chlorine, methyl or methoxy; and the group Xa is attached in meta- or para-position in ring F to the azo group and each azo bridge in ring B is in ortho position to $A_1'$ or $A_2$ or to both $A_1'$ and $A_2$.

More preferred compounds of formula IIh are of the formula IIi

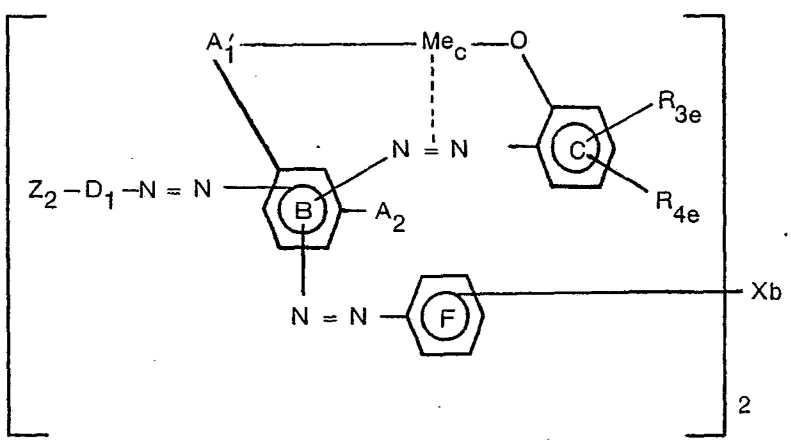

IIi

in which

$R_{3e}$ is hydrogen,

$-CH_3$, $-NO_2$, $-SO_2-NH_2$, $-CH_2-Z_3$,

$-NH-CO-(CH_2)_p-Z_3$, $-OCH_3$, 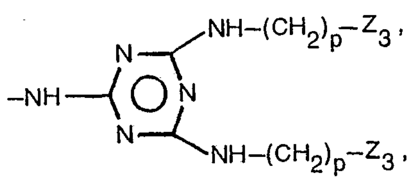

$-N=N-K_1'$, 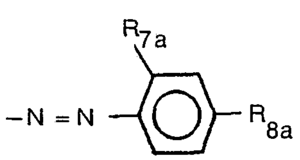 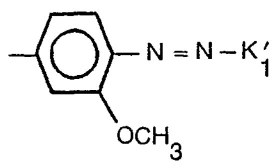

or 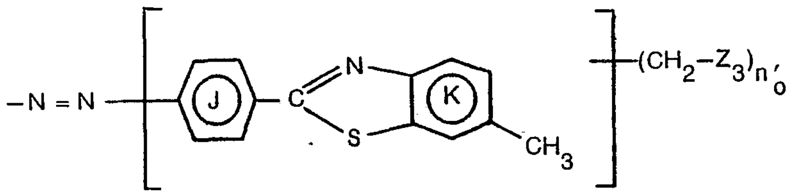

$R_{4e}$ is hydrogen or —$NO_2$ and all the other symbols are as defined above and Xb is attached in the ortho- or meta-position to the azo group.

Preferred 1:2 metal complex azo compounds of formula II′ where c is 1 and are one of the formulae IIj to IIm below:

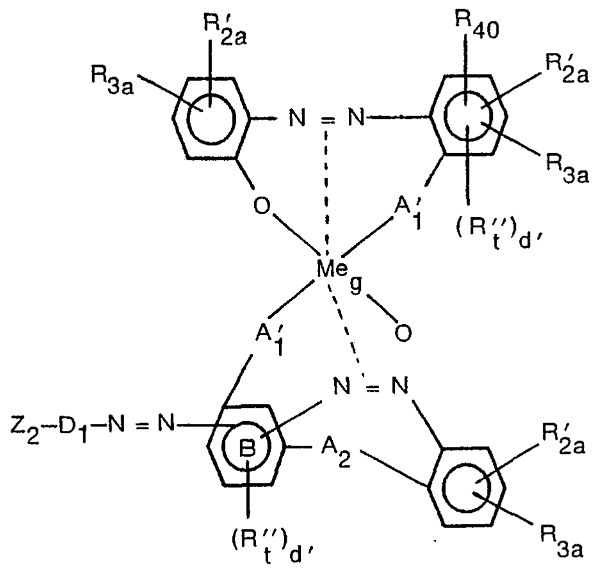

II j

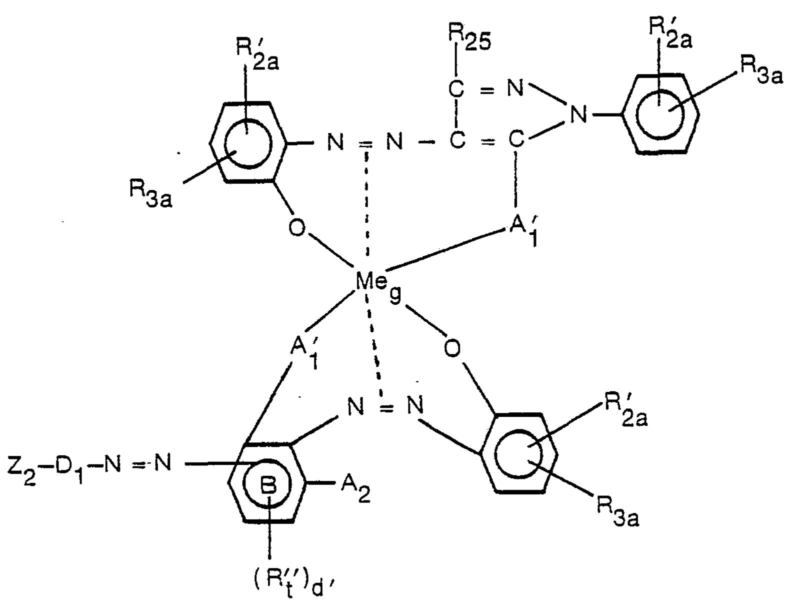

II k

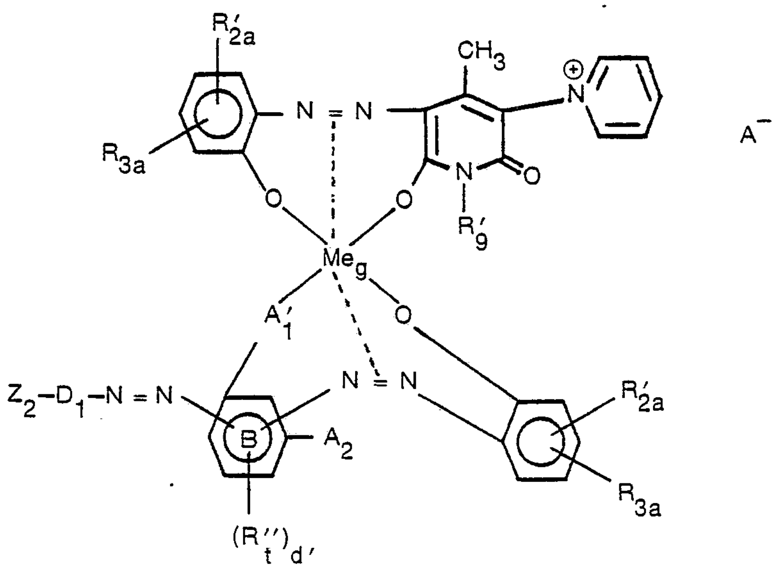

III

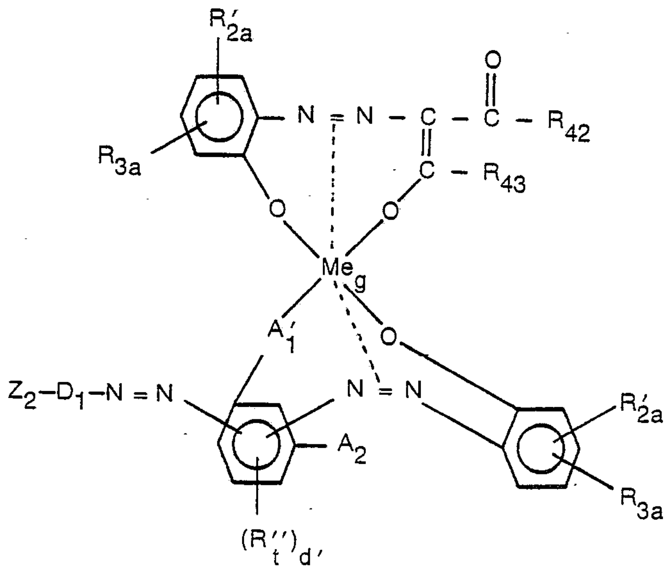

IIm

in which

$R_{40}$ is hydrogen or $Z_2$—$D_1$—N=N—;
$Me_g$ is cobalt, iron or chromium, preferably iron
$R_{42}$ is —$(CH_2)_p$—$Z_2$, —NH—$(CH_2)_p$—$Z_2$ or

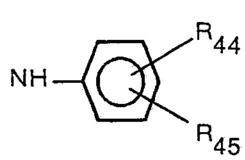

;

$R_{43}$ is —$CH_3$, $C_2H_5$ or $(CH_2)_p$—$Z_2$;
$R_{44}$ is hydrogen, —OH, $(C_{1-4})$alkoxy,

—NH—CO—$(CH_2)_p$—$Z_2$, —CO—NH—$(CH_2)_p$—$Z_2$, —$SO_2$—NH—$(CH_2)_p$—$Z_2$,

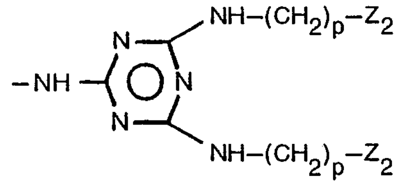

or $—(CH_2)_p—Z_2$;

$R_{45}$ is hydrogen or $—(CH_2)_p—Z_2$;

$R'_{2a}$ has the significances of $R_{2a}$ and may also be —OH or $—NH_2$;

and the other symbols are as defined above.

Preferred compounds of formula IIj are symmetric and are of the formula IIn

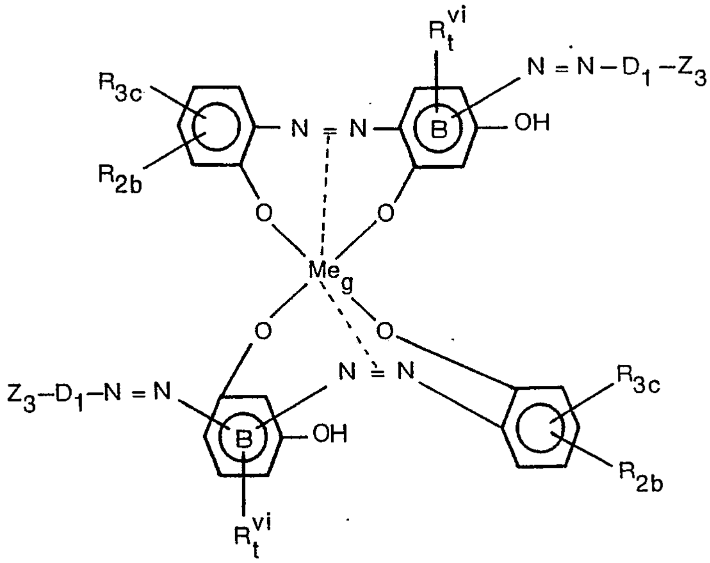

IIn

in which

$R_{3c}$ is hydrogen, $—NO_2$, $—CH_3$, $—OCH_3$,

$—SO_2—NH_2$, $—SO_2NH(CH_2)_3N(CH_3)_2$, $—SO_2NHC_2H_4OH$,

$—NH—CO—(CH_2)_p—Z_3$, $—CH_2—Z_3$, $—N{=}N—K'_1$,

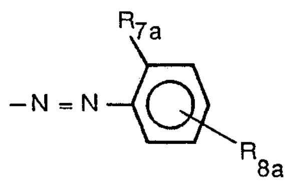

or

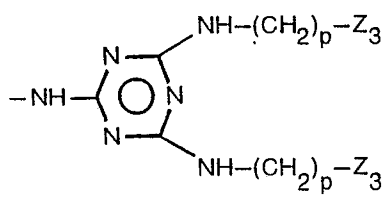

;

$—SO_2NH(CH_2)_pN(CH_3)_2$

and $R_t^{vi}$ is hydrogen and,

where the group $Z_3—D_1—N{=}N—$ has the significance

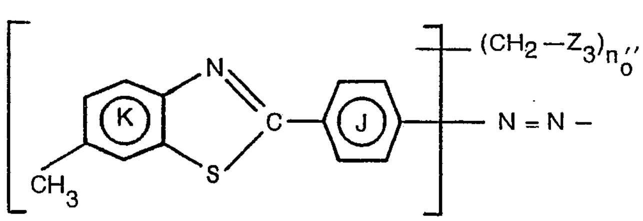

then $R_t^{vi}$ has the additional significance of

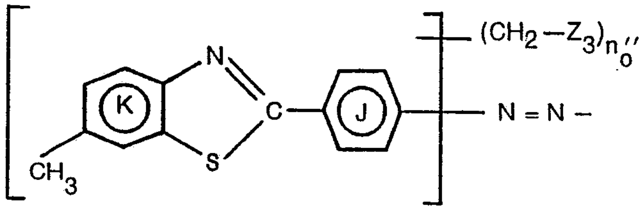

and the other symbols are defined above, and where the azo bridges in ring B are ortho to the —O— or —OH group.

The azo compounds of the invention in metal-free form may be prepared by coupling a diazotised amine of formula γ

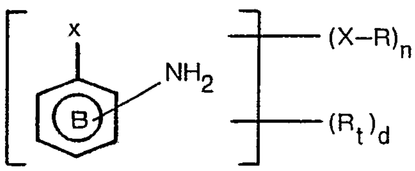

γ

with a coupling component of the formula

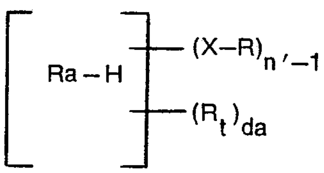

δ

where

$R_a$ is a group of formula Ia

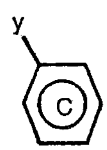

Ia

x is —OH or —$NH_2$ and y is —OH or x and y form the group —NH—Me—O—, —O—Me—O— or —NH—Me—NH—

n is 1 or 2;

d is 0, 1 or 2;

n′ and da have the significances of n and d respectively above with the proviso that n + n′ is not greater than 2 and d + da is not greater than 2,

$R_t$ is $R''_{ta}$ defined above

R is a group of formula Ih

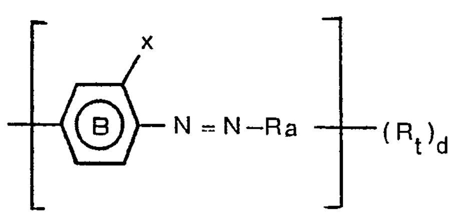

Ih

where

x, Ra, $R_t$ and d are defined above

X is a direct bond or X′ defined above; and in the case of the metal complexes metallising with a metal capable of forming a 1:1 or 1:2 metal complex or capable of forming both a 1:1 and 1:2 metal complex. For example the azo compounds of formula II′ in metal-free form can be formed by diazotising a corresponding arylamine and coupling with the requisite coupling component by conventional methods.

The azo compounds of formula II′ in 1:1 metal complex form may be prepared by metallising compounds of formula II′ in metal-free form with a metal selected from copper, cobalt, iron, nickel, manganese, chromium or zinc.

The azo compounds of formula II′ in 1:2 metal complex form may be prepared by metallising compounds of formula II′ in metal free form with a metal selected from chromium, nickel, cobalt or iron.

A further method for the preparation of an azo compound of formula II′ in 1:2 metal complex form is bonding an azo compound of formula II′ in metal free form with an azo compound 1:1 metal complex form when the metal is chromium, nickel, cobalt or iron.

The metallisation process to form a 1:1 metal complex is advantageously carried out by treating 1 mole of azo compounds with a metallising agent containing 1 equivalent of metal.

Metallisation is carried out by known methods advantageously in aqueous medium or a mixture of water and a water-miscible organic solvent for example acetone, lower alkyl alcohols, dimethylformamide, formamide, glycols or acetic acid at a pH range from 1.0 to 8.0, preferably pH 2 to 7. The metallisation process may be carried out at a temperature from room temperature to the boiling point of the reaction medium.

Alternatively metallisation may be effected in a wholly organic medium (for example dimethylformamide). Advantageously for instance cobaltisation may be carried out in the presence of an inorganic nitrite such as lithium, sodium, ammonium or potassium nitrite in the ratio of 2 to 6 moles of nitrite per gram atom of cobalt.

Suitable cobalt-yielding compounds are for example cobalt (II) or Co (III) sulphate, acetate, formate or chloride.

Copper-yielding compounds are for example cupric sulphate, cupric formate, cupric acetate or cupric chloride.

The nickel-yielding compounds are Ni (II) or Ni (III) compounds, such as nickel formate, nickel acetate or nickel sulphate.

Preferred manganese yielding compounds are Mn (II) compounds and iron yielding compounds are Fe (II) or Fe (III) compounds. Examples of these and zinc-yielding compounds are manganese-, iron- or zinc formate, acetate or sulphate.

Preferred chromium yielding compounds are Cr (II) or Cr (III) formate, acetate or sulphate.

The starting compounds of formula $\gamma$ and $\delta$ are for the most part known or can be prepared according to known methods.

The coupling can be carried out according to known methods. Advantageously coupling is carried out in aqueous, acid, neutral or alkali medium at a temperature from −10°C to room temperature, if necessary in the presence of a coupling accelerator such as pyridine or urea. Alternatively, coupling may be effected in a mixture of solvents for example water and an organic solvent.

In the compounds of the invention the anion $A^{\ominus}$ can be any non-chromophoric anion conventional in basic dyestuff chemistry. Suitable anions include such as chloride and bromide, sulphate, bisulphate, methylsulphate, aminosulphonate, perchlorate, benzosulphonate, oxalate, maleinate, acetate, propionate, lactate, succinate, tartrate, malate, methanesulphonate and benzoate, as well as complex anions for example zinc chloride double salts and anions of boric acid, citric acid, glycollic acid, diglycollic acid and adipic acid or of addition products of orthoboric acid with polyalcohols with at least an cis diol group present. These anions can be exchanged for each other by ion exchange resins or by reaction with acids or salts (for example via the hydroxide or bicarbonate or according to DE—A—2 001 748 or 2 001 816).

The compounds according to the invention are suitably worked up into a solid or liquid preparation for example by granulation or by dissolving in a suitable solvent. The compounds of the invention are suitable for dyeing, padding or printing on fibres, threads or textile materials particularly natural or regenerated cellulose materials for example cotton, synthetic polyamides or synthetic polyesters in which the acid groups have been modified. Such polyamide is described in BE—A—706,104 and such synthetic polyester is described in US—A—3 379 723.

The new compounds are also used for dyeing, pad-dyeing or printing fibres, threads or textiles produced therefrom, which consist of or contain homo- or mixed polymers of acrylonitrile or of asymmetrical dicyanoethylene.

The textile material is dyed, printed or pad-dyed in accordance with known methods. Acid modified-polyamide is dyed particularly advantageously in an aqueous, neutral or acid medium, at temperatures of 60°C to boiling point or at temperatures of above 100°C under pressure.

The textile material may also be dyed by the compounds of formula II′ in organic solvents, e.g. in accordance with the directions given in DE—A—2 437 549.

Cellulose material is mainly dyed by the exhaust process, e.g. from a long or short bath, at room temperature to boiling temperature, optionally under pressure, whereby the ratio of the bath is from 1:1 to 1:100, and preferably from 1:20 to 1:50. If dyeing is effected from a short bath, then the liquor ratio is 1:5 to 1:15, and the pH value of the dye baths varies between 3 and 10. Dyeing preferably takes place in the presence of electrolytes.

Printing may be effected by impregnation with a printing paste produced by known methods.

The dyestuffs are also suitable for dyeing or printing paper, e.g. for the production of bulk-dyed,

sized and unsized paper. The dyestuffs may similarly be used for dyeing paper by the dipping process. The dyeing of paper is effected by known methods.

The new dyestuffs are also suitable for dyeing or printing leather by known methods. Dyeings with good fastness are obtained both on paper and on leather.

Dyeings made from the new compounds on leather have good light fastness properties, good diffusion properties with PVC, good water-, wash- and sweat properties, good fastness to dry cleaning, good fastness to drops of water, good fastness to hard water.

Dyeings made from the new compounds on paper have good build-up, good light fastness, good fastness to water, milk, fruit juice, sweetened mineral water and alcoholic drinks, good fastness to 1% sodium chloride, washing powder solution, good sulphite reductive or oxidative (with hypochlorite) clearance and good fastness to hard water. Dyeings made from mixtures of the new dyestuffs remain tone-in-tone and the nuance stability of dyeings made from the dyestuffs is good.

Further the dyestuffs of the invention do not run after dyeing on paper nor on the whole are they pH sensitive.

The new compounds may be converted into dyeing preparations. The processing into stable, liquid or solid dyeing preparations may take place in a generally known manner. Advantageously by grinding or granulating, or by dissolving in suitable solvents, optionally adding an assistant, e.g. a stabiliser or dissolving intermediary, such as urea. Such preparations may be obtained for example as described in FR—A—1.572.030 and 1.581.900 or in accordance with DE—A—2.001.748 and 2.001.816.

Liquid preparations or the compounds of formula II′ preferably comprise 10—30% by weight of a compound of formula II′ and to 30% of a solubilising agent such as urea, lactic acid or acetic acid the rest of the composition being water. Solid preparations preferably comprising 20—80% dyestuff, 80—20% solubilising agent such as urea or $Na_2SO_4$ and 2—5% water.

In the following examples all parts and percentages given are by weight and the temperatures given are in degrees centrigrade unless indicated to the contrary.

Example 1

a) 15.4 Parts (1/10 mole of 1-hydroxy-2-amino-4-nitrobenzol are coupled with 11 parts of resorcinol to give a compound of the formula VIa

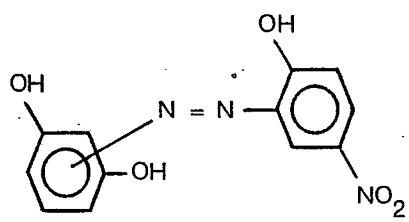

VIa

b) 24 Parts (1/10 mole) of 2(4′-aminophenyl)-6-methylbenzthiazole was chloromethylated according to the method of DE—A—1 965 993 and then quaternised with 50 parts of a solution of trimethylamine in water at 40—45°. The resulting trimethylammonium compound is dissolved at 0—10° in dilute hydrochloric acid solution and is diazotised with 6.9 parts of sodium nitrite and the dyestuff suspension of the compound of formula VIa is dropwise added. A compound of the formula VIb

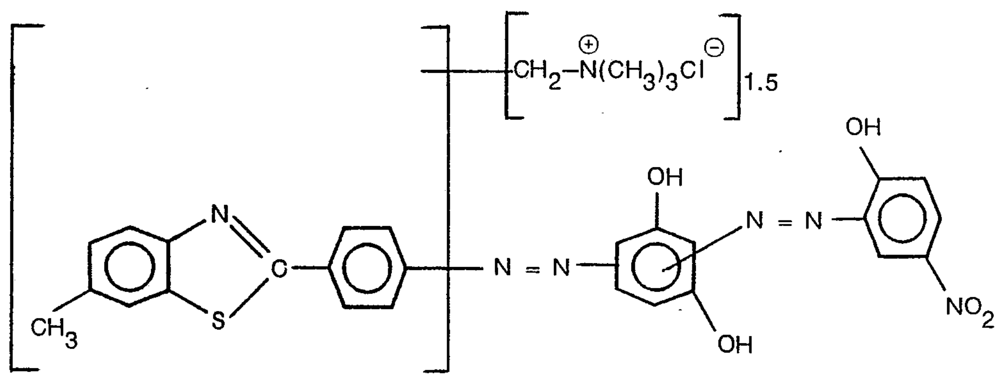

VI b

c) 15.4 Parts (1/10 mole) of the dyestuff of formula b) is dissolved in 500 parts formamide. The solution is warmed to 60° to give a solution of 35 parts sodium acetate and 35 parts of $KCr(SO_4)_2$ $12H_2O$ is added and the temperature is raised to 90—95°. After about 60 minutes metallisation is

ended. The reaction mixture is cooled to 20° and is precipitated in acetone to give a 1:2 chromium complex of the formula VIc

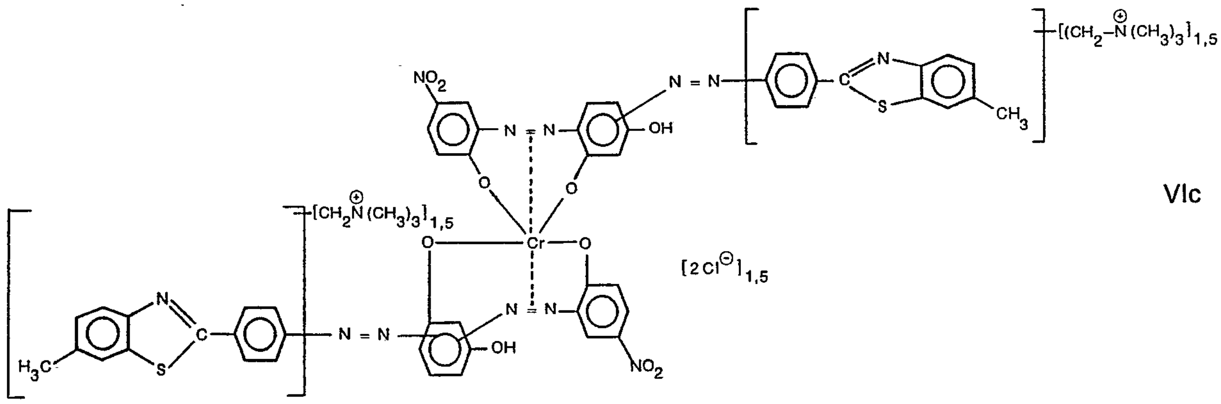

VIc

In the following Examples

Za is $-\overset{\oplus}{N}(CH_3)_3$ $A^{\ominus}$

Zb is $-\overset{\oplus}{N}(C_2H_5)_3$ $A^{\ominus}$

Zc is 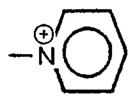 $A^{\ominus}$

Zd is 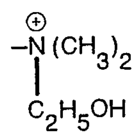 $A^{\ominus}$

Ze is 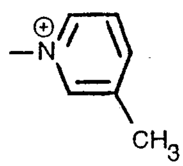 $A^{\ominus}$ ;

Zf is 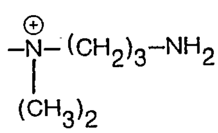 $A^{\ominus}$ ;

Zg is 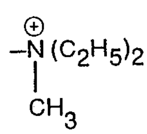 $A^{\ominus}$ ;

R300 is 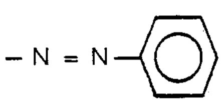 ;

R301 is 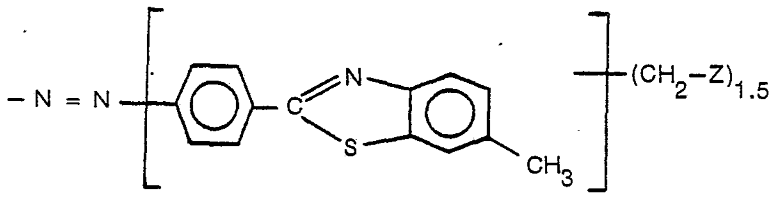 ;

R302 is 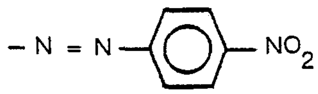 ;

R303 is 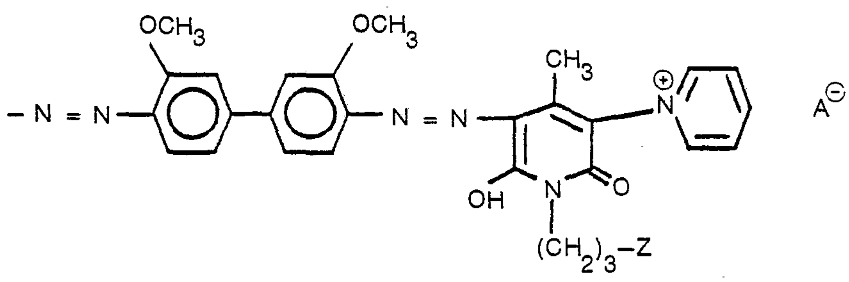 ;

R304 is 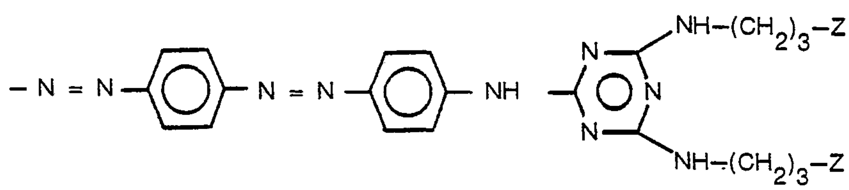 ;

R305 is 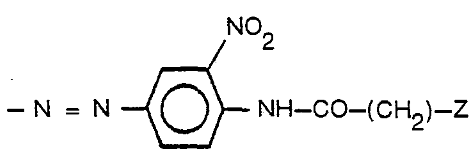 ;

R306 is 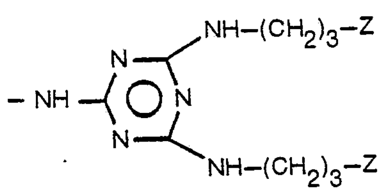 ;

R307 is 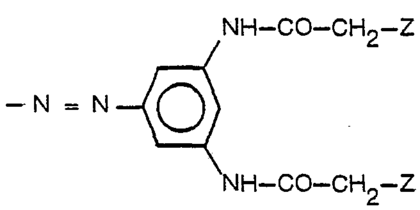 ;

R308 is 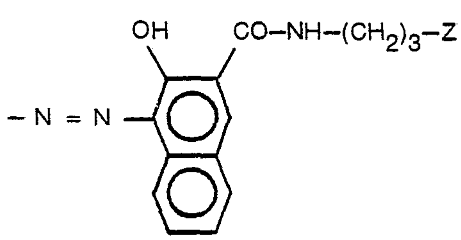 ;

R309 is 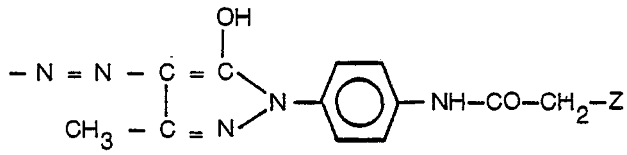 ;

R310 is 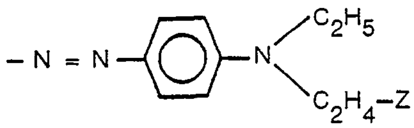 ;

R311 is 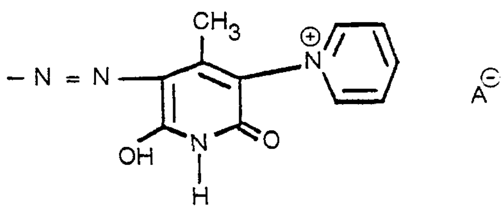 ;

R312 is $-NH-CO-(CH_2)-Z$

R313 is $-SO_2-NH-(CH_2)_3-Z$

R314 is 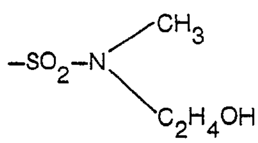

Examples 2 to 11

The following Examples are compounds of the formula

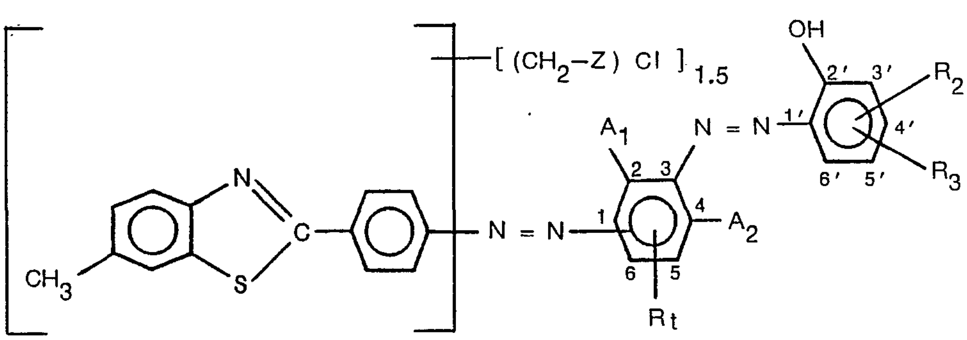

or in 1:1 metal complex or 1:2 metal complex form. These compounds can be prepared according to the method of Example 1 with suitable choice of starting materials. Each Z referred to in a specific Example has the same significance in that Example whenever it appears.

| Ex. No. | Rt | $R_3$ | Position of $R_3$ | $R_2$ | Position of $R_2$ | Z | $A_1$ | $A_2$ | Metal complex |
|---|---|---|---|---|---|---|---|---|---|
| 2 | H | $NO_2$ | 3′– | $NO_2$ | 5′– | Zb | OH | OH | – |
| 3 | R300 | R306 | 5′– | H | – | Za | $NH_2$ | $NH_2$ | 1:1 Cu |
| 4 | R301 | R301 | 5′– | H | 4′– | Zd | $NH_2$ | OH | 1:2 Co |
| 5 | R302 | R308 | 5′– | H | – | Ze | OH | $NH_2$ | – |
| 6 | R303 | R309 | 5′– | H | – | Zf | OH | OH | 1:1 Cu |
| 7 | R304 | R310 | 4′– | H | 5′– | Zg | OH | OH | 1:2 Fe |
| 8 | R305 | R311 | 3′– | $SO_2NH_2$ | 5′– | Zb | OH | $NH_2$ | – |
| 9 | R300 | R312 | 3′– | R314 | 5′– | Za | $NH_2$ | OH | 1:1 Cu |
| 10 | H | H | 5′– | $SO_2N(CH_3)_2$ | 5′– | Zd | OH | OH | – |

Examples 11—37

The following Examples are of compounds of the formula

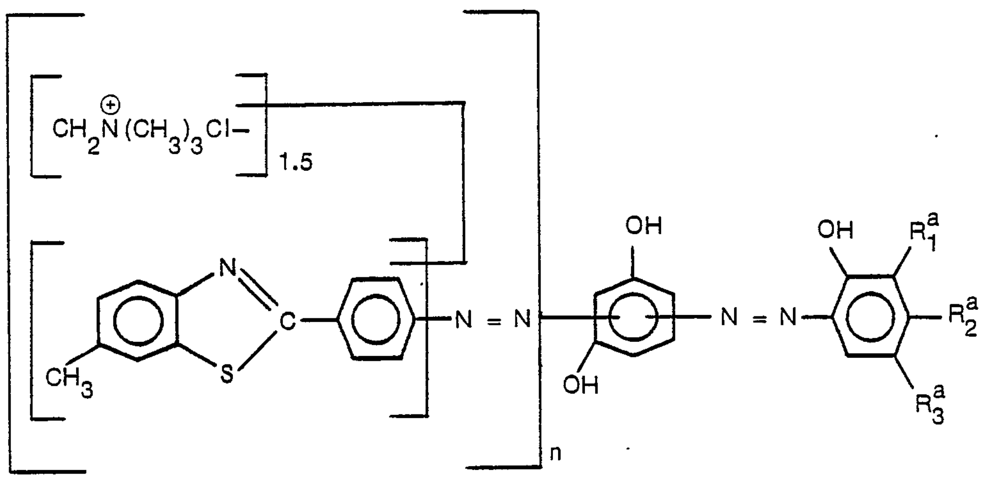

and in 1:1 metal complex and 1:2 metal complex form and may be prepared according to the method of Example 1.

| Example No. | n | $R_1^a$ | $R_2^a$ | $R_3^a$ | Metal complex |
|---|---|---|---|---|---|
| 11 | 1 | H | $NO_2$ | H | – |
| 12 | 1 | H | $NO_2$ | H | 1:1 Cu |
| 13 | 1 | H | $NO_2$ | H | 1:2 Cr |
| 14 | 1 | H | $NO_2$ | H | 1:2 Co |
| 15 | 1 | H | H | $NO_2$ | 1:1 Cu |
| 16 | 1 | H | H | $SO_2NH_2$ | – |
| 17 | 1 | H | H | H | – |
| 18 | 1 | H | H | H | 1:1 Cu |
| 19 | 1 | H | H | H | 1:2 Cr |
| 20 | 1 | $NO_2$ | H | $NO_2$ | – |
| 21 | 1 | $NO_2$ | H | $NO_2$ | 1:1 Cu |
| 22 | 1 | $NO_2$ | H | $NO_2$ | 1:2 Cr |
| 23 | 1 | H | H | $SO_2NH_2$ | 1:1 Cu |
| 24 | 1 | H | H | $SO_2NH_2$ | 1:2 Cr |
| 25 | 1 | H | H | $SO_2NH_2$ | 1:2 Co |
| 26 | 2 | H | $NO_2$ | H | 1:1 Cu |
| 27 | 2 | H | $NO_2$ | H | 1:2 Fe |
| 28 | 2 | H | H | $NO_2$ | – |
| 29 | 2 | $NO_2$ | H | $NO_2$ | 1:1 Cu |
| 30 | 2 | $NO_2$ | H | $NO_2$ | 1:2 Cr |
| 31 | 2 | $NO_2$ | H | $NO_2$ | 1:2 Co |
| 32 | 2 | $NO_2$ | H | $NO_2$ | 1:2 Fe |
| 33 | 1 | H | H | $-SO_2N(H)-(CH_2)_3N(CH_3)_2$ | – |
| 34 | 1 | H | H | do. | 1:1 Cu |
| 35 | 1 | H | H | do. | 1:2 Co |
| 36 | 1 | H | H | $-SO_2N(H)-(CH_2)_2OH$ | – |
| 37 | 1 | H | H | do. | 1:1 Cu |

The dyes of Examples 1 to 37 dye leather and paper in orange, brown, red brown, yellow brown or red shades with good fastness properties.

**Claims**

1. A sulpho-free azo compound, in 1:1 metal complex or 1:2 metal complex form having on average at least 1.3 water-solubilising basic groups, of the formula II

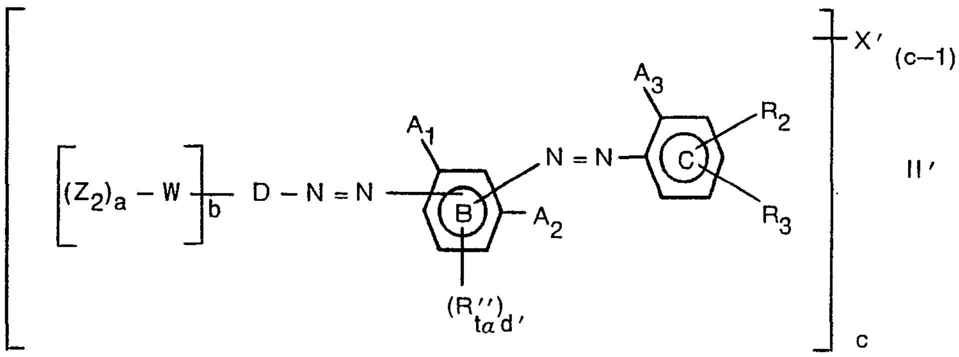

II'

where

c is 1 or 2;

d' is 0 or 1;

$A_1$ and $A_3$ form the group —NH—Me—O— or —O—Me—O— or —NH—Me—NH— where Me is either a metal capable of either forming a 1:1 metal complex or a 1:2 metal complex or capable of forming both a 1:1 metal complex and a 1:2 metal complex;

$A_2$ is —OH or —$NH_2$;

D is a usual diazo component;

W is a direct bond or Wa where Wa is

$$—(CH_2)_s—,\ —NHCO(\overset{*}{C}H_2)_s—,\ —CONH—(\overset{*}{C}H_2)_s—\ \text{or}\ —SO_2—NH—(\overset{*}{C}H_2)_s—,$$

in which the starred C-atom is attached to the N-atom of the group $Z_2$ defined below and s is 1, 2, 3, 4, 5 or 6;

X' is one of the groups $X_1$ to $X_{53}$ below:

$X_1$ is a direct bond,

$X_2$ a straight or branched chain alkylene group of $(C_{1-4})$ carbon atoms,

$X_3$ –CO–

$X_4$ $-NH-\overset{\overset{S}{\|}}{C}-NH-$, $X_5$ –S–, $X_6$ –O–, $X_7$ –CH=CH–, $X_8$ –S–S–,

$X_9$ $-SO_2-$, $X_{10}$ –NH–, $X_{11}$ –NH–CO–, $X_{12}$ $-\underset{\underset{CH_3}{|}}{N}-CO-$, $X_{13}$ 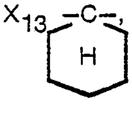

$X_{14}$ 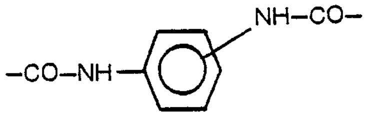 , $X_{15}$ 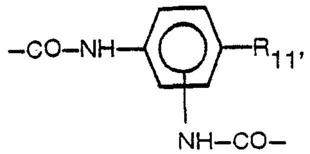

$X_{16}$ 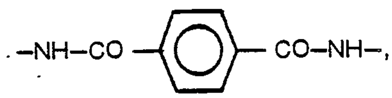, $X_{17}$ $-SO_2-NH-$, $X_{18}$ 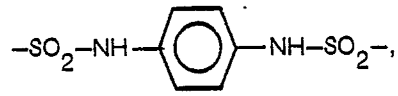

$X_{19}$ 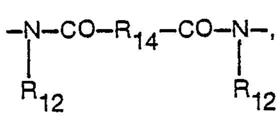 $X_{20}$ 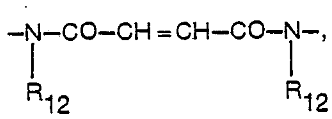 $X_{21}$ 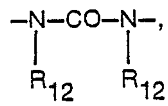

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 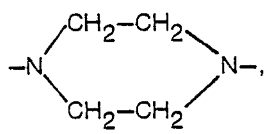

$X_{26}$ 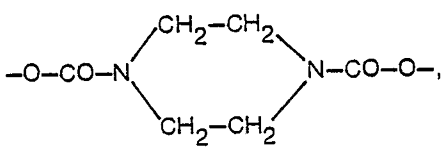 $X_{27}$ 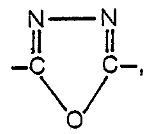 $X_{28}$ 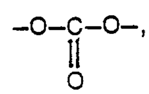

$X_{29}$ 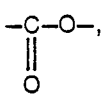 $X_{30}$ 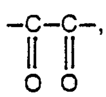 $X_{31}$ $-O-(CH_2)_q-O-$, $X_{32}$ 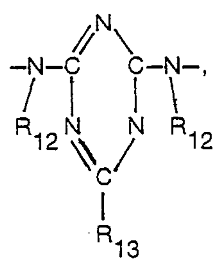

$X_{33}$ 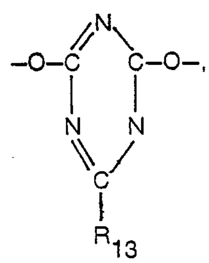 $X_{34}$ 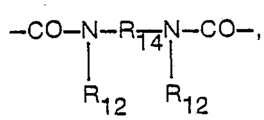

$X_{35}$ 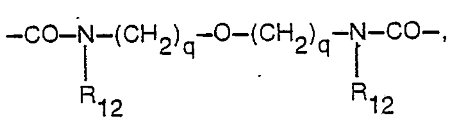

$X_{36}$ 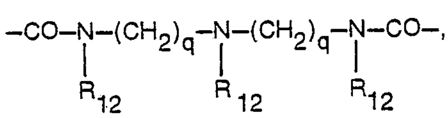

$X_{37}$ 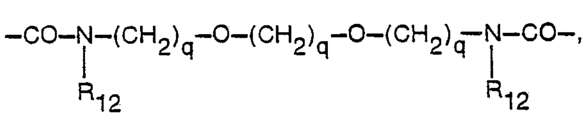 $X_{38}$ 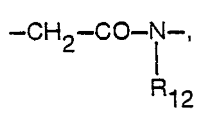

$X_{39}$ 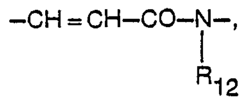 $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-CS-NH-CH_2-$, $X_{47}$ 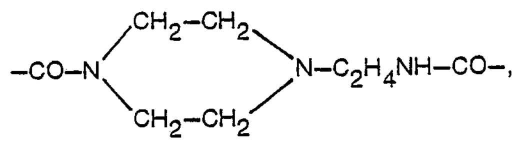

$X_{48}$ 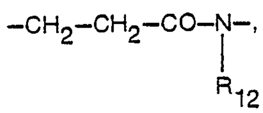

$X_{49}$ $-NH-CO-NH-$,

$X_{50}$ $-O-(CH_2)_q-O-$,

$X_{51}$ 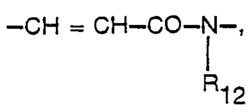

$X_{52}$ 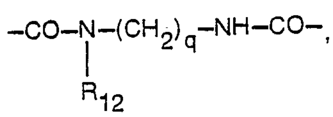

$X_{53}$ 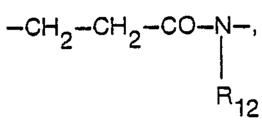

where

$R_{11}$ is halogen, $(C_{1-4})$alkyl or $(C_{1-4})$alkoxy
$R_{12}$ is hydrogen or $(C_{1-4})$alkyl;
$R_{13}$ is halogen, $-NH-CH_2-CH_2-OH$ or $-N(CH_2-CH_2OH)_2$;
$R_{14}$ is a straight or branched chain $(C_{1-4})$alkylene group and q is 1, 2, 3 or 4;
a is 1 or 2;
b is a number between 1 and 2;
$R_{ta}''$ is a group of $\alpha\alpha$ or $\alpha\beta$

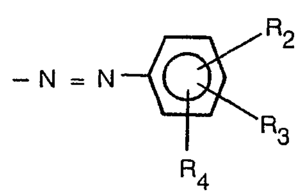

($\alpha\alpha$)

or

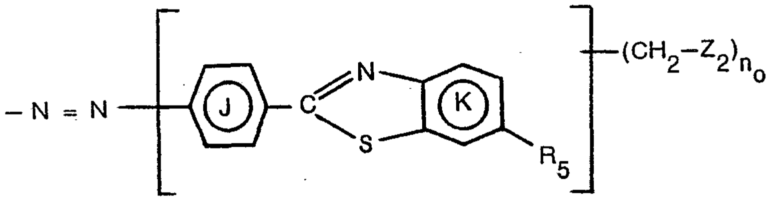

(αβ)

where

$R_2$ is hydrogen,

$—NO_2$, $SO_2—NH_2$, $SO_2NH—R_1$, 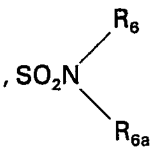

$SO_2—NH—(CH_2)_p—Z_2$, $(C_{1-4})$alkyl or $(C_{1-4})$alkoxy,

where

p is 1, 2 or 3,

$R_1$ is $C_{1-4}$alkyl, $—C_2H_4OH$ or $—(CH_2)_p—N—(R_{1a})_2$ where $R_{1a}$ is propyl or butyl,

$R_6$ is $C_{1-4}$alkyl, $—C_2H_4OH$ or $(CH_2)_p—N—(R_6')_2$ where $R_6'$ is $(C_{1-4})$ alkyl and $R_{6a}$ is $(C_{1-4})$alkyl, $—C_2H_4OH$, $—(CH_2)_p—N—(R_6')_2$ or $C_2H_4O—R_6'$;

$R_3$ is hydrogen

$NO_2$, $—SO_2NH_2$, $—SO_2NH—R_1$ 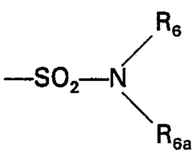

$(C_{1-4})$alkyl, $(C_{1-4})$alkoxy,

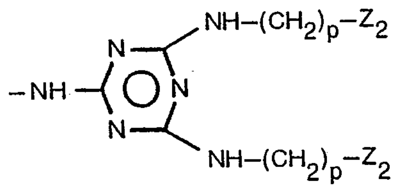

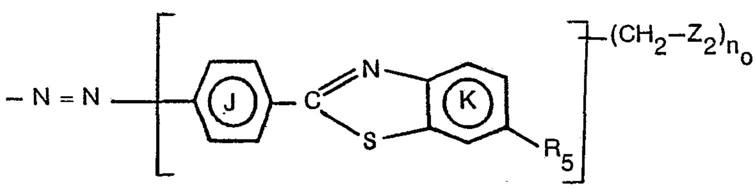

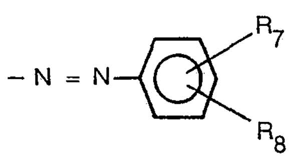

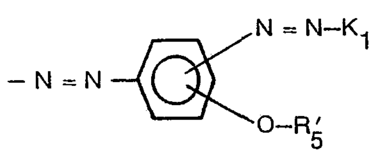 , $—N=N—K_1$ ,

$—CO—NH—(CH_2)_p—Z_2$, $—NH—CO—(CH_2)_p—Z_2$, $—SO_2—NH—(CH_2)_p—Z_2$ or $CH_2—Z_2$,

where

$R_5$ is hydrogen, $(C_{1-4})$alkyl or $(C_{1-4})$alkoxy;

$R_5'$ is $C_{1-4}$alkyl;

$n_o$ is a number between 1 and 2 inclusive and the group $\lbrace CH_2—Z_2)$ is attached to either of the phenyl groups J or K

$R_7$ is hydrogen, —OH, $(C_{1-4})$alkyl, $(C_{1-4})$alkoxy —NH—CO—$NH_2$ or —NH—CO—$CH_3$;

$R_8$ is hydrogen, —NH—CO—$(CH_2)_p$—$Z_2$, or

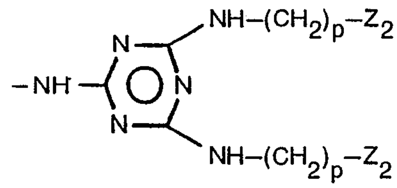

$R_4$ is hydrogen, —$NO_2$, $(C_{1-4})$alkyl or $(C_{1-4})$alkoxy;

$K_1$ is a group of the formula

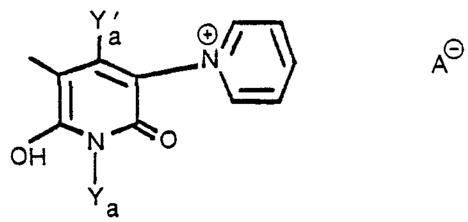

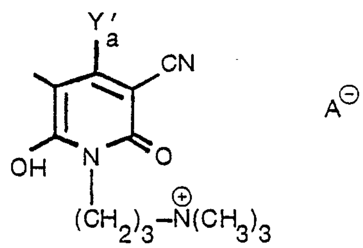

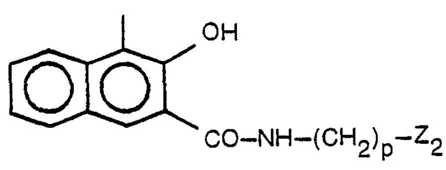

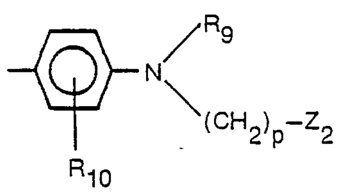

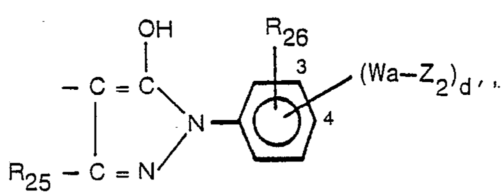

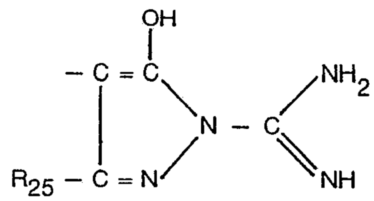

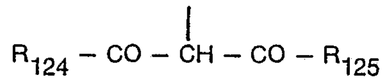

$R_{25}$ is $(C_{1-4})$alkyl, —COO—$(R_{25a})$ or —COOH where
$R_{25a}$ is $(C_{1-4})$alkyl;
$R_{26}$ is hydrogen, halogen, $(C_{1-4})$alkyl or $(C_{1-4})$alkoxy;
$R_{124}$ is $(C_{1-4})$alkyl or —$(CH_2)_p$—$Z_2$;
$Y_a$ is hydrogen, $(C_{1-4})$alkyl, —$C_2H_4OH$ or $(CH_2)_p$—$Z_2$;
$Y'_a$ is $(C_{1-4})$alkyl, preferably —$CH_3$;
$R_9$ is $(C_{1-4})$alkyl, or —$(CH_2)_p$—$Z_2$;
$R_{10}$ is hydrogen, $(C_{1-4})$alkyl, $(C_{1-4})$alkoxy, —NH—CO—$CH_3$ or —NH—CO—$NH_2$;
$R_{124}$ is —$CH_2)_p$—$Z_2$,

$-NH-(CH_2)_p-Z$ or 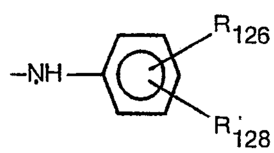

where
$R_{126}$ is hydrogen, —OH, $(C_{1-4})$alkoxy, —NH—CO—$(CH_2)_p$—$Z_2$, —CO—NH—$(CH_2)_p$—$Z_2$, —$SO_2$—NH—$(CH_2)_p$—$Z_2$, —$CH_2)_p$—$Z_2$ or

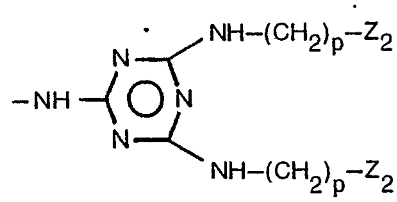

and
$R_{128}$ is hydrogen or —$(CH_2)_p$—$Z_2$;
$Z_2$ is a group of the formula

$-NH_2$, $-\overset{\oplus}{N}(R_0)_2$, $-N(R_0)_3$ $A^{\ominus}$, 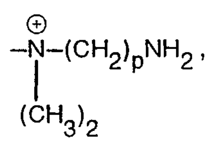

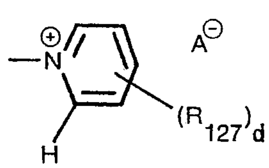 or 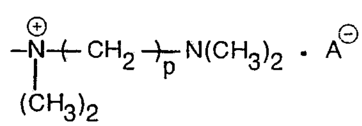

where each $R_0$ independently is methyl, ethyl, β-hydroxyethyl, benzyl,

$-CH_2COCH_3$ or 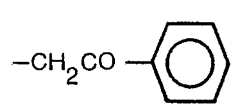

provided that not more than one benzyl,

$-CH_2COCH_3$ or 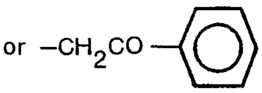

is attached to a nitrogen atom,

$R_{127}$ is methyl or ethyl,

m is 0, 1 or 2 and

$A^{\ominus}$ is a non-chromophoric anion, with the provisos that

i) each of the azo bridges in ring B is ortho to $A_1$ or $A_2$ above;

ii) when c is 2, X′ is attached to $R_{ta}''$ when $R_{ta}''$ is the group $\alpha\alpha$ or to ring C;

iii) when d′ is 1 ring C can be additionally substituted by one or more of halogen, hydroxy, $(C_{1-4})$alkyl, $(C_{1-4})$alkoxy and —NH—CO—$NH_2$.

2. An azo compound according to Claim 1 of formula IId (in 1:1 metal complex form)

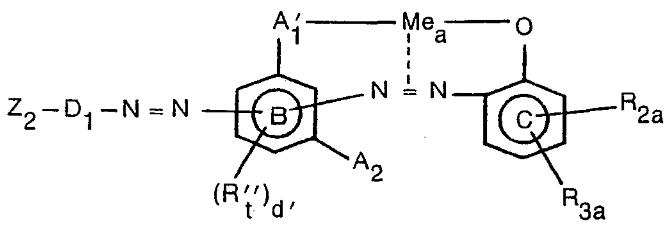

IId

or of the formula IIj (in 1:2 metal complex form)

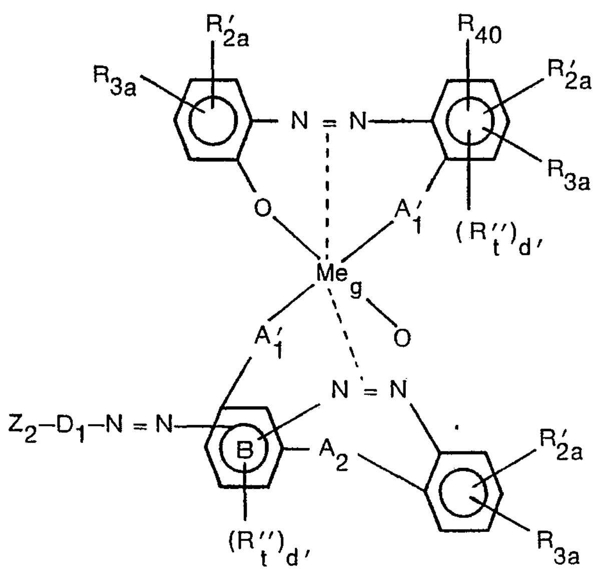

IIj

or of the formula IIk (in 1:2 metal complex form)

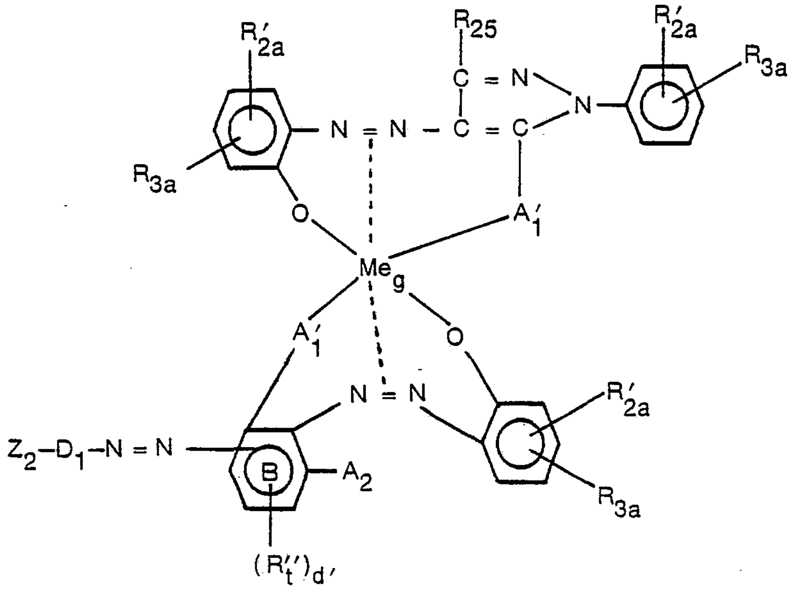

IIk

or of the formula III (in 1:2 metal complex form)

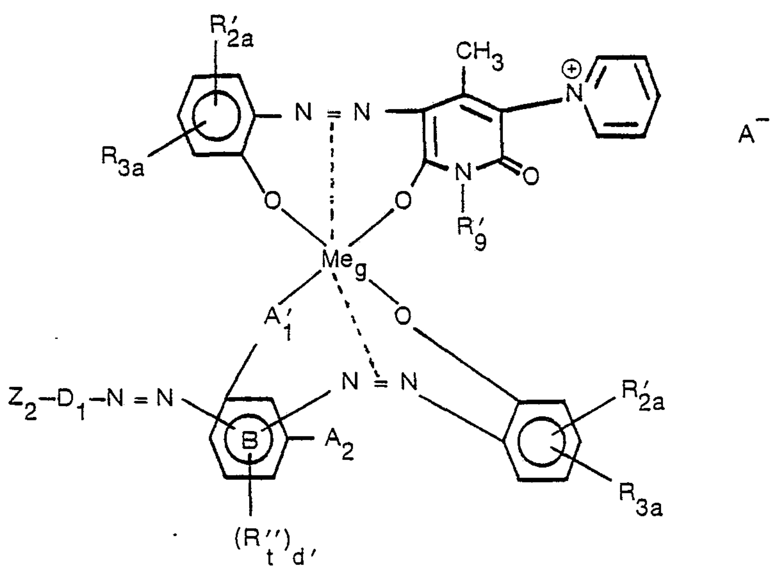

III

or of the formula IIm (in 1:2 metal complex form)

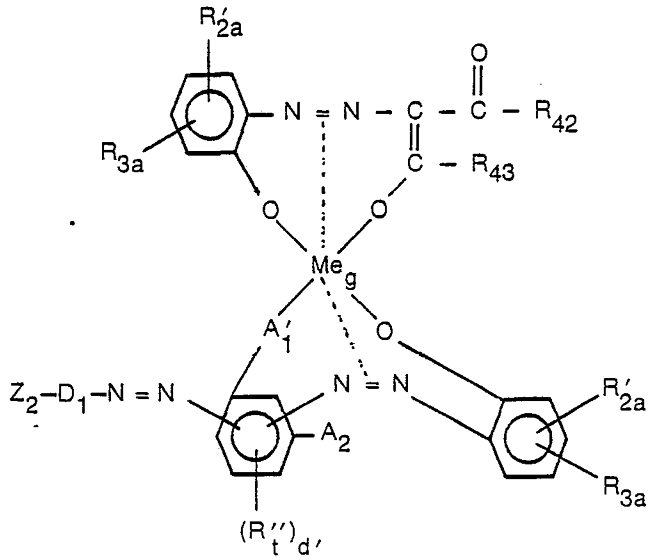

IIm

in which $R_t''$ is 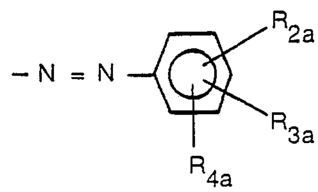

or

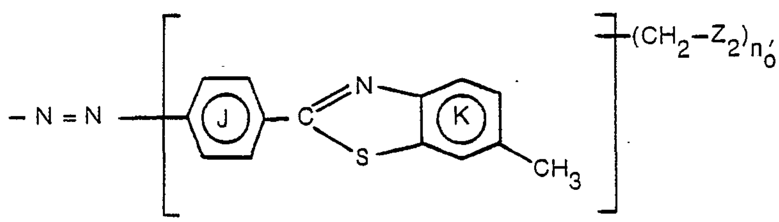

where each $R_{2a}$ independently is hydrogen, $—NO_2$, $—SO_2NH_2$, $—SO_2—NH—CH_3$, $—SO_2—N(CH_3)_2$,

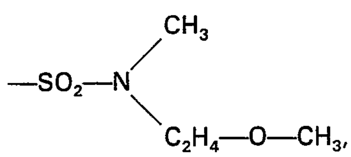

$—SO_2NH—C_2H_4OH$, $—SO_2—N(C_2H_4OH)_2$, $—SO_2—N[C_2H_4—N(CH_3)_2]_2$ or $—SO_2—NH—(CH_2)_3—Z_2$; each $R_{3a}$, independently is hydrogen, $—NO_2$, $—SO_2NH_2$, $—SO_2—NH—CH_3$, $—SO_2—N(CH_3)_2$,

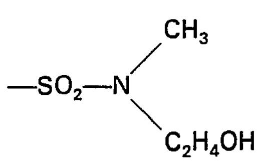

$—SO_2—NH—C_2H_4OH$, $—SO_2—N(C_2H_4OH)_2$, $—NH—CO—(CH_2)_p—Z_2$, $—CO—NH—(CH_2)_p—Z_2$, $—CH_3$, $—OCH_3$, $—SO_2—NH—(CH_2)_p—Z_2$,

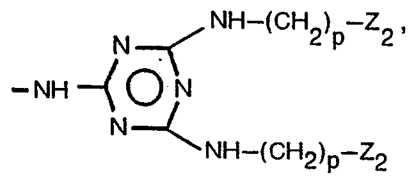

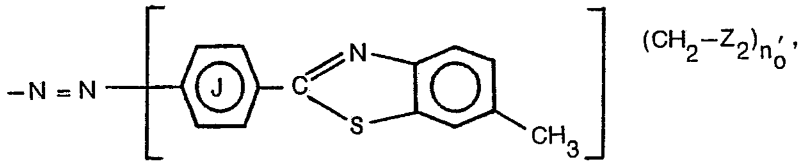

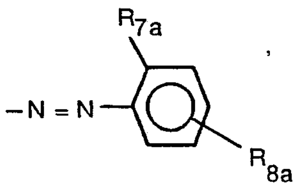

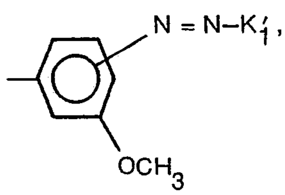 $-N=N-K_1'$ or $-CH_2-Z_2$,

in which

$R_{7a}$ is hydrogen, $-OH$, $-CH_3$, $-OCH_3$, $-NHCOCH_3$ or $-NHCONH_2$;

$R_{8a}$ is hydrogen, $-NHCO-(CH_2)_pZ_2$ or

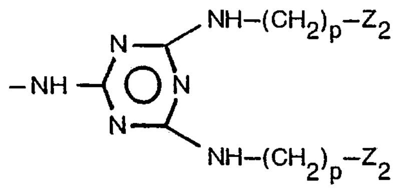

$n_o'$ is an average number between 1.0 and 1.7

$K_1'$ is

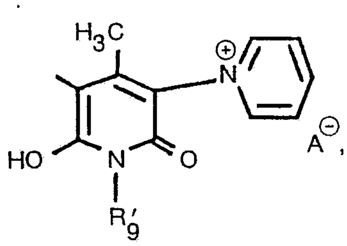

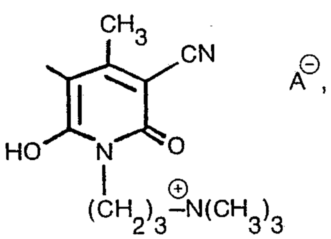

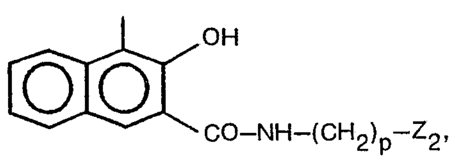

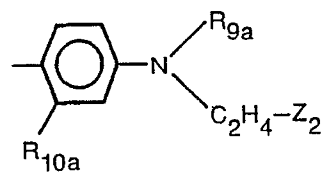

or

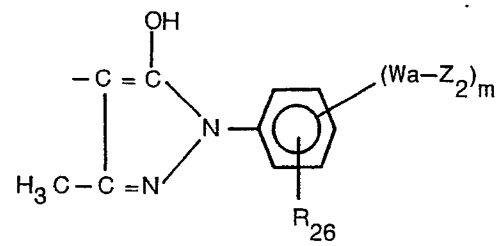

in which

$R_{9a}$ is $-CH_3$ or $C_2H_5$,
$R_{10a}$ is hydrogen, $-CH_3$, $-OCH_3$, $-NH-CO-CH_3$ or $-NH-CO-NH_2$; and
$R_9'$ is hydrogen, $-CH_3$, $-C_2H_5$, n-$C_3H_7$, n-$C_4H_9$, i-$C_3H_7$, i-$C_4H_9$, $-C_2H_4OH$ or $-(CH_2)_p-Z_2$;
$R_{4a}$ is hydrogen, $-NO_2$, $-CH_3$ or $-OCH_3$;
$D_1-Z_2$

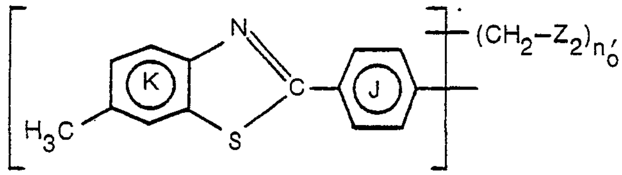

,

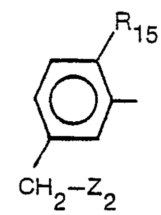

,

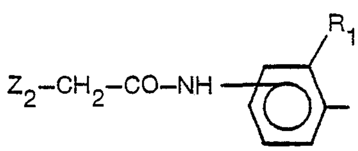

,

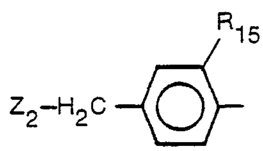

,

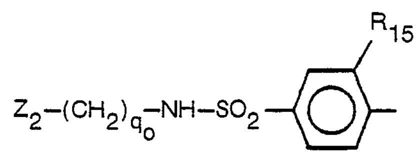

,

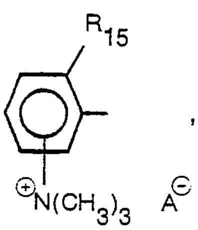

,

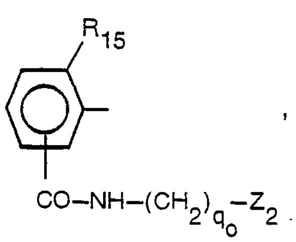

,

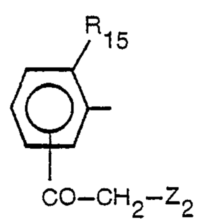

,

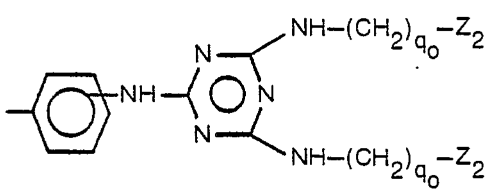

,

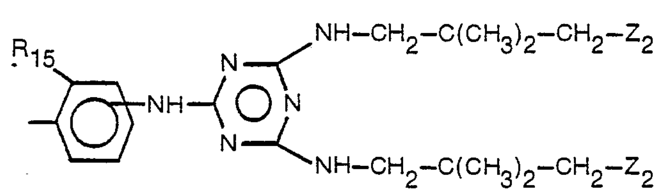

,

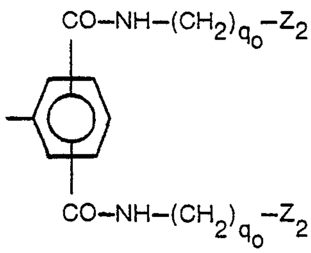

,

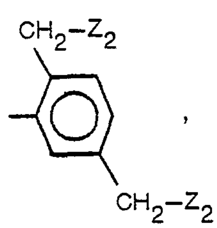

,

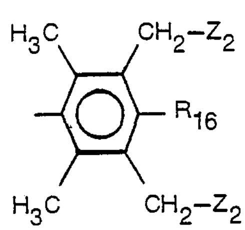

,

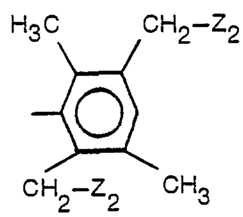

,

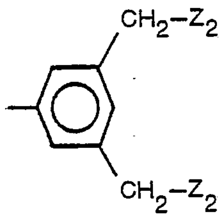 , 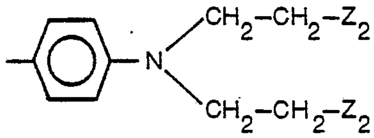 , 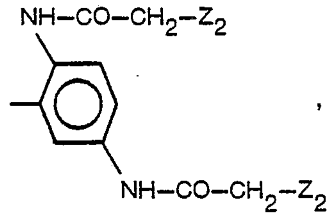 ,

or 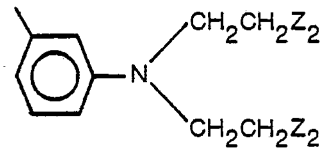

$R_{15}$ is hydrogen, —OH, —$OCH_3$, —$CH_3$ or Cl,
$R_{16}$ is hydrogen or —$CH_3$;
$q_o$ is 2 to 5, preferably 2 or 3;
and all the other symbols are as defined above.
$Me_a$ is copper, cobalt or chromium,
$R_{40}$ is hydrogen or $Z_2$—$D_1$—N=N—,
Meg is cobalt, iron or chromium
$A_1'$ is —NH— or —C—,
$R_{42}$ is —$(CH_2)_p$—$Z_2$, —NH—$(CH_2)_p$—$Z_2$ or

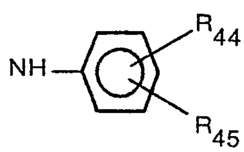 ;

$R_{43}$ is —$CH_3$, $C_2H_5$ or $(CH_2)_p$—$Z_2$;
$R_{44}$ is hydrogen, —OH, $(C_{1-4})$alkoxy, —NH—CO—$(CH_2)_p$—$Z_2$, —CO—NH—$(CH_2)_p$—$Z_2$, —$SO_2$—NH—$(CH_2)_p$—$Z_2$,

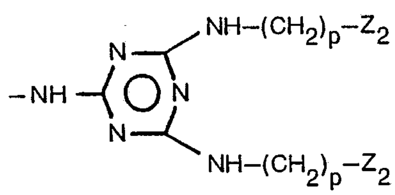

or —$(CH_2)_p$—$Z_2$;
$R_{45}$ is hydrogen or —$(CH_2)_p$—$Z_2$;
$R_{2a}'$ has the significances of $R_{2a}$ and may also be —OH or —$NH_2$;
and $A_2$ is OH or $NH_2$.

3. An azo compound according to Claim 1 of formula IIf

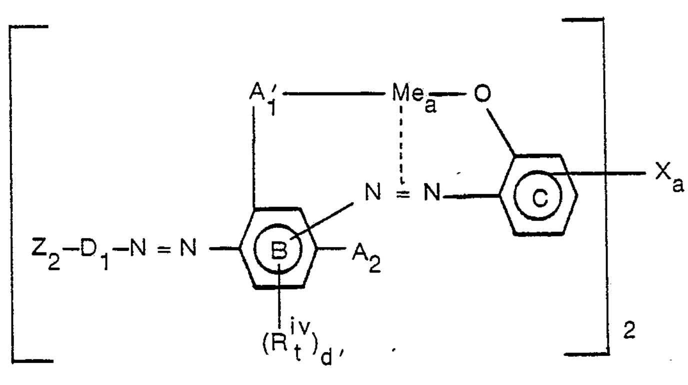

IIf

in which $R_t^{iv}$ is

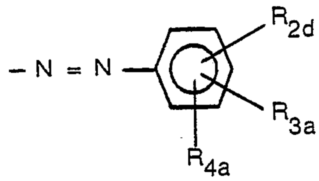

or

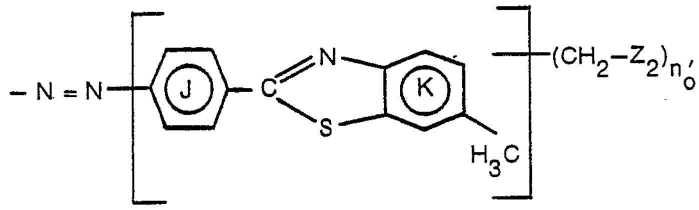

,

where

$R_{2d}$ is hydrogen, $-OH$, $-CH_3$ or $-OCH_3$;

and each ring C independently can be substituted in a position ortho to its azo bridge by $-CH_3$ and/or $-OCH_3$ and the group $X_a$ is in a meta- or para-position to the azo bridge of ring C and each azo bridge, in ring B is ortho to $A_1'$ or $A_2$

$X_a$ is $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$ $X_{49}$ defined in Claim 1 or the following groups $X_2'$ $-CH_2-$, $X_2''$ $-(CH_2)_2-$, $X_2'''$ $-(CH_2)_3$,

$X_2^{iv}$ $-(CH_2)_4-$, $X_{14}'$ 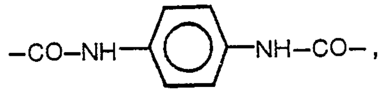

$X_{15}'$ 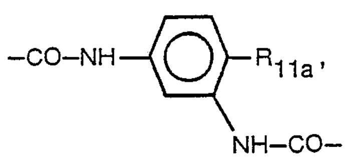 $X_{19}'$ $-NH-CO-CH_2-CH_2-CO-NH-$,

$X_{19}''$ $-NH-CO-(CH_2)_4-CO-NH-$, $X_{19}'''$ 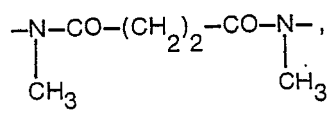

$X_{20}'$ $-NH-CO-CH=CH-CO-NH-$, $X_{20}''$ 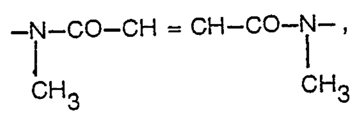

$X_{21}'$ 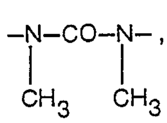 $X_{32}'$ 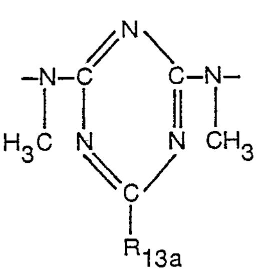

$X''_{32}$ 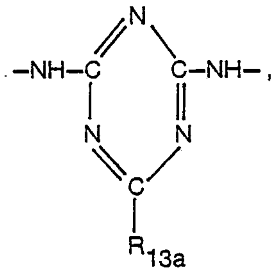   $X'_{34}$ $-CO-NH-(CH_2)_2-NH-CO-$,

$X''_{34}$ $-CO-NH-(CH_2)_3-NH-CO-$,   $X'''_{34}$ $-CO-NH-(CH_2)_4-NH-CO-$,

$X^{iv}_{34}$ 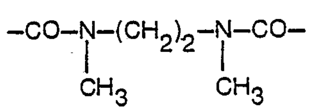   $X^{v}_{34}$ 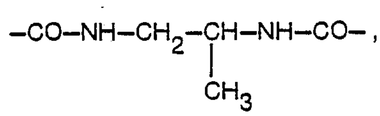

$X^{vi}_{34}$ 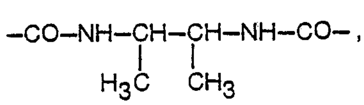

$X''_{14}$ 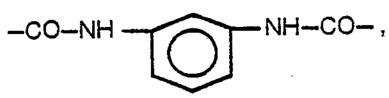

$X''_{15}$ 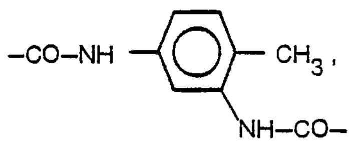

$X'''_{15}$ 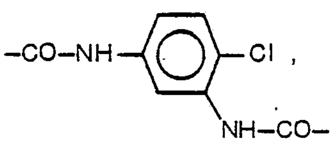

$X^{iv}_{15}$ 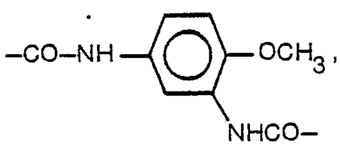

$X'''_{32}$ 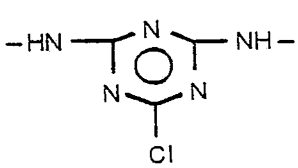 ,

$X^{iv}_{32}$ 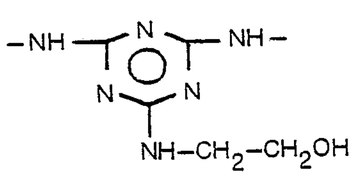 ,

$X_{32}^{v}$ 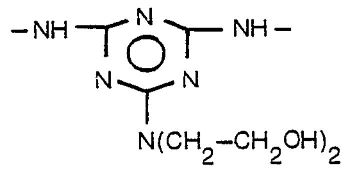 ,

$X_{32}^{vi}$ 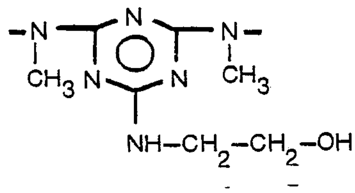 ,

$X'_{33}$ 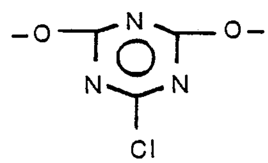 ,

$X''_{33}$ 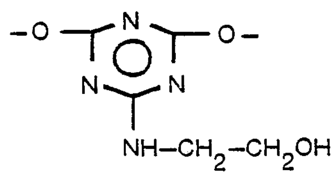 ,

$X'''_{33}$ 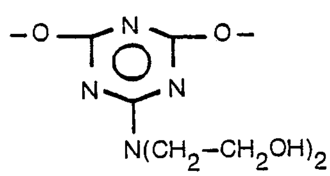 ,

$X'_{35}$ $-CO-NH-(CH_2)_2-O-(CH_2)_2-NH-CO-$ ,

$X''_{35}$ $-CO-NH-(CH_2)_2-O-(CH_2)_2-O-(CH_2)_2-NH-CO-$ ,

$X'_{36}$ $-CO-NH-(CH_2)_2-NH-(CH_2)_2-NH-CO-$ ,

$X''_{36}$ 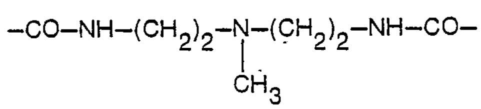 ,

$X'_{48}$ 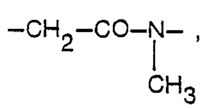 ,

$X'_{50}$ $-O-CH_2-CH_2-O-$ ,

$X''_{50}$ $-O-(CH_2)-O-$ ,

$X'_{51}$ $-CH=CH-CO-NH-$ ,

$X''_{51}$ 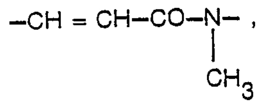

$X'_{52}$ 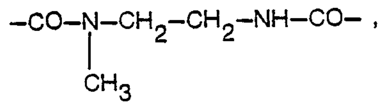

$X'_{53}$ $-CH_2-CH_2-CO-NH-$ ,

$X''_{53}$ 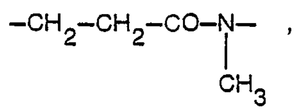

$Me_a$ is copper, cobalt, iron or chromium
where
$R_{11a}$ is hydrogen, —Cl, —$CH_3$ or —$OCH_3$;
$R_{13a}$ is —Cl, —NH—$CH_2$—$CH_2$—OH or —$N(CH_2—CH_2—OH)_2$ and
all the other symbols have been defined in Claim 2.

4. An azo compound according to Claim 3 of the formula IIg (in 1:1 metal complex form)

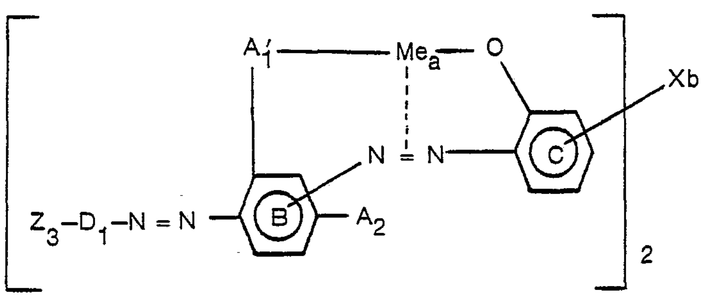

IIg

in which
Xb is $X_1$, $X_{11}$, $X_{12}$, $X_{17}$, $X_{27}$, $X_{49}$ defined in Claim 1;
$X^{II}_2$, $X^{I}_{14}$, $X^{I}_{19}$, $X^{II}_{19}$, $X^{III}_{19}$, $X^{I}_{20}$, $X^{II}_{20}$, $X^{I}_{32}$, $X^{I}_{34}$, $X^{IV}_{34}$, $X^{V}_{34}$ or $X^{VI}_{34}$, defined in Claim 3;

$Z_3$ is 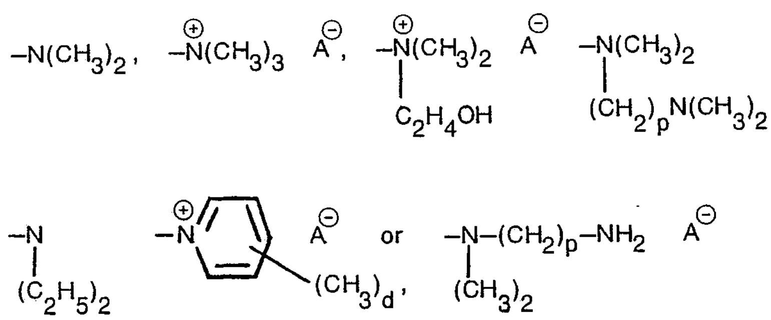

where —$D_1$—$Z_3$ has the significances of —$D_1$—$Z_2$ defined in Claim 2 except $Z_2$ is replaced by $Z_3$, $A'_1$ is —NH— or —O—, with the proviso that in ring C the group $X_b$ is in a meta- or para-position to its azo bridge and $Me_a$ is defined in Claim 3.

5. An azo compound according to Claim 1 of the formula IIn

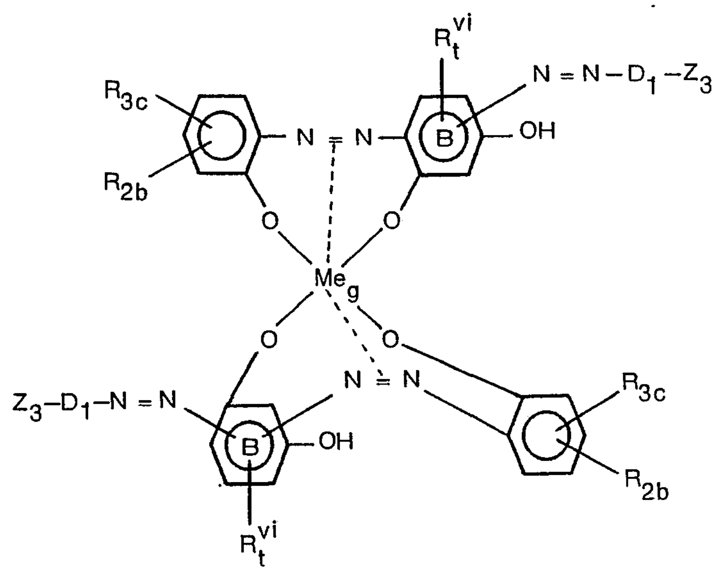

II n

in which

$R_{3c}$ is hydrogen, $—NO_2$, $—CH_3$, $—OCH_3$, $—SO_2—NH_2$, $—SO_2NH(CH_2)_3N(CH_3)_2$, $—SO_2NHC_2H_4OH$, $—NH—CO—(CH_2)_p—Z_3$, $—CH_2—Z_3$, $—N{=}N—K_1'$,

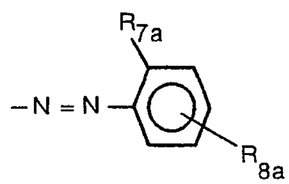

or

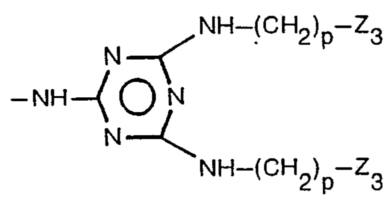

;

$—SO_2NH(CH_2)_pN(CH_3)_2$

and $R_t^{vi}$ is hydrogen and,

where the group $Z_3—D_1—N{=}N—$ has the significance

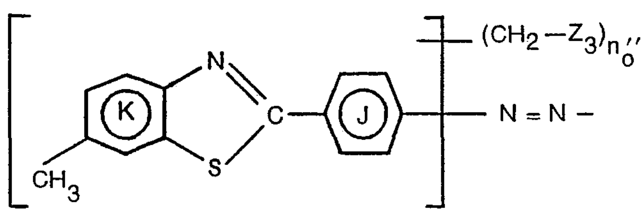

then $R_t^{vi}$ has the additional significance of

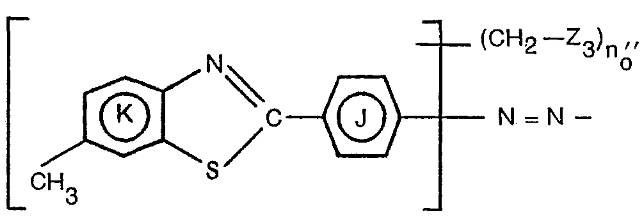

$R_{2b}$ is hydrogen, $NO_2$ or $SO_2NH_2$, $n_o''$ is 1.3 to 1.5, p is defined in Claim 1 and the other symbols are defined in Claim 3 and where the azo bridge is in ring B are ortho to the —O— or —OH group.

6. A sulpho-free azo compound, in metal-free form having on average at least 1.3 water-solubilising basic groups, of formula II'

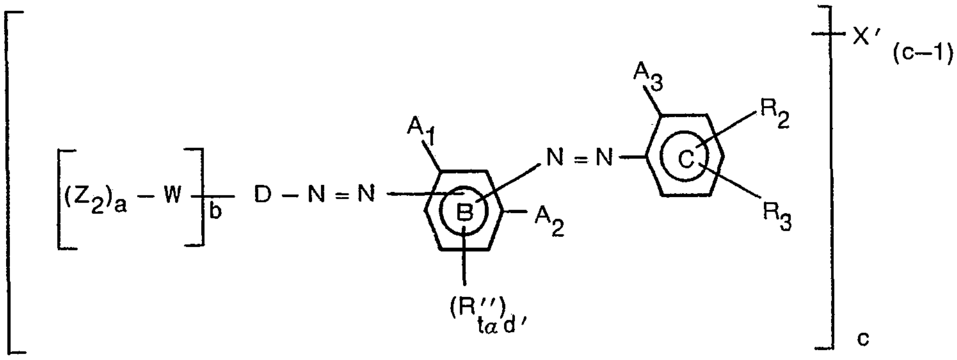

II'

wherein

$A_1$ is —OH or —$NH_2$;

$A_3$ is —OH or —$NH_2$

and $A_2$, $R_2$, $R_3$, $X^1$, D, W, $Z_2$, $R_{ta}''$, a, b, c and d' have the meaning as defined in Claim 1.

i) each of the azo bridges in ring B is ortho to $A_1$ or $A_2$ above;

ii) when c is 2, X' is attached to $R_{ta}''$ when $R_{ta}''$ is the group $\alpha\alpha$ or to ring C;

iii) when d' is 1 ring C can be additionally substituted by one or more of halogen, hydroxy, ($C_{1-4}$)alkyl, ($C_{1-4}$)alkoxy and —NH—CO—$NH_2$.

7. An azo compound according to Claim 6 of formula IIa

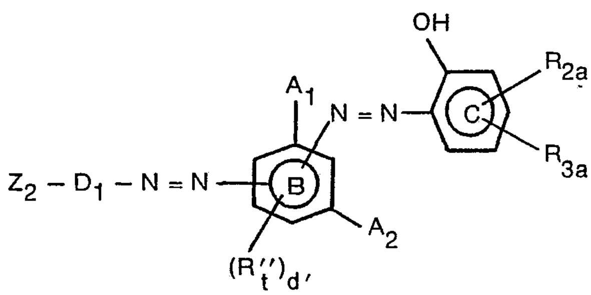

IIa

in which the symbols are as defined in Claim 2.

8. A method for dyeing a substrate comprising applying to that substrate a compound of formula II' as defined in Claim 1.

9. A process for the production of azo compounds of formula II' according to Claim 1, which comprises coupling a diazotised amine of formula $\gamma$

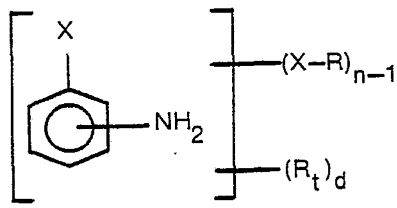

$\gamma$

with a coupling component of the formula $\delta$

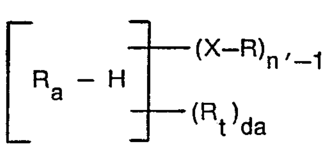

, and

where Ra is a group of formula Ia

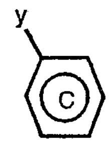

Ia

x is —OH or $NH_2$ and y is hydrogen, —OH or —$NH_2$;

x and y form the group —NH—Me—O—, —O—Me—O— or —NH—Me—NH— where Me is a metal capable of either forming a 1:1 metal complex or a 1:2 metal complex; or capable of forming both a 1:1 and 1:2 metal complex

n is 1 or 2;

d is 0, 1 or 2;

n′ and da have the significances of n defined above and d′ defined in Claim 1 with the proviso that n+n′ is not greater than 2 and d and da is not greater than 2

$R_t$ is $R_{ta}''$ defined in Claim 1;

R is a group of formula Ih

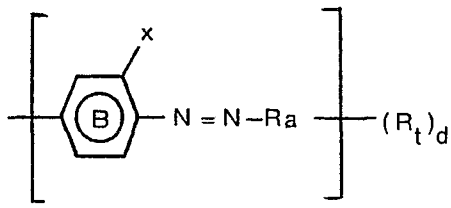

Ih

where

x, Ra, $R_t$ and d′ are defined above and x is x′ where x′ is as defined in Claim 1;

and in the case of the metal complexes metallising with a metal capable of forming a 1:1 or a 1:2 metal complex or capable of forming both a 1:1 and 1:2 metal complex.

**Patentansprüche**

1. Sulfonsäuregruppenfreie Azoverbindungen in der 1:1- oder 1:2-Metallkomplexstruktur, welche mindestens 1,3 wasserlöslich-machende basische Gruppen enthalten der Formel II

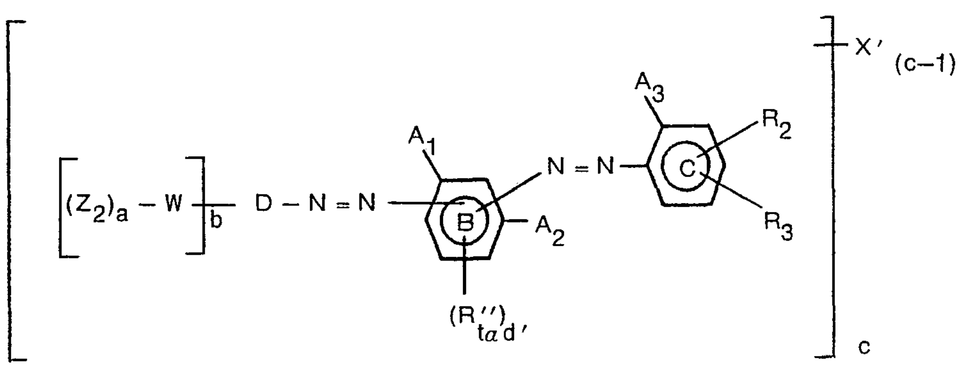

II′

worin

c 1 oder 2,

d′ 0 oder 1,

$A_1$ und $A_3$ eine Gruppe —NH—Me—O— oder —O—Me—O— oder —NH—Me—NH— bilden,

Me ein Metallatom das entweder einen 1:1- oder einen 1:2-Metallkomplex oder einen 1:1- und einen 1:2-Metallkomplex bilden kann,

$A_2$ —OH oder —$NH_2$,

D einen Rest einer üblichen Diazokomponente,

W die direkte Bindung oder Wa,

Wa —$(CH_2)_s$—, —NHCO$(\overset{*}{C}H_2)_s$, —CONH$(\overset{*}{C}H_2)_3$— oder —$SO_2NH(\overset{*}{C}H_2)_s$—, das mit * bezeichnete C-Atom an das N-Atom der Gruppe Z gebunden ist,

das N-Atom der Gruppe Z gebunden ist,

s 1, 2, 3, 4, 5 oder 6,

X′ eine Gruppe $X_1$ bis $X_{53}$,

$X_1$ die direkte Bindung,

$X_2$ eine geradkettige oder verzweigte Alkylengruppe mit 1–4C–Atomen,

$X_3$ $-CO-$

$X_4$ 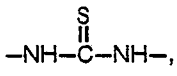, $X_5$ $-S-$, $X_6$ $-O-$, $X_7$ $-CH=CH-$, $X_8$ $-S-S-$,

$X_9$ $-SO_2-$, $X_{10}$ $-NH-$, $X_{11}$ $-NH-CO-$, $X_{12}$ 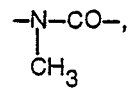, $X_{13}$ 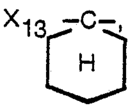

$X_{14}$ 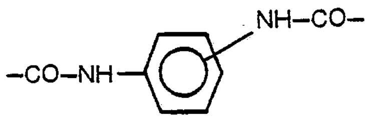, $X_{15}$ 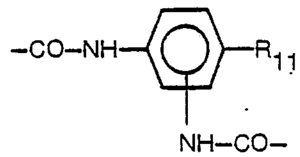

$X_{16}$ 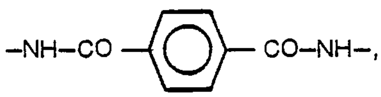, $X_{17}$ $-SO_2-NH-$, $X_{18}$ 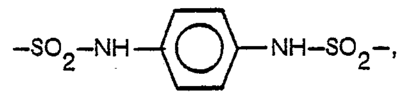

$X_{19}$ 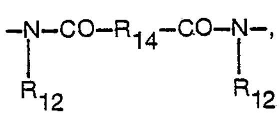 $X_{20}$ 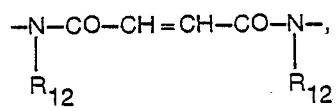 $X_{21}$ 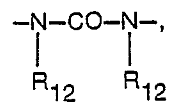

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 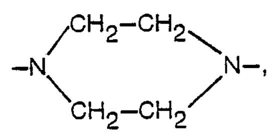

$X_{26}$ 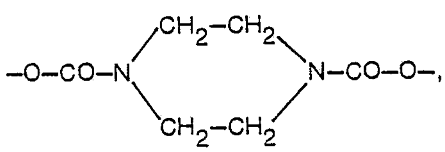, $X_{27}$ 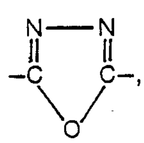 $X_{28}$ 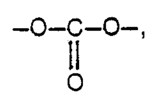

$X_{29}$ 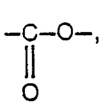 $X_{30}$ 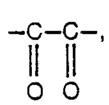 $X_{31}$ $-O-(CH_2)_q-O-$, $X_{32}$ 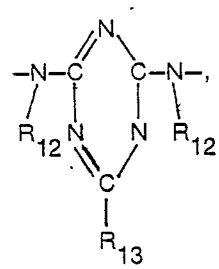

$X_{33}$ 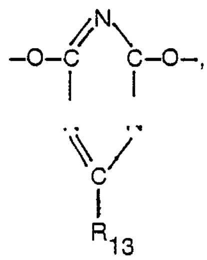 $X_{34}$ 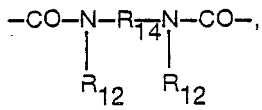

$X_{35}$ 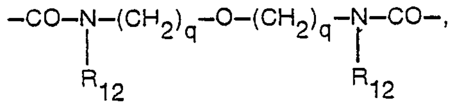

$X_{36}$ 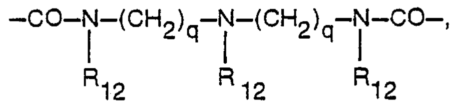

$X_{37}$ 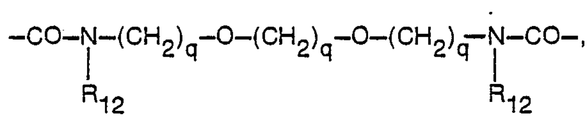 $X_{38}$ 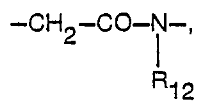

$X_{39}$ 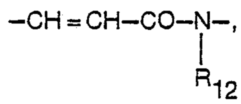 $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-CS-NH-CH_2-$, $X_{47}$ 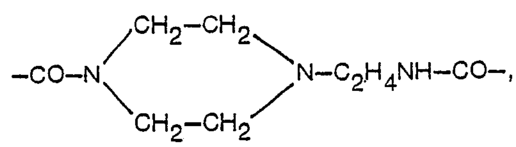

$X_{48}$ 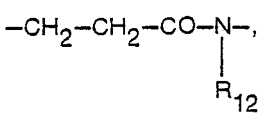

$X_{49}$ $-NH-CO-NH-$,

$X_{50}$ $-O-(CH_2)_q-O-$,

$X_{51}$ 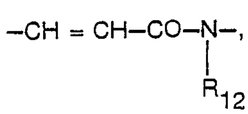

$X_{52}$ 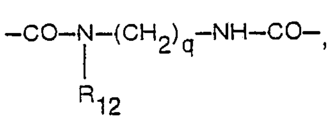

$X_{53}$ 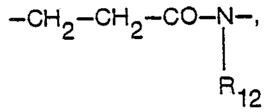

bedeuten,
worin

$R_{11}$ Halogen, (1—4C)-Alkyl oder (1—4C)-Alkoxy,
$R_{12}$ Wasserstoff oder (1—4C)-Alkyl,
$R_{13}$ Halogen, $—NHCH_2CH_2OH$ oder $—N(CH_2CH_2OH)_2$,
$R_{14}$ eine geradkettige oder verzweigte (1—4C)-Alkylen Gruppe,
q 1, 2, 3 oder 4,
a 1 oder 2,
b eine Zahl zwischen 1 und 2,
$R_{ta}''$ eine Gruppe

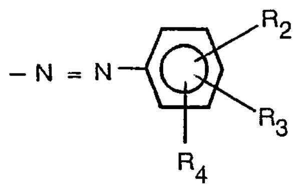
αα

oder

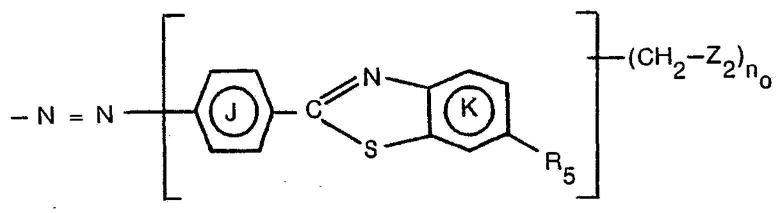
αβ

$R_2$ Wasserstoff,

$—NO_2$, $—SO_2—NH_2$, $—SO_2NH—R_1$, 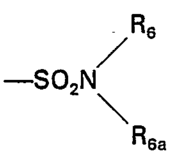

$—SO_2NH(CH_2)_p—Z_2$, (1—4C)-Alkyl oder (1—4C)-Alkoxy,

p 1, 2 oder 3,
$R_1$ (1—4C)-Alkyl, $—C_2H_4OH$, $—(CH_2)_p—N(R_{1a})_2$,
$R_{1a}$ Propyl oder Butyl,
$R_6$ (1—4C)-Alkyl, $—C_2H_4OH$ oder $—(CH_2)_p—N(R_6')_2$,
$R_6'$ (1—4C)-Alkyl,
$R_{6a}$ (1—4C)-Alkyl, $—C_2H_4OH$, $—(CH_2)_p—N(R_6')_2$ oder $C_2H_4O—R_6'$,
$R_3$ Wasserstoff,

$—NO_2$, $—SO_2NH_2$, $—SO_2NH—R_1$, 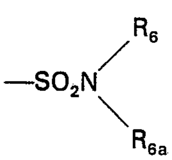

(1—4C)-Alkyl, (1—4C)-Alkoxy,

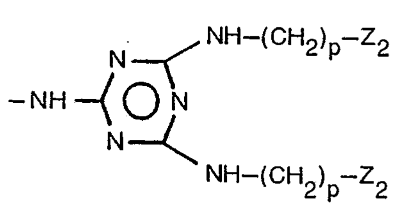

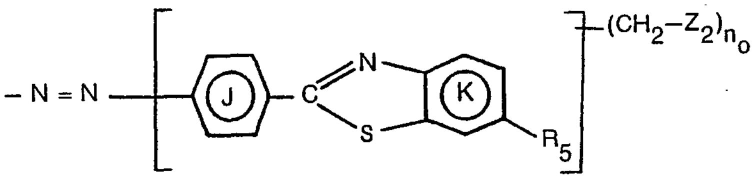

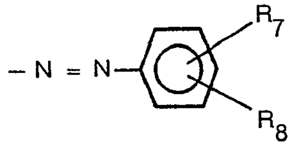

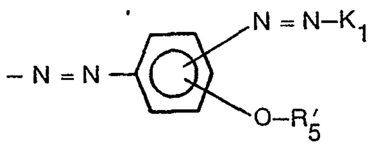 , $-N=N-K_1$ ,

$—CONH(CH_2)_p—Z_2$, $—NHCO(CH_2)_p—Z_2$, $—SO_2NH(CH_2)_p—Z_2$ oder $—CH_2—Z_2$,

$R_5$ Wasserstoff, (1—4C)-Alkyl oder (1—4C)-Alkoxy,

$R_5'$ (1—4C)-Alkyl,

$n_o$ eine Zahl zwischen 1 und 2 inklusiv, die Gruppe $—(CH_2—Z_2)$ entweder an die Phenylgruppe J oder K gebunden ist,

$R_7$ Wasserstoff, —OH, (1—4C)-Alkyl, (1—4C)-Alkoxy, $—NHCONH_2$ oder $—NHCOCH_3$,

$R_8$ Wasserstoff, $—NHCO(CH_2)_p—Z_2$ oder

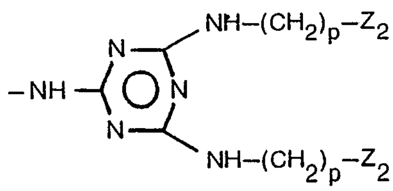

$R_4$ Wasserstoff, $NO_2$, (1—4C)-Alkyl oder (1—4C)-Alkoxy,

$K_1$ eine Gruppe der Formel

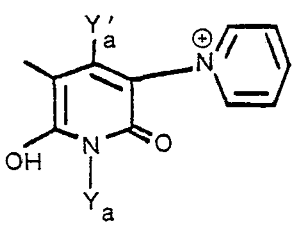 $A^{\ominus}$

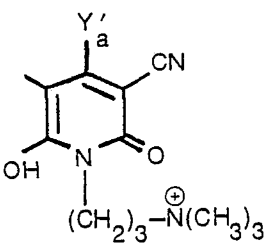 $A^{\ominus}$

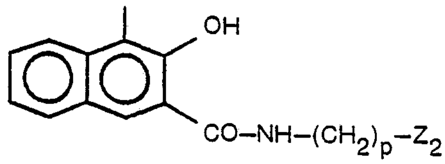

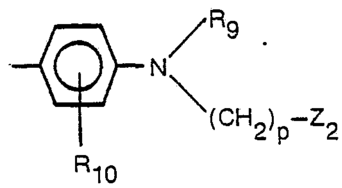

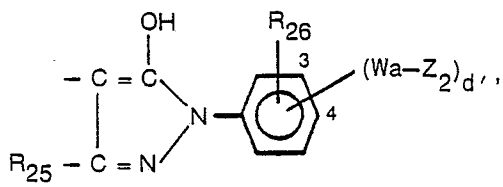

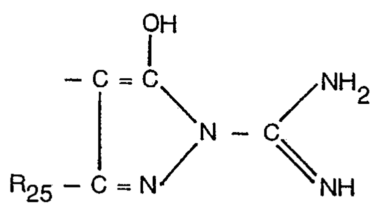

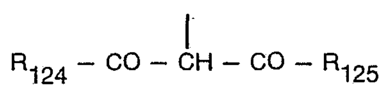

$R_{25}$ (1—4C)-Alkyl, —$COOR_{25a}$ oder —COOH,
$R_{25a}$ (1—4C)-Alkyl,
$R_{26}$ Wasserstoff, Halogen, (1—4C)-Alkyl oder (1—4C)-Alkoxy,
$R_{124}$ (1—4C)-Alkyl oder —$(CH_2)_p$—$Z_2$,
$Y_a$ Wasserstoff, (1—4C)-Alkyl, —$C_2H_4OH$ oder —$(CH_2)_p$—$Z_2$,
$Y_a'$ (1—4C)-Alkyl, vorzugsweise —$CH_3$,
$R_9$ (1—4C)-Alkyl oder —$(CH_2)_p$—$Z_2$,
$R_{10}$ Wasserstoff, (1—4C)-Alkyl, (1—4C)-Alkoxy, —$NHCOCH_3$ oder —$NHCONH_2$,
$R_{125}$ —$(CH_2)_p$—$Z_2$,

$-NH(CH_2)_p-Z_2$ oder

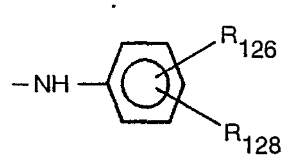

$R_{126}$ Wasserstoff, —OH, (1—4C)-Alkoxy, —$NHCO(CH_2)_p$—$Z_2$, —$CONH(CH_2)_p$—$Z_2$, —$SO_2NH(CH_2)_p$—$Z_2$, —$(CH_2)_p$—$Z_2$ oder

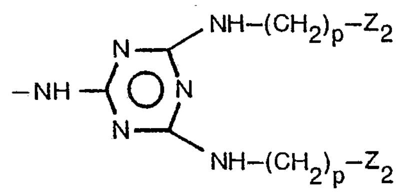

$R_{128}$ Wasserstoff oder $-(CH_2)_p-Z_2$,
$Z_2$ eine Gruppe der Formel

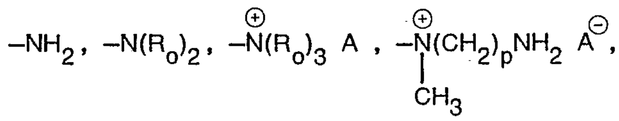

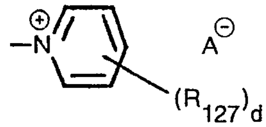 oder 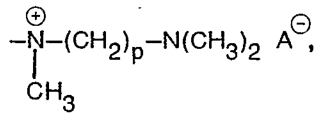

jeder Rest $R_0$ unabhängig voneinander Methyl oder Aethyl, $\beta$-Hydroxyäthyl, Benzyl,

$CH_2COCH_3$ oder 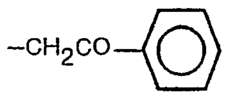 ,

mit der Massgabe, dass nicht mehr als ein Benzyl,

$-CH_2COCO_3$ oder 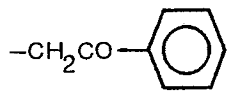

an ein N-Atom gebunden ist,
$R_{127}$ Methyl oder Aethyl,
m 0, 1 oder 2 und
$A^{\ominus}$ ein nicht-chromophores Anion bedeuten, mit der Massgabe, dass
i) jede Azobrücke im Ring B ortho zu $A_1$ oder $A_2$ steht,
ii) falls c für 2 steht, X' an $R_{ta}''$ gebunden ist, wenn $R_{ta}''$ eine der Gruppen $\alpha\alpha$) oder an den Ring C gebunden ist,
iii) falls d' für 1 steht, der Ring C zusätzlich durch Halogen, Hydroxy, (1—4C)-Alkyl, (1—4C)-Alkoxy oder $-NHCONH_2$ substituiert sein kann.

2. Azoverbindung gemäss Anspruch 1 der Formel IId) in der 1:1-Metallkomplexform

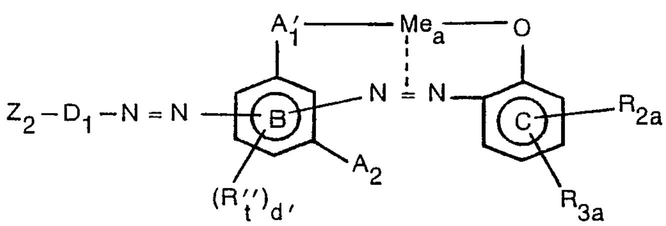 IId

oder der Formel IIj) in der 1:2-Metallkomplexform

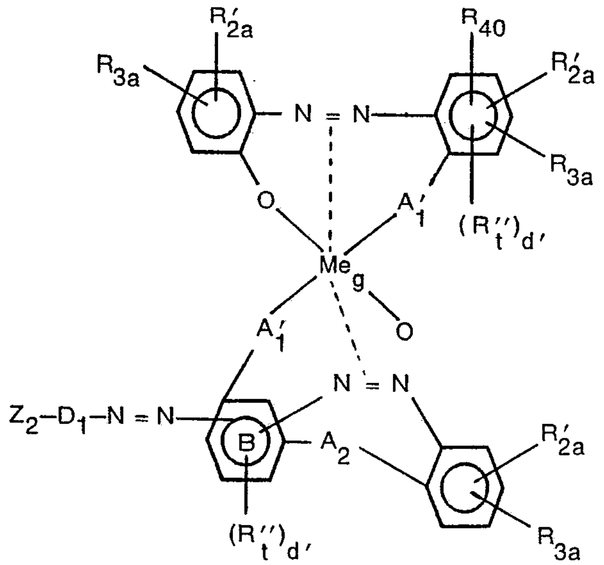

II j

oder der Formel IIk) in der 1:2-Metallkomplexform

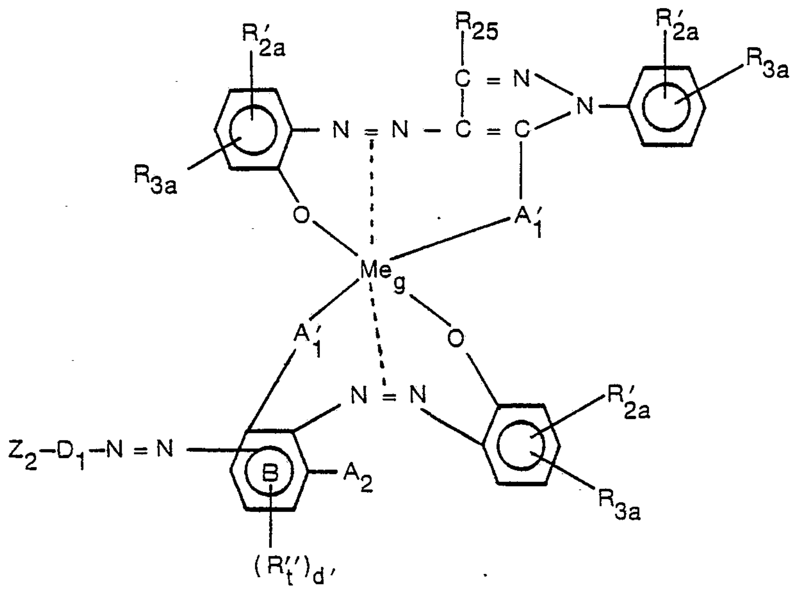

II k

oder der Formel III) in der 1:2-Metallkomplexform

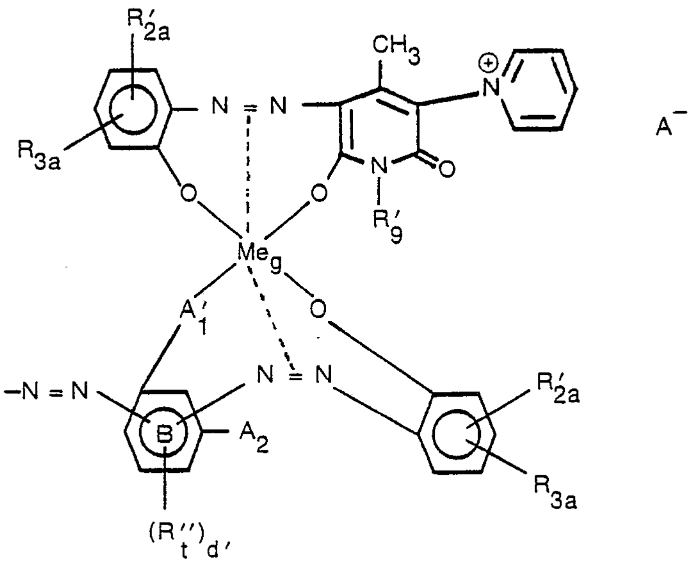

IIl

oder der Formel IIm) in der 1:2-Metallkomplexform

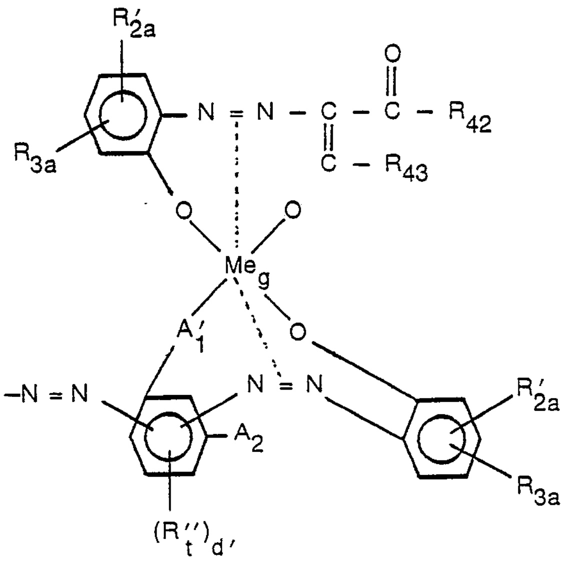

IIm

worin $R_t''$

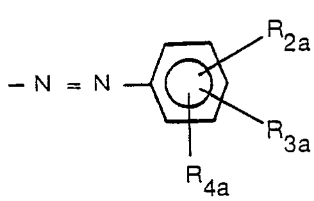

oder

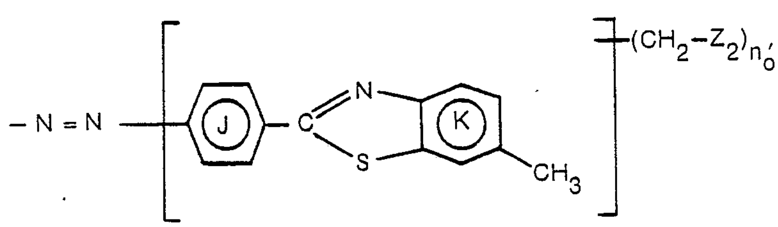

$R_{2a}$ unabhängig voneinander Wasserstoff, $—NO_2$, $—SO_2NH_2$, $—SO_2—NH—CH_3$, $—SO_2—N(CH_3)_2$,

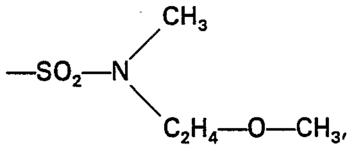

$—SO_2NH—C_2H_4OH$, $—SO_2—N(C_2H_4OH)_2$, $—SO_2—N[C_2H_4—N(CH_3)_2]_2$ oder $—SO_2—NH—(CH_2)_3—Z_2$;
$R_{3a}$ unabhängig voneinder, $—NO_2$, $—SO_2NH_2$, $—SO_2—NH—CH_3$, $—SO_2—N(CH_3)_2$,

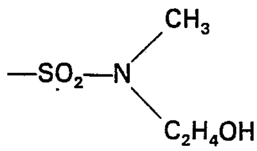

$—SO_2—NH—C_2H_4OH$, $—SO_2—N(C_2H_4OH)_2$, $—NH—CO—(CH_2)_p—Z_2$, $—CO—NH—(CH_2)_p—Z_2$, $—CH_3$ $—OCH_3$, $—SO_2—NH—(CH_2)_p—Z_2$,

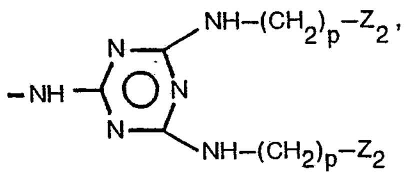

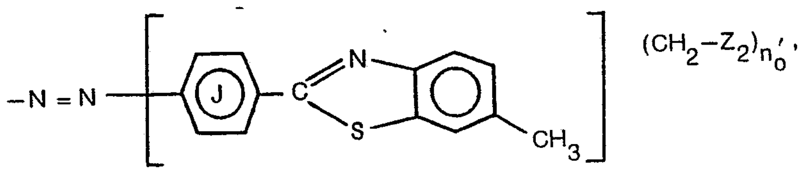

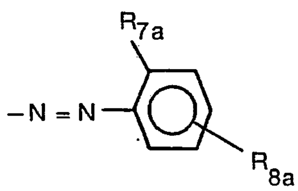
,
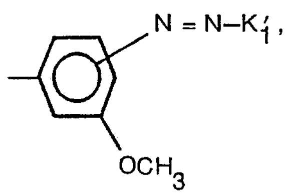
, $-N=N-K_1'$ oder $-CH_2-Z_2$,

$R_{7a}$ Wasserstoff, $—OH$, $—CH_3$, $—OCH_3$, $—NHCOCH_3$ oder $—NHCONH_2$;
$R_{8a}$ Wasserstoff, $—NHCO—(CH_2)_p—Z_2$ oder

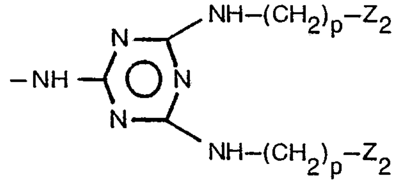

$n_o'$ eine Zahl zwischen 1,0 und 1,7

$K_1'$ eine Gruppe der Formel

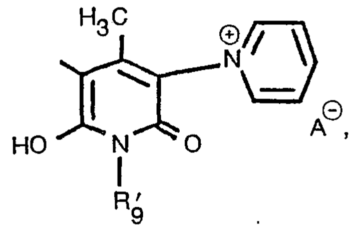,

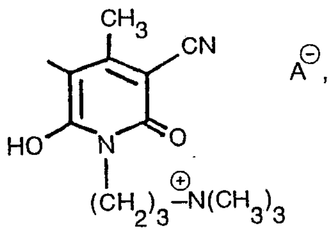, 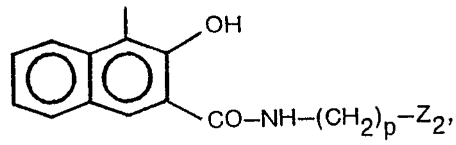,

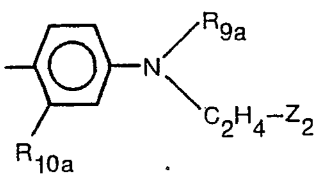 oder 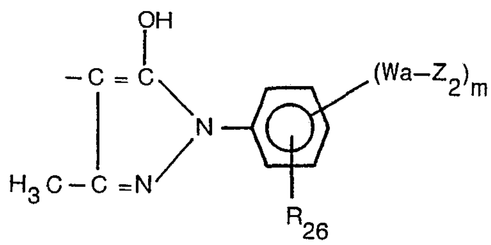

$R_{9a}$ $-CH_3$ oder $C_2H_5$,
$R_{10a}$ Wasserstoff, $-CH_3$, $-OCH_3$, $-NH-CO-CH_3$ oder $-NH-CO-NH_2$ und
$R_9'$ Wasserstoff, $-CH_3$, $-C_2H_5$, n-$C_3H_7$, n-$C_4H_9$, i-$C_3H_7$, i-$C_4H_9$, $-C_2H_4OH$ oder $-(CH_2)_p-Z_2$;
$R_{4a}$ Wasserstoff, $-NO_2$, $-CH_3$ oder $-OCH_3$, $-D_1-Z_2$ is

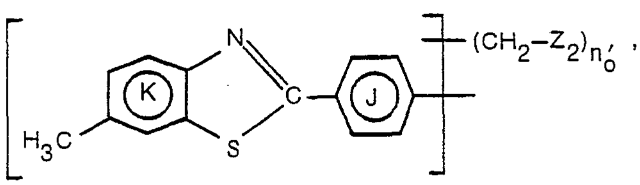, 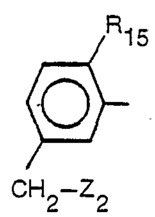,

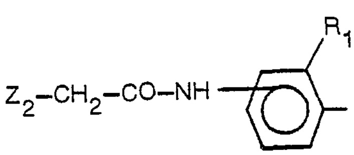, 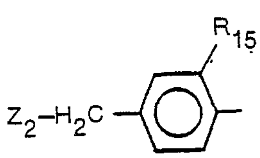, 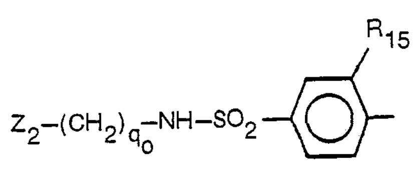,

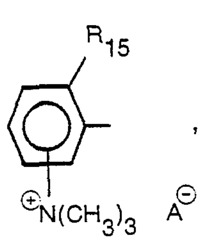, 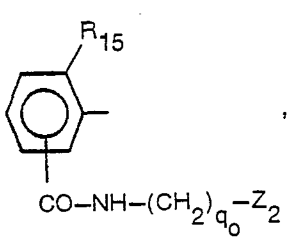, 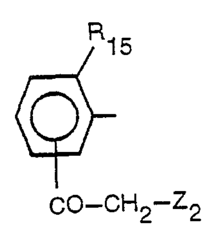,

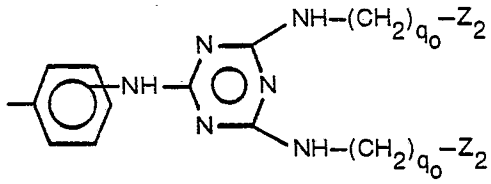,

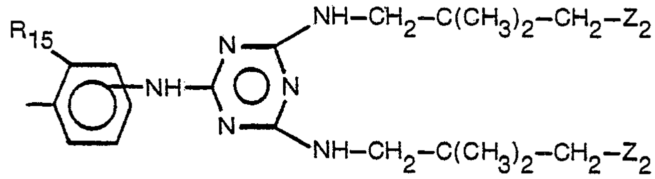,

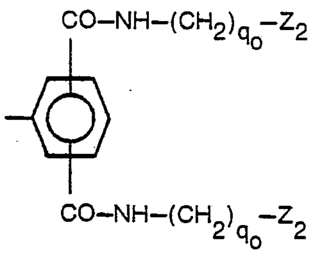, 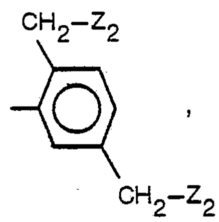, 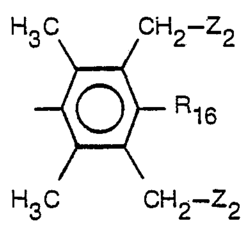, 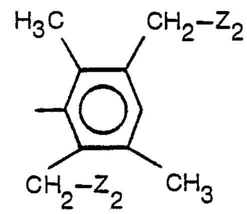,

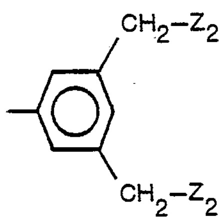, 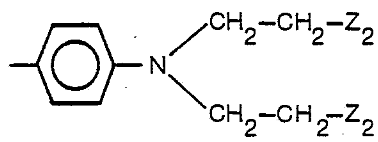, 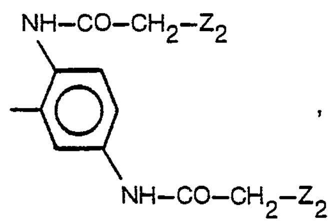,

oder 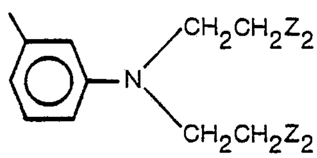

$R_{15}$ Wasserstoff —OH, —$OCH_3$, —$CH_3$ oder Cl,
$R_{16}$ Wasserstoff oder —$CH_3$;
$q_o$ 2 bis 5, vorteilhaft 2 oder 3;
$Me_a$ Kupfer, Kobalt oder Chrom,
$R_{40}$ Wasserstoff oder $Z_2$—$D_1$—N=N—,
Meg Kobalt, Eisen oder Chrom,
$A_1'$ —NH— oder —C—,
$R_{42}$ —$(CH_2)_p$—$Z_2$, —NH—$(CH_2)_p$—$Z_2$ oder

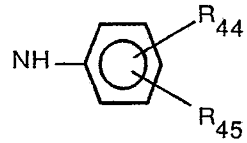;

$R_{43}$ —$CH_3$, $C_2H_5$ oder $(CH_2)_p$—$Z_2$;
$R_{44}$ Wasserstoff, —OH, $(C_{1-4})$-Alkoxy, —NH—CO—$(CH_2)_p$—$Z_2$, —CO—NH—$(CH_2)_p$—$Z_2$, —$SO_2$—NH—$(CH_2)_p$—$Z_2$,

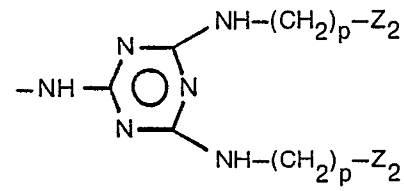

oder $—(CH_2)_p—Z_2$;
$R_{45}$ Wasserstoff oder $—(CH_2)_p—Z_2$;
$R'_{2a}$ eine der Bedeutungen von $R_{2a}$ oder —OH oder $—NH_2$ und $A_2$ OH oder $NH_2$ bedeuten,

3. Azoverbindung gemäss Anspruch 1 der Formel IIf)

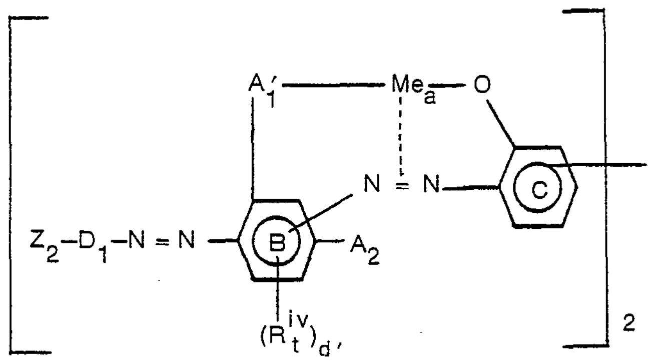

II f

worin $R_t^{iv}$

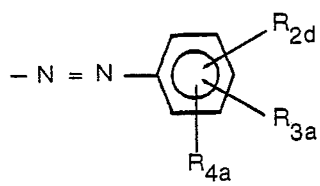

oder

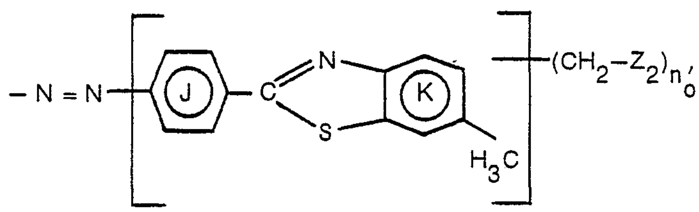

,

worin

$R_{2d}$ Wasserstoff, —OH, $—CH_3$ oder $—OCH_3$ bedeutet,
jeder der Ringe C unabhängig voneinander in ortho-Stellung zu den Azobrücken durch $CH_3$ und/oder $OCH_3$ substituiert sein kann und die Gruppe $X_a$ in meta- oder para-Stellung zu der Azobrücke des Ringes C gebunden ist und jede Azobrücke im Ring B in ortho-Stellung zu $A_1'$ oder $A_2$ gebunden ist,

$X_a$ steht für $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ gemäss Anspruch 1 oder für die Gruppen $X_2'—CH_2—$, $X_2''$ $—(CH_2)_2—$, $X_2'''$ $—(CH_2)_3—$,

$X_2^{iv}$ $-(CH_2)_4-$, $X'_{14}$ 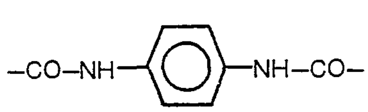 ,

$X'_{15}$ 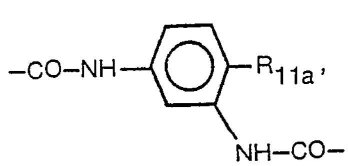 , $X'_{19}$ $-NH-CO-CH_2-CH_2-CO-NH-$,

$X''_{19}$ $-NH-CO-(CH_2)_4-CO-NH-$,

$X'''_{19}$ 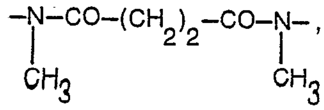

$X'_{20}$ $-NH-CO-CH=CH-CO-NH-$,

$X''_{20}$ 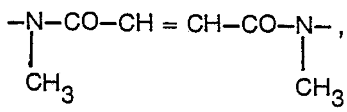

$X'_{21}$ 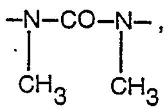

$X'_{32}$ 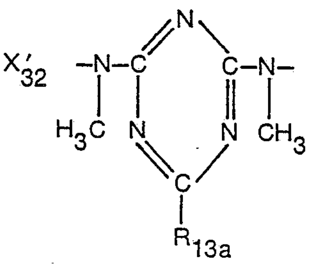

$X''_{32}$ 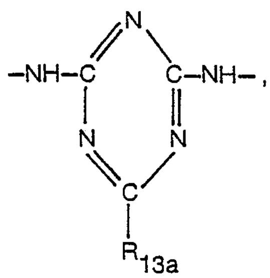

$X'_{34}$ $-CO-NH-(CH_2)_2-NH-CO-$,

$X''_{34}$ $-CO-NH-(CH_2)_3-NH-CO-$,

$X'''_{34}$ $-CO-NH-(CH_2)_4-NH-CO-$,

$X^{iv}_{34}$ 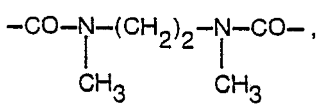

$X^{v}_{34}$ 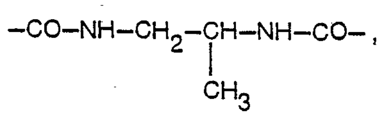

$X^{vi}_{34}$ 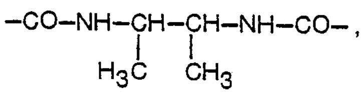

$X''_{14}$ 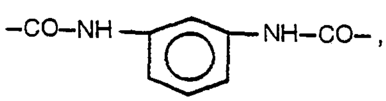

$X''_{15}$ 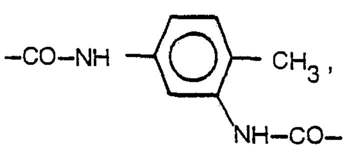

$X'''_{15}$ 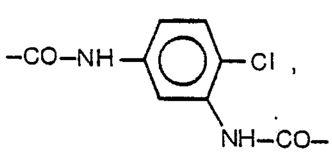

$X_{15}^{iv}$ 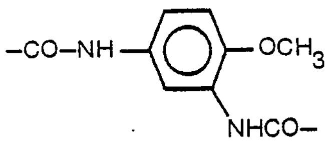 ,

$X_{32}'''$ 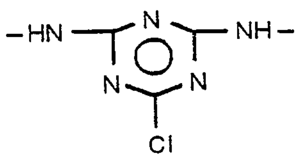 ,

$X_{32}^{iv}$ 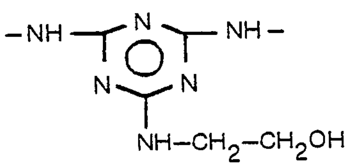 ,

$X_{32}^{v}$ 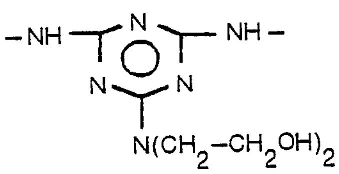 ,

$X_{32}^{vi}$ 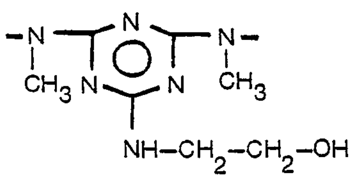 ,

$X_{33}'$ 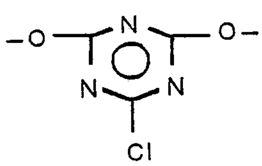 ,

$X_{33}''$ 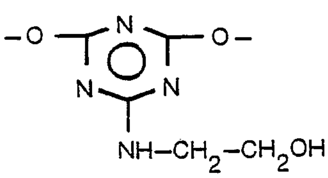 ,

$X_{33}'''$ 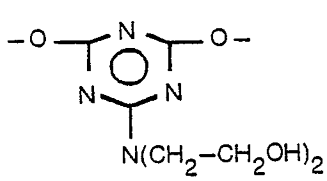 ,

$X_{35}'$ $-CO-NH-(CH_2)_2-O-(CH_2)_2-NH-CO-$ ,

$X''_{35}$ $-CO-NH-(CH_2)_2-O-(CH_2)_2-O-(CH_2)_2-NH-CO-$,

$X'_{36}$ $-CO-NH-(CH_2)_2-NH-(CH_2)_2-NH-CO-$,

$X''_{36}$ $-CO-NH-(CH_2)_2-N(CH_3)-(CH_2)_2-NH-CO-$,

$X'_{48}$ $-CH_2-CO-N(CH_3)-$,

$X'_{50}$ $-O-CH_2-CH_2-O-$,

$X''_{50}$ $-O-(CH_2)-O-$,

$X'_{51}$ $-CH=CH-CO-NH-$,

$X''_{51}$ $-CH=CH-CO-N(CH_3)-$,

$X'_{52}$ $-CO-N(CH_3)-CH_2-CH_2-NH-CO-$,

$X'_{53}$ $-CH_2-CH_2-CO-NH-$,

$X''_{53}$ $-CH_2-CH_2-CO-N(CH_3)-$,

$Me_a$ steht für Kupfer, Kobalt, Eisen oder Chrom,
worin
$R_{11a}$ Wasserstoff, $-Cl$, $-CH_3$ oder $-OCH_3$;
$R_{13a}$ $-Cl$, $-NH-CH_2-CH_2-OH$ oder $-N(CH_2-CH_2-OH)_2$
und worin die übrigen Symbole die in Anspruch 2 angegebenen Bedeutungen besitzen.

4. Azoverbindung gemäss Anspruch 3 der Formel IIg) in der 1:1-Metallkomplexform

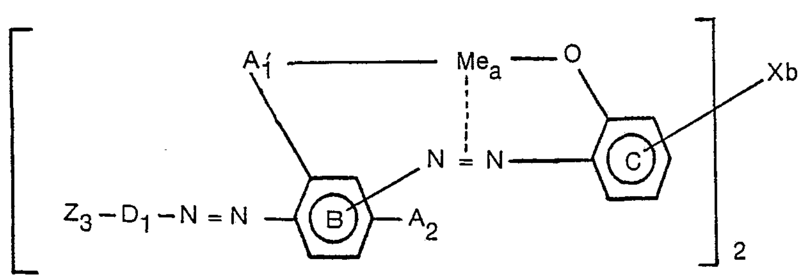

IIg

worin

Xb $X_1$, $X_{11}$, $X_{12}$, $X_{17}$, $X_{27}$, $X_{49}'$ gemäss Anspruch 1, $X_2^{II}$, $X_{14}^{I}$, $X_{19}^{I}$, $X_{19}^{II}$, $X_{19}^{III}$, $X_{20}^{I}$, $X_{20}^{II}$, $X_{32}^{I}$, $X_{34}^{I}$, $X_{34}^{IV}$, $X_{34}^{V}$ oder $X_{34}^{VI}$ gemäss Anspruch 3,

$Z_3$ 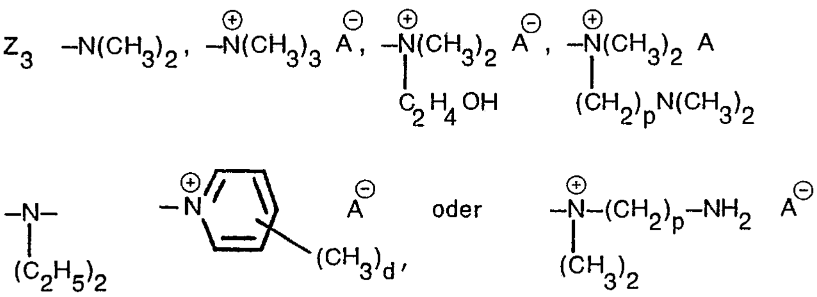

bedeuten,

worin

—$D_1$—$Z_3$ eine der Bedeutungen von —$D_1$—$Z_2$ gemäss Anspruch 2 besitzt, mit der Ausnahme, dass $Z_2$ durch $Z_3$ ersetzt ist, —$A_1'$ für —NH— oder —O— steht, mit der Massgabe, das im Ring C die Gruppe $X_b$ in meta- oder para-Stellung zur Azobrücke steht und $Me_a$ in Anspruch 3 definiert ist.

5. Azoverbindung gemäss Anspruch 1 der Formel IIn

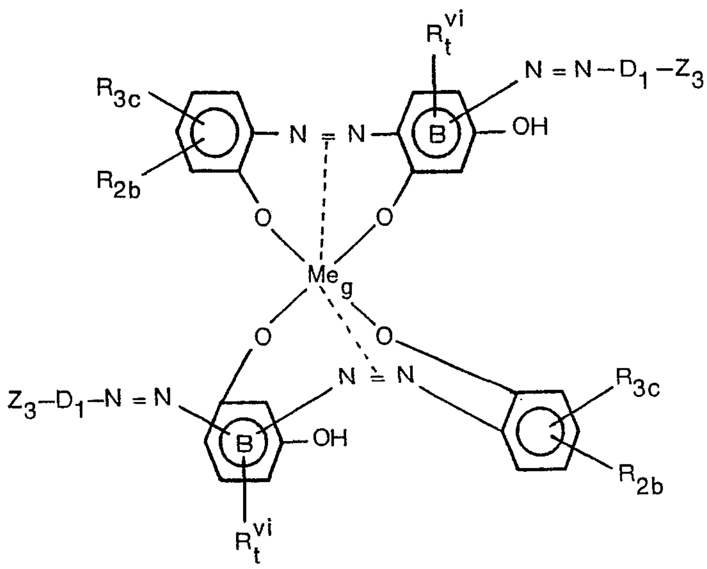

IIn

worin

$R_{3c}$ Wasserstoff, —$NO_2$, —$CH_3$, —$OCH_3$, —$SO_2$—$NH_2$, —$SO_2NH(CH_2)_3N(CH_3)_2$, —$SO_2NHC_2H_4OH$, —NH—CO—$(CH_2)_p$—$Z_3$, —$CH_2$—$Z_3$, —N=N—$K_1'$,

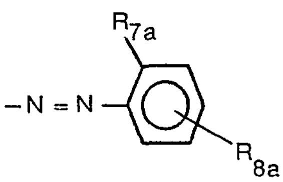 oder 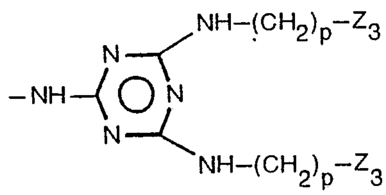 ;

—$SO_2NH(CH_2)_pN(CH_3)_2$ und

$R_t^{vi}$ Wasserstoff bedeuten und falls die Gruppe $Z_3$—$D_1$—N=N— für einen Rest

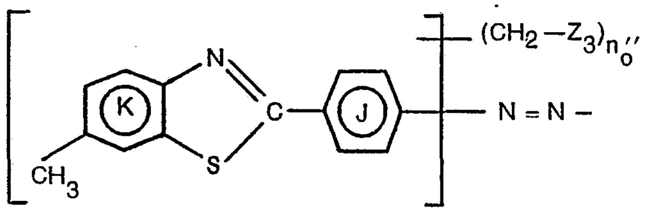

steht,

dann $R_t^{vi}$ die zusätzliche Bedeutung von

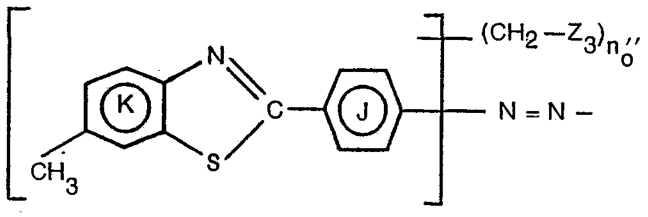

hat,

$R_{2b}$ Wasserstoff, $NO_2$ oder $SO_2NH_2$, $n_o''$ 1.3 bis 1.5 bedeutet und worin die Azobrücke im Ring B in ortho-Stellung zu —O— oder —OH steht.

6. Sulfonsäuregruppenfreie Azoverbindungen in der metallfreien Form, welche mindestens 1,3 wasserlöslich machende basische Gruppen enthalten der Formel

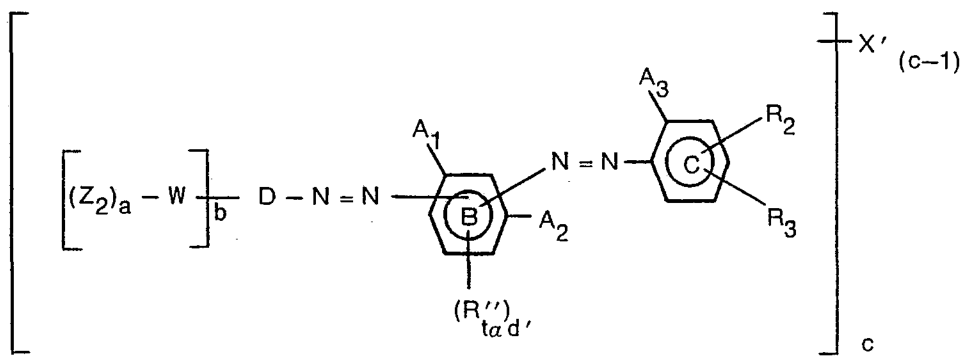

II'

worin

$A_1$ —OH oder —$NH_2$ und

$A_3$ —OH oder —$NH_2$ bedeuten, und die übrigen Symbole die im Anspruch 1 angagebenen Bedeutungen besitzen.

7. Azoverbindung gemäss Anspruch 6 der Formel IIa

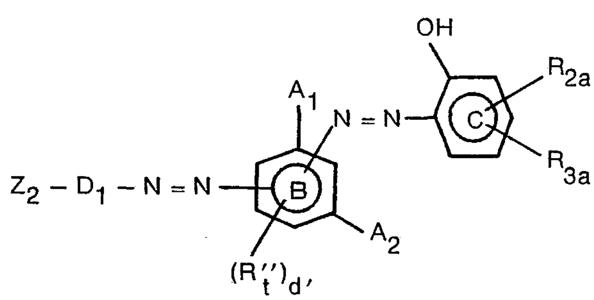

IIa

worin die Symbole die im Anspruch 2 angegebenen Bedeutungen besitzen.

8. Verfahren zum Färben von Substraten, dadurch gekennzeichnet, dass man hierzu eine Verbindung der Formel II' gemäss Anspruch 1 verwendet.

9. Verfahren zur Herstellung von Azoverbindungen der Formel II' gemäss Anspruch 1, dadurch gekennzeichnet, das man ein diazotiertes Amin der Formel $\gamma$)

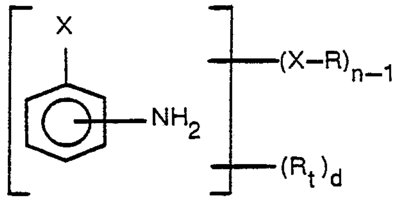

γ

mit einer Kupplungskomponente der Formel

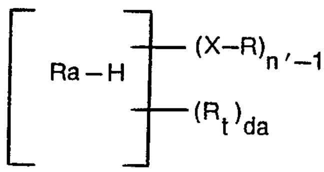

δ

worin $R_a$ eine Gruppe der Formel

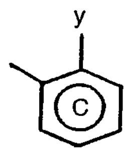

Ia,

x —OH oder —$NH_2$ und
y Wasserstoff, —OH oder —$NH_2$ bedeuten,

und worin
x und y eine Gruppe —NH—Me—O—, —O—Me—O— oder —NH—Me—NH— bilden,

worin
Me ein Metallatom, das entweder einen 1:1- oder 1:2-Metallkomplex oder beides einen 1:1- und 1:2-Metallkomplex bilden kann,
n 1 oder 2,
d 0, 1 oder 2,
n′ und da eine der Bedeutungen von n haben und d′ die im Anspruch 1 angegebene Bedeutung hat,

mit der Massgabe, dass n+n′ nicht grösser als 2 und d und $d_a$ nicht grösser als 2 ist,

worin
$R_t$ eine der Bedeutungen von $R_{ta}''$ hat,
R eine Gruppe der Formel

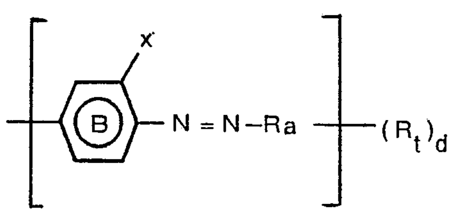

Ih

worin
x, $R_a$, $R_t$ und d′ die zuvor genannten Bedeutungen besitzen und
x für x′ steht,

und im Falle der Metallkomplexform, die Verbindungen mit einem metallabgebenden Mittel das 1:1- oder 1:2-Metallkomplexe oder 1:1- und 1:2-Metallkomplexe bilden kann, metallisiert.

**Revendications**

1. Un composé azoïque exempt de groupe sulfo, sous forme de complexe métallifère 1:1 ou de complexe métallifère 1:2 ayant en moyenne au moins 1,3 groupe basique hydrosolubilisant, de formule II′

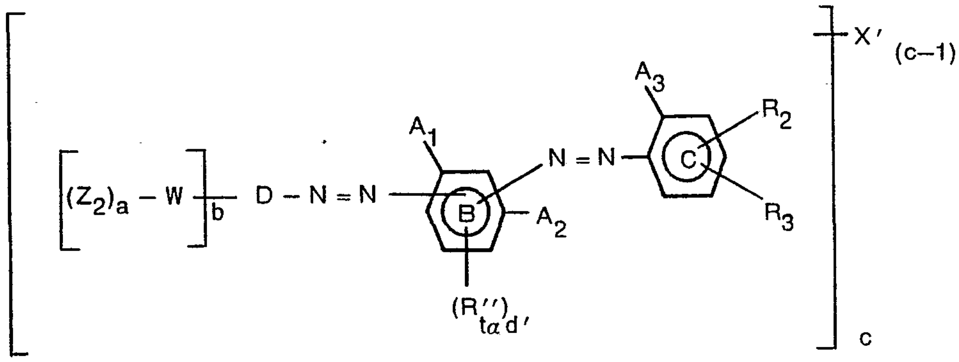

II′

où

c signifie 1 ou 2;

d′ signifie 0 ou 1;

$A_1$ et $A_3$ forment le groupe —NH—Me—O— ou —O—Me—O— ou —NH—Me—NH— où Me est un métal capable de former soit un complexe métallifère 1:1, soit un complexe métallifère 1:2, ou bien capable de former un complexe métallifère 1:1 et un complexe métallifère 1:2,

$A_2$ est —OH ou —$NH_2$;

D est une composante de diazotation usuelle

W est une liaison directe ou bien Wa où est —$(CH_2)_s$—, —NHCO$(\overset{*}{C}H_2)_s$—, —CONH—$(\overset{*}{C}H_2)_s$— ou —$SO_2$—NH—$(CH_2)_s$—, dans lesquels l'atome de carbone marqué d'un astérisque est fixé à l'atome d'azote du groupe $Z_2$ défini ci-après et s signifie 1, 2, 3, 4, 5 ou 6;

X′ est l'un des groupes $X_1$ à $X_{53}$ ci-dessous;

$X_1$ est une liaison directe,

$X_2$ un groupe alkylène à chaîne linéaire ou ramifié ayant de 1 à 4 atomes de carbone,

$X_3$ —CO—

$X_1$ est une liaison directe,

$X_2$ un groupe alkylène à chaîne linéaire ou ramifié ayant de 1 à 4 atomes de carbone,

$X_3$ –CO–

$X_4$ 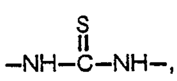, $X_5$ –S–, $X_6$ –O–, $X_7$ –CH=CH–, $X_8$ –S–S–,

$X_9$ –$SO_2$–, $X_{10}$ –NH–, $X_{11}$ –NH–CO–, $X_{12}$ 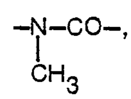, $X_{13}$ 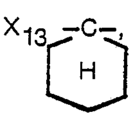

$X_{14}$ 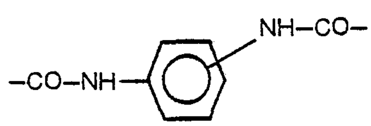, $X_{15}$ 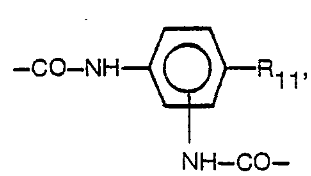

$X_{16}$ 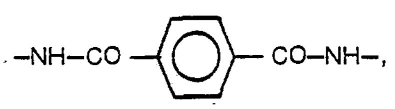, $X_{17}$ –$SO_2$–NH–, $X_{18}$ 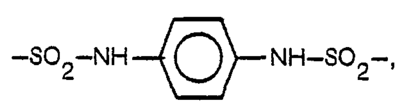

$X_{19}$ 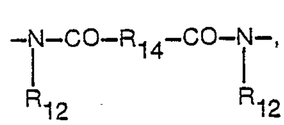, $X_{20}$ 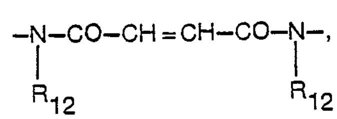, $X_{21}$ 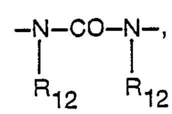

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 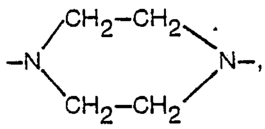

$X_{26}$ 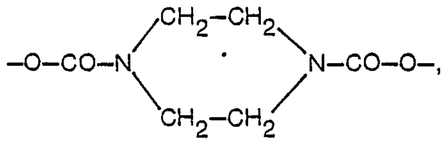 $X_{27}$ 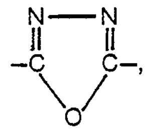 $X_{28}$ 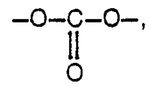

$X_{29}$ 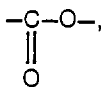 $X_{30}$ 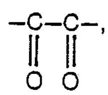 $X_{31}$ $-O-(CH_2)_q-O-$, $X_{32}$ 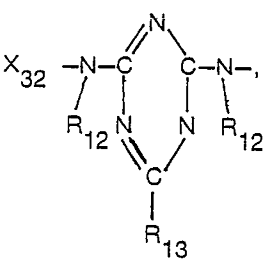

$X_{33}$ 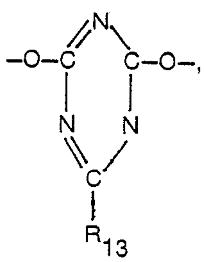 $X_{34}$ 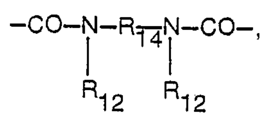

$X_{35}$ 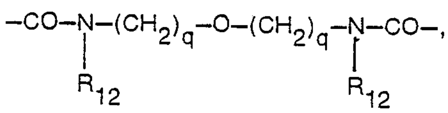

$X_{36}$ 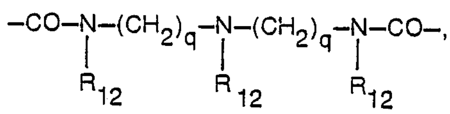

$X_{37}$ 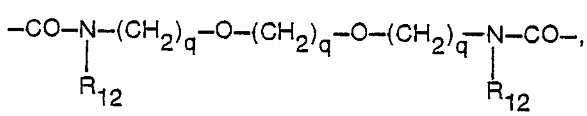 $X_{38}$ 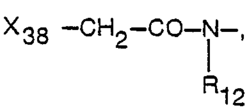

$X_{39}$ 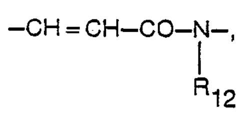 $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-CS-NH-CH_2-$, $X_{47}$ 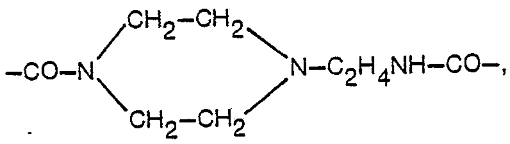

$X_{48}$ 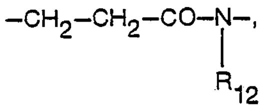

$X_{49}$ $-NH-CO-NH-$,

$X_{50}$ $-O-(CH_2)_q-O-$,

$X_{51}$ 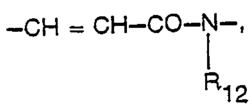

$X_{52}$ 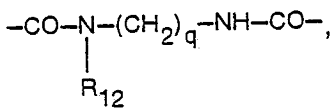

$X_{53}$ 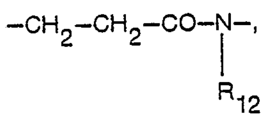

où

$R_{11}$ est un halogène, alkyle en $C_1$—$C_4$ ou alcoxy en $C_1$—$C_4$,
$R_{12}$ est l'hydrogène ou alkyle en $C_1$—$C_4$;
$R_{13}$ est un halogène, —NH—$CH_2$—$CH_2$—OH ou —$N(CH_2—CH_2OH)_2$;
$R_{14}$ est un groupe alkylène en $C_1$—$C_4$ à chaîne linéaire ou ramifiée et q signifie 1, 2, 3 ou 4
a signifie 1 ou 2;
b est un nombre entre 1 et 2;
$R''_{ta}$ est un groupe $\alpha\alpha$ ou $\alpha\beta$

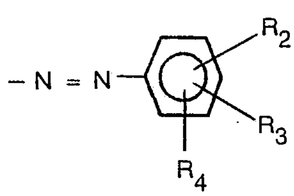

($\alpha\alpha$)

ou

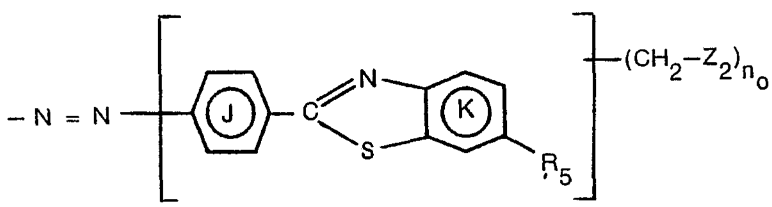

($\alpha\beta$)

où

$R_2$ est l'hydrogène,

$—NO_2$, $SO_2—NH_2$, $SO_2NH—R_1$, 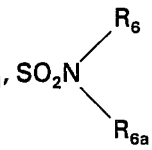

$SO_2—NH—(CH_2)_p—Z_2$, alkyle en $C_1—C_4$ ou alcoxy en $C_1—C_4$,
où

p signifie 1, 2 ou 3,

$R_1$ est alkyle en $C_1—C_4$, $—C_2H_4OH$ ou $-(CH_2)_p—N—(R_{1a})_2$ où $R_{1a}$ est propyle ou butyle,

$R_6$ est alkyle en $C_1—C_4$, $—C_2H_4OH$ ou $(CH_2)_p—N—(R_6')_2$ où $R_6'$ est alkyle en $C_1—C_4$ et $R_{6a}$ est alkyle en $C_1—C_4$, $—C_2H_4OH$, $—(CH_2)_p—N—(R_6')_2$ ou $C_2H_4O—R_6'$;

$R_3$ est l'hydrogène,

$NO_2$, $—SO_2NH_2$, $—SO_2NH—R_1$, — 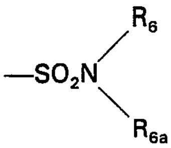

alkyle en $C_1—C_4$, alcoxy en $C_1—C_4$,

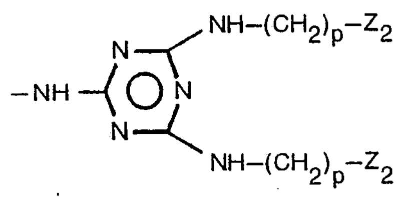

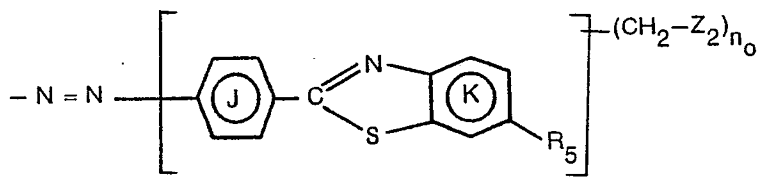

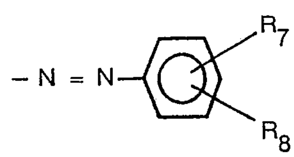

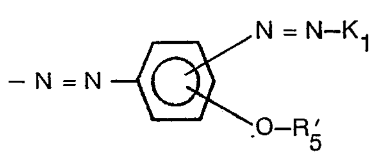 , $—N=N—K_1$ ,

$—CO—NH—(CH_2)_p—Z_2$, $—NH—CO—(CH_2)_p—N—Z_2$, $—SO_2—NH—(CH_2)_p—Z_2$ ou $CH_2—Z_2$,
où

$R_5$ est l'hydrogène, alkyle en $C_1—C_4$ ou alcoxy en $C_1—C_4$;

$R_5'$ est alkyle en $C_1—C_4$;

$n_o$ est un nombre entre 1 et 2 inclus et le groupe $-(CH_2—Z_2)$ est fixé à l'un quelconque des groupes phényle J ou K

$R_7$ est l'hydrogène, —OH, alkyle en $C_1—C_4$, alcoxy en $C_1—C_4$, $—NH—CO—NH_2$ ou $—NH—CO—CH_3$;

$R_8$ est l'hydrogène, $—NH—CO—(CH_2)_p—Z_2$, ou

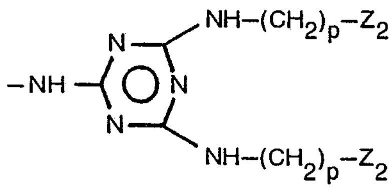

$R_4$ est l'hydrogène, $—NO_2$, alkyle en $C_1—C_4$ ou alcoxy en $C_1—C_4$; $K_1$ est un groupe de formule

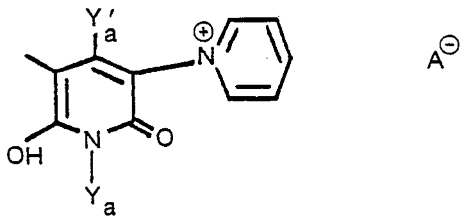

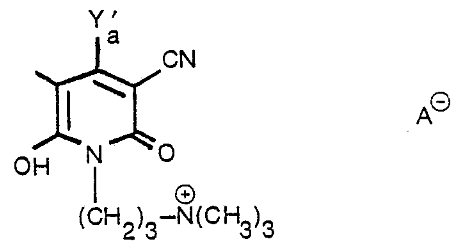

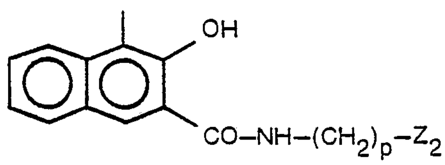

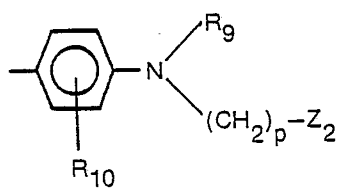

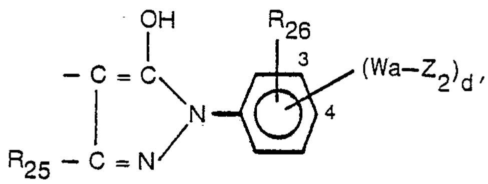

,

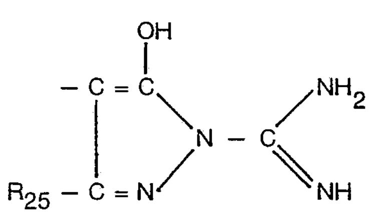

;

$R_{124}-CO-CH-CO-R_{125}$;

$R_{25}$ est alkyle en $C_1-C_4$, $-COO-(R_{25a})$ ou $-COOH$ où $R_{25a}$ est alkyle en $C_1-C_4$;

$R_{26}$ est l'hydrogène, un halogène, alkyle en $C_1-C_4$ ou alcoxy en $C_1-C_4$;

$R_{124}$ est alkyle en $C_1-C_4$ ou $-(CH_2)_p-Z_2$;

$Y_a$ est l'hydrogène, alkyle en $C_1-C_4$, $-C_2H_4OH$ ou $(CH_2)_p-Z_2$;

$Y'_a$ est alkyle en $C_1-C_4$, de préférence $-CH_3$;

$R_9$ est alkyle en $C_1-C_4$ ou $-(CH_2)_p-Z_2$;

$R_{10}$ est l'hydrogène, alkyle en $C_1-C_4$, alcoxy en $C_1-C_4$, $-NH-CO-CH_3$ ou $-NH-CO-NH_2$;

$R_{125}$ est $-(CH_2)_p-Z_2$,

$-NH-(CH_2)_p-Z_2$ ou 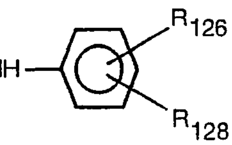

où

$R_{126}$ est l'hydrogène, $-OH$, alcoxy en $C_1-C_4$, $-NH-CO-(CH_2)_p-Z_2$, $-CO-NH-(CH_2)_p-Z_2$, $-SO_2-NH-(CH_2)_p-Z_2$, $-(CH_2)_p-Z_2$ ou

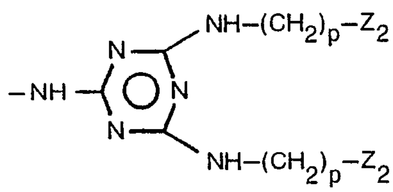

et

$R_{128}$ est l'hydrogène ou $-(CH_2)_p-Z_2$;

$Z_2$ est un groupe de formule

$-NH_2$, $-N(R_0)_2$, $-\overset{\oplus}{N}(R_0)_3$ $A^{\ominus}$, 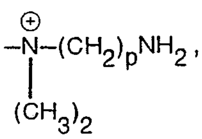

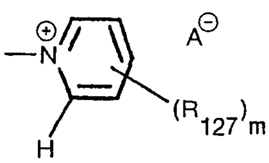 ou 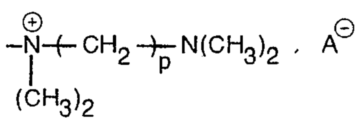

où chaque $R_0$ indépendamment est méthyle, éthyle, $\beta$-hydroxyéthyle, benzyle,

$-CH_2COCH_3$ ou $-CH_2CO-$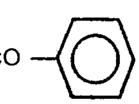

à condition que pas plus d'un benzyle,

$-CH_2COCH_3$ ou $-CH_2CO-$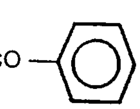

soit fixé à l'atome d'azote,

$R_{127}$ est méthyle ou éthyle,

m signifie 0, 1 ou 2

et

$A^{\ominus}$ est an anion non chromophore, avec les conditions que

i) chacun des ponts azo dans le cycle B soit en ortho de $A_1$ ou $A_2$ ci-dessus,

ii) lorsque c signifie 2, X' soit fixé à $R_{ta}''$ lorsque $R_{ta}''$ est le groupe $\alpha\alpha$ ou au cycle C;

iii) lorsque d'signifie 1 le cycle C puisse être substitué en plus par un ou plusieurs halogènes, hydroxy, alkyle en $C_1$—$C_4$, alcoxy en $C_1$—$C_4$ et —NH—CO—$NH_2$.

2. Un composé azoïque selon la revendication 1 de formule IId (sous forme de complexe métallifère 1:1)

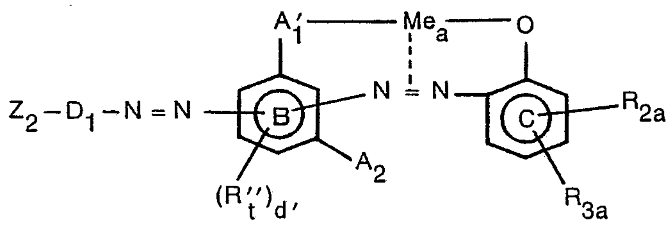

IId

ou de formule IIj (sous forme de complexe métallifère 1:2)

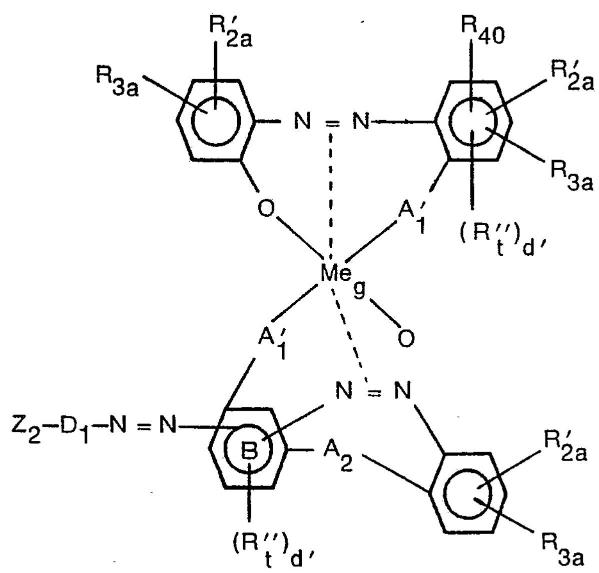

II j

ou de formule IIk (sous forme de complexe métallifère 1:2)

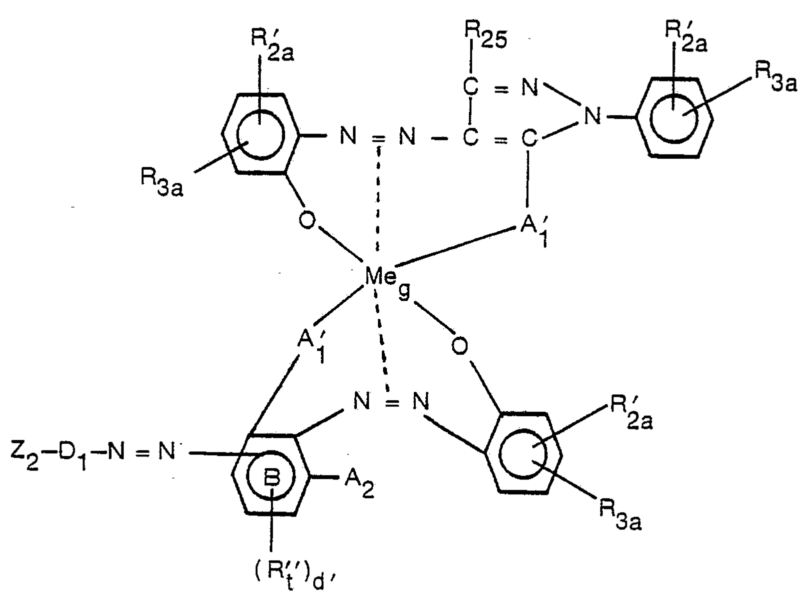

II k

ou de formule III (sous forme de complexe métallifère 1:2)

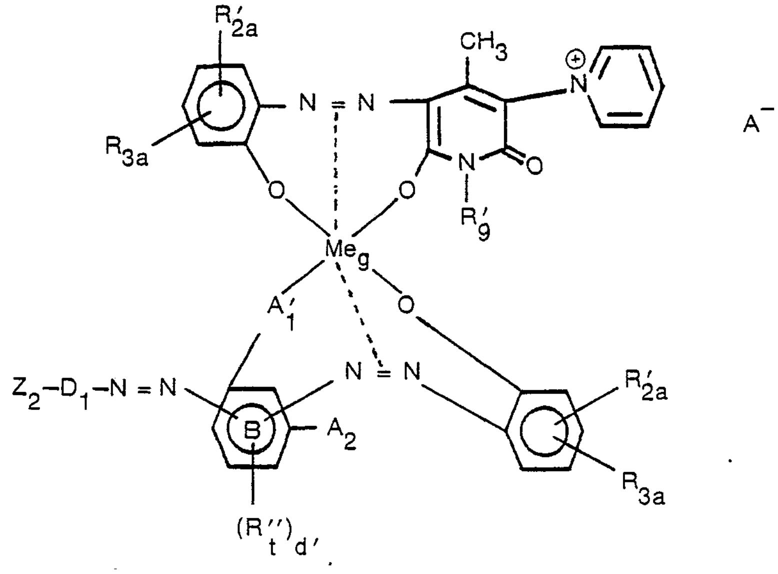

III

ou de formule IIm (sous forme de complexe métallifère 1:2)

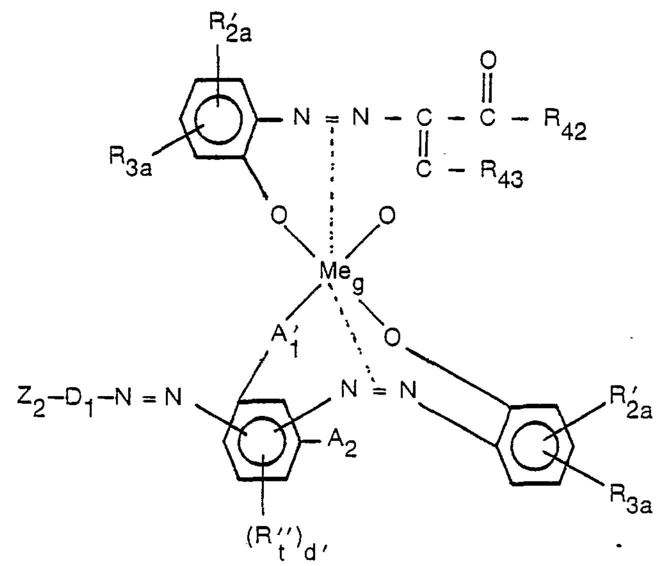

IIm

dans lesquelles $R_t''$ est 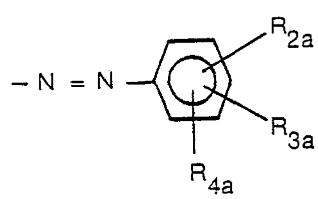

ou 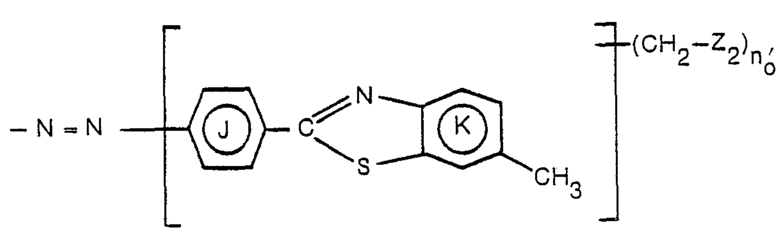

ou chaque $R_{2a}$ indépendamment est l'hydrogène, $—NO_2$, $—SO_2NH_2$, $—SO_2—NH—CH_3$, $—SO_2—N(CH_3)_2$,

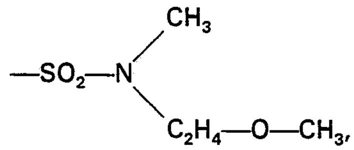

$—SO_2NH—C_2H_4OH$, $—SO_2—N(C_2H_4OH)_2$, $—SO_2—N[C_2H_4—N(CH_3)_2]_2$ ou $—SO_2—NH—(CH_2)_3—Z_2$; chaque

$R_{3a}$, indépendamment, est l'hydrogène, $—NO_2$, $—SO_2NH_2$, $—SO_2—NH—CH_3$, $—SO_2—N(CH_3)_2$,

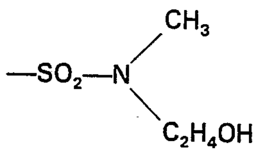

$—SO_2—NH—C_2H_4OH$, $—SO_2—N(C_2H_4OH)_2$, $—NH—CO—(CH_2)_p—Z_2$, $—CO—NH—(CH_2)_p—Z_2$, $—CH_3$, $—OCH_3$, $—SO_2—NH—(CH_2)_p—Z_2$,

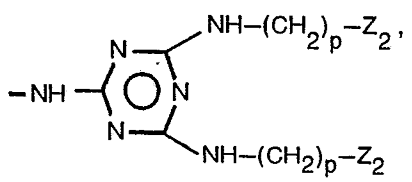

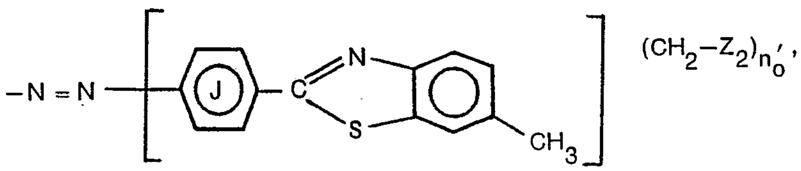

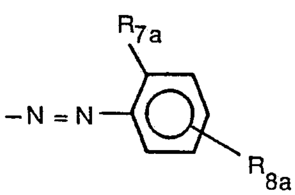

,

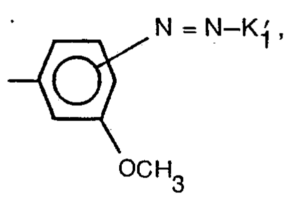

, $—N=N—K_1'$ ou $—CH_2—Z_2$,

dans lesquelles

$R_{7a}$ est l'hydrogène, $—OH$, $—CH_3$, $—OCH_3$, $—NHCOCH_3$ ou $—NHCONH_2$;

$R_{8a}$ est l'hydrogène $—NHCO—(CH_2)_p—Z_2$ ou

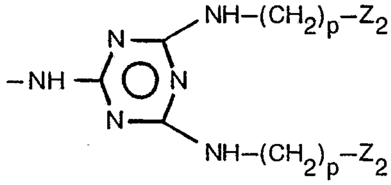

$n_o'$ est un nombre moyen entre 1,0 et 1,7

$K'_1$ est

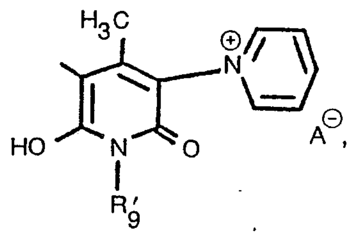

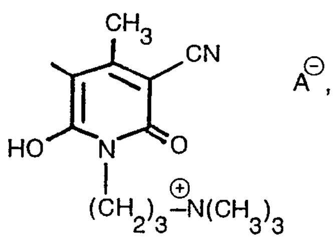

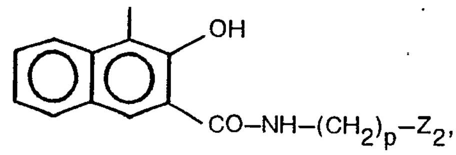

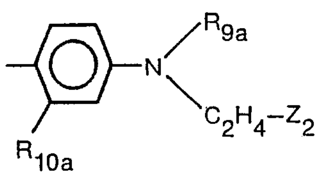

ou

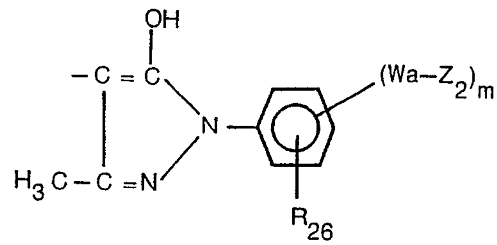

dans lesquelles

$R_{9a}$ est $-CH_3$ ou $C_2H_5$,

$R_{10a}$ est l'hydrogène, $-CH_3$, $-OCH_3$, $-NH-CO-CH_3$ ou $-NH-CO-NH_2$; et

$R'_9$ est l'hydrogène, $-CH_3$, $-C_2H_5$, n-$C_3-H_7$, n-$C_4H_9$, i-$C_3-H_7$, i-$C_4H_9$, $-C_2H_4OH$ ou $-(CH_2)_p-Z_2$;

$R_{4a}$ est l'hydrogène, $-NO_2$, $-CH_3$ ou $-OCH_3$;

$D_1-Z_2$

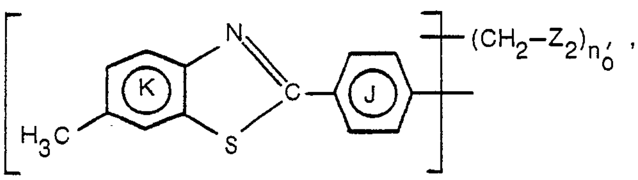

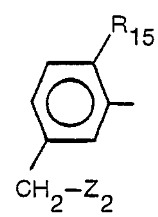

,

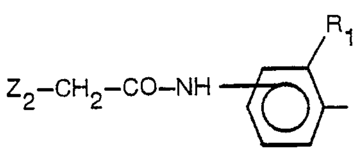

,

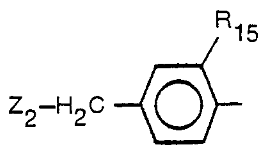

,

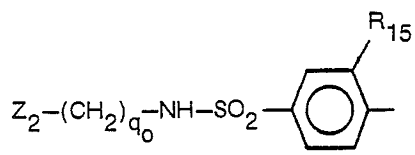

,

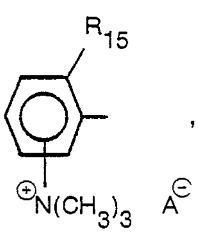

,

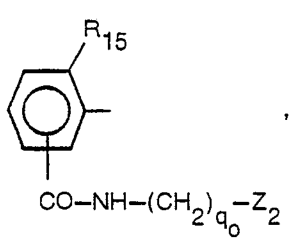

,

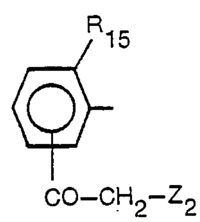

,

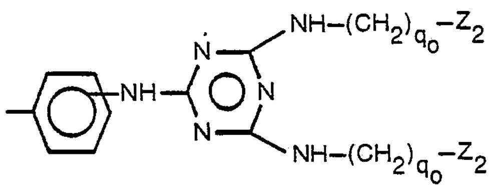, 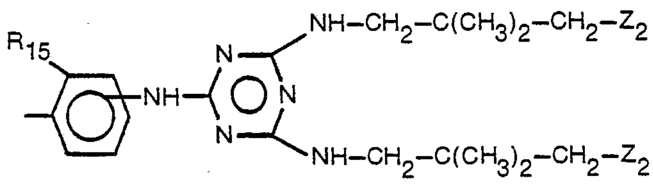,

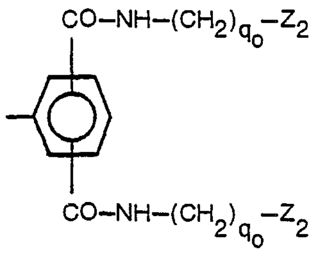, 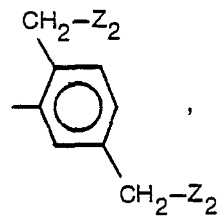, 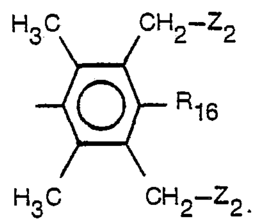, 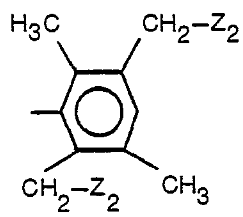,

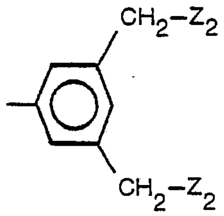, 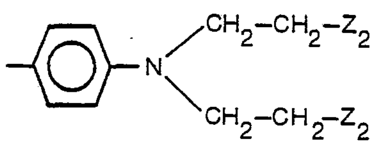, 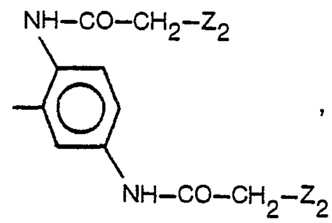,

ou 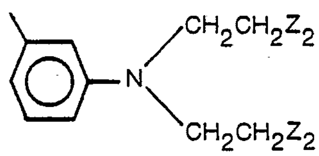

$R_{15}$ est l'hydrogène, —OH, —$OCH_3$, —$CH_3$ ou Cl,

$R_{16}$ est l'hydrogène ou —$CH_3$;

$q_0$ signifie 2 à 5 de préférence 2 ou 3;

et tous les autres symboles sont comme définis ci-dessus.

$Me_a$ est le cuivre, le cobalt ou le chrome,

$R_{40}$ est l'hydrogène ou $Z_2$—$D_1$—N=N—,

Meg est le cobalt, le fer ou le chrome

$A_1'$ est —NH— ou —O—,

$R_{42}$ est —$(CH_2)_p$—$Z_2$, —NH—$(CH_2)_p$—$Z_2$ ou

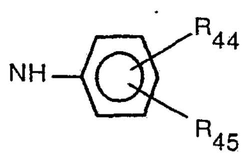 ;

$R_{43}$ est —$CH_3$, $C_2H_5$ ou $(CH_2)_p$—$Z_2$;

$R_{44}$ est l'hydrogène, —OH, alcoxy en $C_1$—$C_4$, —NH—CO—$(CH_2)_p$—$Z_2$, —CO—NH—$(CH_2)_p$—$Z_2$, —$SO_2$—NH—$(CH_2)_p$—$Z_2$,

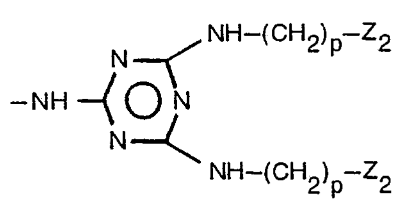

ou —$(CH_2)_p$—$Z_2$;

$R_{45}$ est l'hydrogène ou —$(CH_2)_p$—$Z_2$;

$R_{2a}'$ a les significations de $R_{2a}$ et peut aussi être —OH ou —$NH_2$ et;

$A_2$ est OH ou $NH_2$.

3. Un composé azoïque selon la revendication 1 de formule IIf

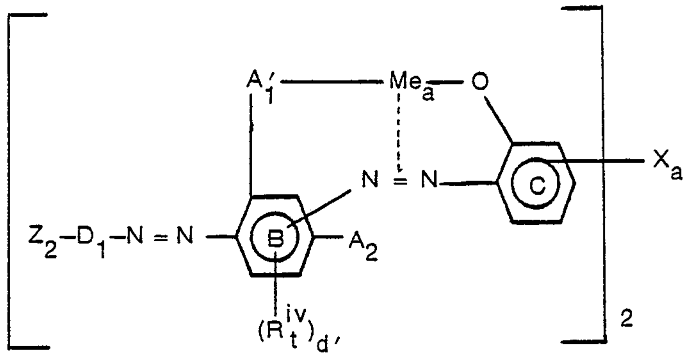

II f

dans laquelle $R_t^{iv}$ est

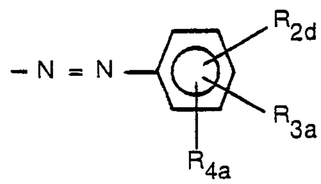

ou 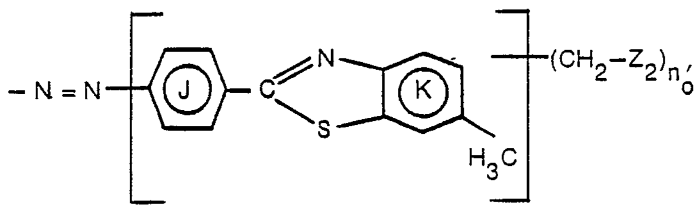

,

où $R_{2d}$ est l'hydrogène, $—OH$, $—CH_3$ ou $—OCH_3$;
et chaque cycle C indépendamment peut être substitué en position ortho de son pont azo par $—CH_3$ et/ou $—OCH_3$ et le groupe $X_a$ est en position méta ou para du pont azo du cycle C et chaque pont azo, dans le cycle B est en ortho de $A_1'$ ou $A_2$ $X_a$ est $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ définis à la revendication 1 ou les groupes suivants $X_2'$ $—CH_2—$, $X_2''$ $—(CH_2)_2—$, $X_2'''$ $—(CH_2)_3—$,

$X_2^{iv}$ $-(CH_2)_4-$, $X_{14}'$ 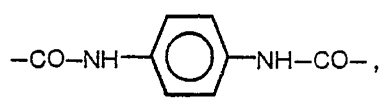

$X_{15}'$ 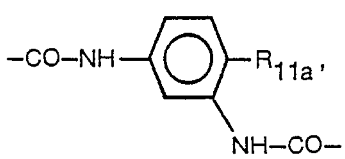 $X_{19}'$ $-NH-CO-CH_2-CH_2-CO-NH-$,

$X_{19}''$ $-NH-CO-(CH_2)_4-CO-NH-$, $X_{19}'''$ 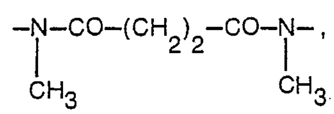

$X_{20}'$ $-NH-CO-CH=CH-CO-NH-$, $X_{20}''$ 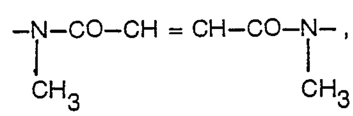

$X'_{21}$ 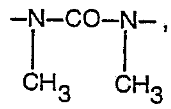 , $X'_{32}$ 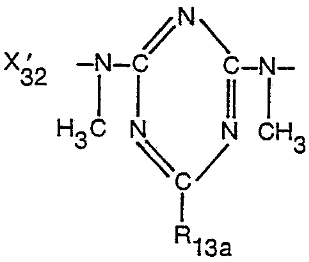

$X''_{32}$ 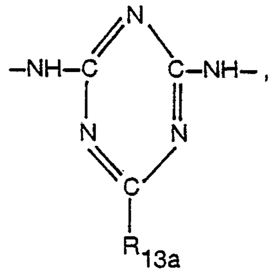 , $X'_{34}$ $-CO-NH-(CH_2)_2-NH-CO-$ ,

$X''_{34}$ $-CO-NH-(CH_2)_3-NH-CO-$ , $X'''_{34}$ $-CO-NH-(CH_2)_4-NH-CO-$ ,

$X^{iv}_{34}$ 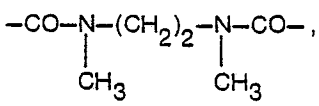 , $X^{v}_{34}$ 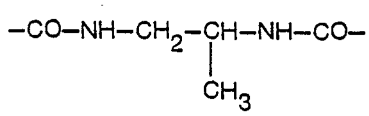 ,

$X^{vi}_{34}$ 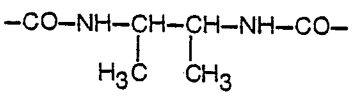 ,

$X''_{14}$ 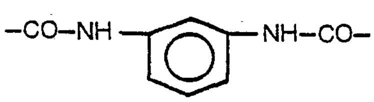 ,

$X''_{15}$ 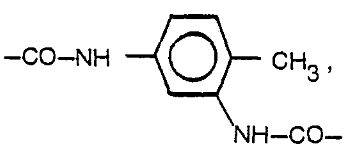 ,

$X'''_{15}$ 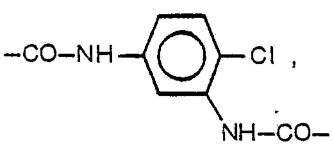 ,

$X^{iv}_{15}$ 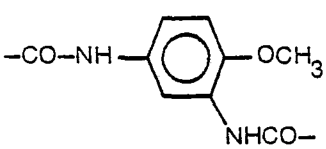 ,

$X'''_{32}$ 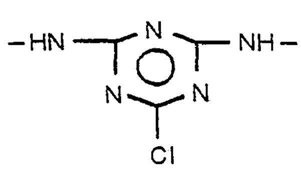 ,

$X_{32}^{iv}$ 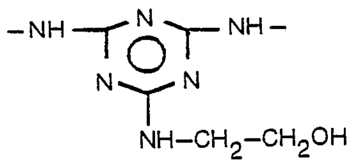 ,

$X_{32}^{v}$ 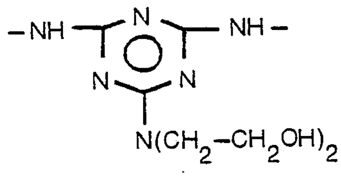 ,

$X_{32}^{vi}$ 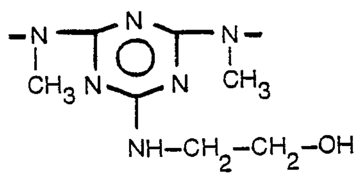 ,

$X'_{33}$ 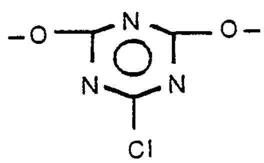 ,

$X''_{33}$ 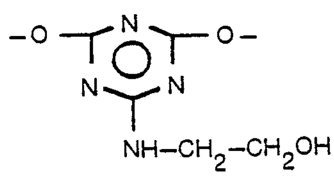 ,

$X'''_{33}$ 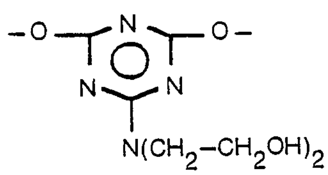 ,

$X'_{35}$ $-CO-NH-(CH_2)_2-O-(CH_2)_2-NH-CO-$,

$X''_{35}$ $-CO-NH-(CH_2)_2-O-(CH_2)_2-O-(CH_2)_2-NH-CO-$,

$X'_{36}$ $-CO-NH-(CH_2)_2-NH-(CH_2)_2-NH-CO-$,

$X''_{36}$ $-CO-NH-(CH_2)_2-N(CH_3)-(CH_2)_2-NH-CO-$,

$X'_{48}$ 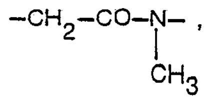

$X'_{50}$ $-O-CH_2-CH_2-O-$ ,

$X''_{50}$ $-O-(CH_2)-O-$ ,

$X'_{51}$ $-CH=CH-CO-NH-$ ,

$X''_{51}$ 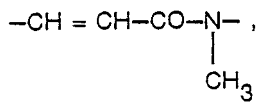

$X'_{52}$ 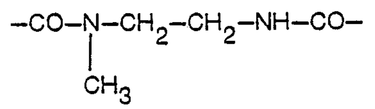

$X'_{53}$ $-CH_2-CH_2-CO-NH-$ ,

$X''_{53}$ 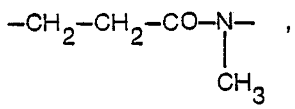

$Me_a$ est le cuivre, le cobalt, le fer ou le chrome où
$R_{11a}$ est l'hydrogène, $-Cl$, $-CH_3$ ou $-OCH_3$;
$R_{13a}$ est $-Cl$, $-NH-CH_2-CH_2-OH$ ou $-N(CH_2-CH_2-OH)_2$ et tous les autres symboles ont été définis à la revendication 2.

4. Un composé azoïque selon la revendication 3 de formule IIg (sous forme de complexe métallifère 1:1)

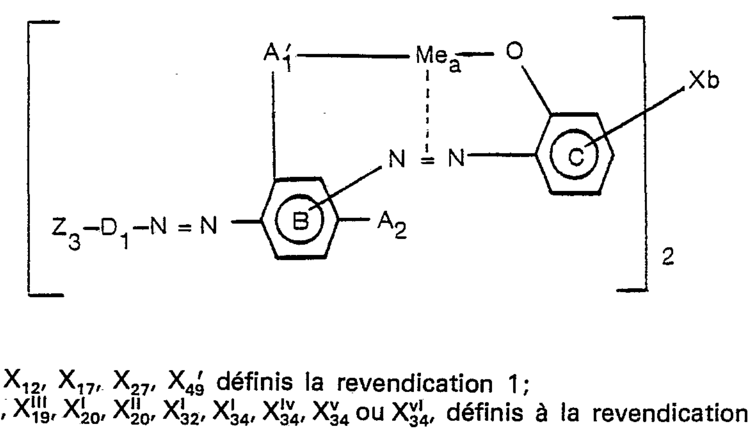

IIg

dans laquelle
Xb est $X_1$, $X_{11}$, $X_{12}$, $X_{17}$, $X_{27}$, $X'_{49}$ définis la revendication 1;
$X_2^{II}$, $X_{14}^{I}$, $X_{19}^{I}$, $X_{19}^{II}$, $X_{19}^{III}$, $X_{20}^{I}$, $X_{20}^{II}$, $X_{32}^{I}$, $X_{34}^{I}$, $X_{34}^{IV}$, $X_{34}^{V}$ ou $X_{34}^{VI}$, définis à la revendication 3;

$Z_3$ est $-N(CH_3)_2$, 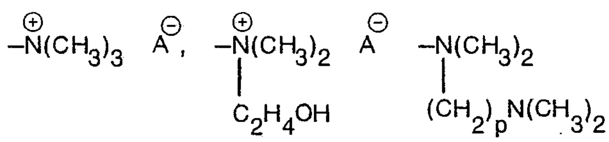

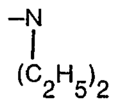

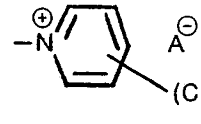

ou

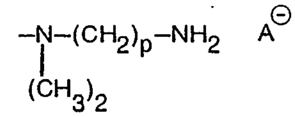

où $—D_1—Z_3$ a les significations de $—D_1—Z_2$ défini à la revendication 2 excepté que $Z_2$ est remplacé par $Z_3$, $A_1'$ est —NH— ou —O—, avec la condition que dans le cycle C le groupe $X_b$ soit en position méta ou para de son pont azo et $Me_a$ est défini à la revendication 3.

5. Un composé azoïque selon la revendication 1 de formule IIn

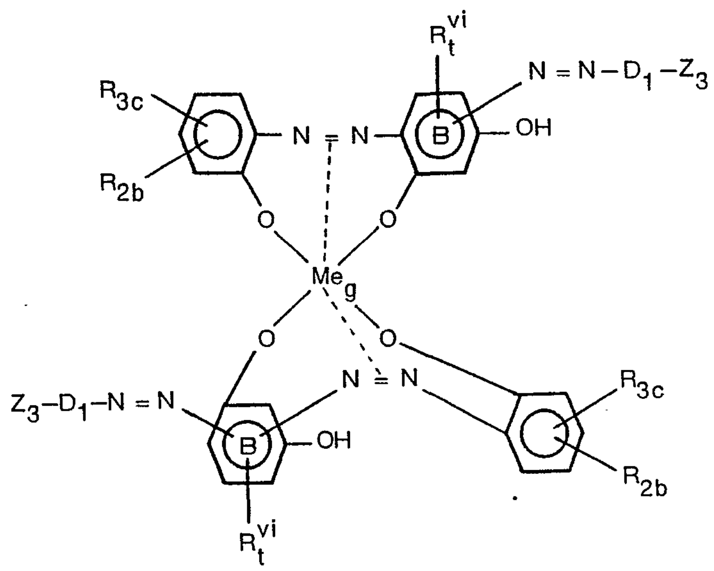

II n

dans laquelle

$R_{3c}$ est l'hydrogène, $—NO_2$, $—CH_3$, $—OCH_3$, $—SO_2—NH_2$, $—SO_2NH(CH_2)_3N(CH_3)_2$, $—SO_2NHC_2H_4OH$, $—NH—CO—(CH_2)_p—Z_3$, $—CH_2—Z_3$, $—N{=}N—K_1'$,

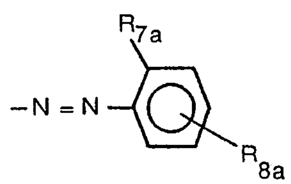

ou

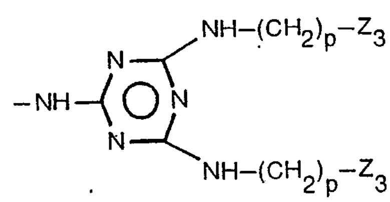

;

$—SO_2NH(CH_2)_pN(CH_3)_2$

et

$R_t^{vi}$ est l'hydrogène et,

quand le groupe $Z_3—D_1—N{=}N—$ a la signification

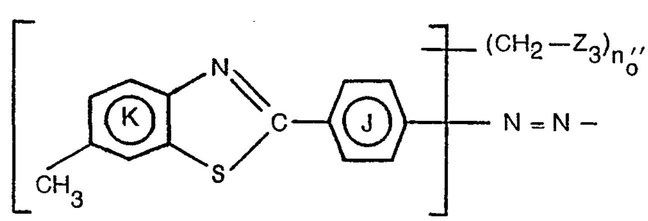

alors

$R_t^{vi}$ a la signification supplémentaire de

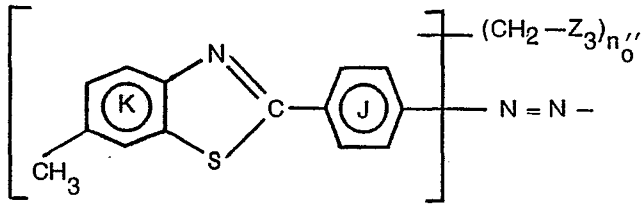

$R_{2b}$ est l'hydrogène, $NO_2$ ou $SO_2NH_2$, $n_o''$ signifie 1,3 à 1,5.

p est défini à la revendication 1 et les autres symboles sont définis à la revendication 3 et où le pont azo est, dans le cycle B en ortho du groupe —O— ou —OH.

6. Un compose azoïque exempt de groupe sulfo, sous forme non métallisée ayant en moyenne au moins 1,3 groupe basique hydrosolubilisant, de formule II'

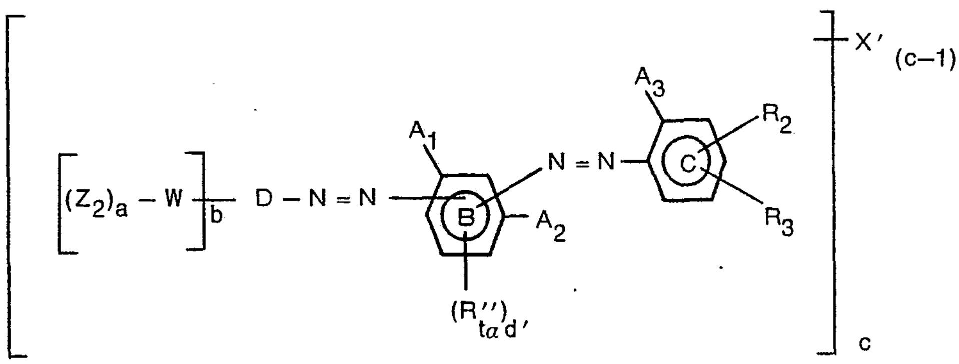

II'

dans laquelle

$A_1$ est —OH ou —$NH_2$;

$A_3$ est —OH ou —$NH_2$

et $A_2$, $R_2$, $R_3$, X', D, W, $Z_2$, $R''_{ta}$, a, b, c et d' ont la signification comme définie à la revendication 1 avec la condition que

i) chacun des ponts azo dans le cycle B soit en ortho de $A_1$ ou $A_2$ ci-dessus;

ii) lorsque c signifie 2, X' soit fixé à $R''_{ta}$ lorsque $R''_{ta}$ est le groupe $\alpha\alpha$ ou au cycle C;

iii) lorsque d' signifie 1 le cycle C puisse être substitué en plus par un ou plusieurs halogènes, hydroxy, alkyle en $C_1$—$C_4$, alcoxy en $C_1$—$C_4$ et —NH—CO—$NH_2$.

7. Un composé azoïque selon la revendication 6 de formule IIa

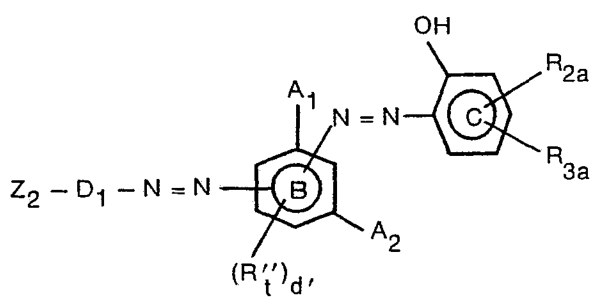

IIa

dans laquelle les symboles sont comme définis à la revendication 2.

8. Une méthode pour la teinture d'un substrat comprenant l'application sur ce substrat d'un composé de formule II' comme défini à la revendication 1.

9. Un procédé pour la production de composés azoïques de formule II' selon la revendication 1, qui comprend la copulation d'une amine diazotée de formule $\gamma$

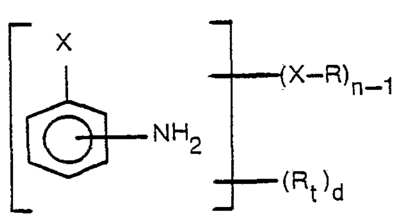

$\gamma$

avec une composante de copulation de formule

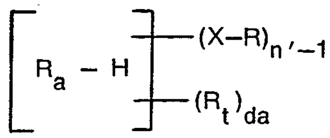

, et

où $R_a$ est un groupe de formule Ia

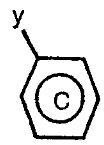

Ia

x est —OH ou $NH_2$ et y est l'hydrogène, —OH ou —$NH_2$;

x et y forment le groupe —NH—Me—O—, —O—Me—O— ou —NH—Me—NH—

où Me est un métal capable de former soit un complexe métallifère 1:1, soit un complexe métallifère 1:2; ou bien capable de former un complexe métallifère 1:1 et un complexe métallifère 1:2

n signifie 1 ou 2;

d signifie 0, 1 ou 2;

n' et da ont les significations de n défini ci-dessus et de d' défini à la revendication 1 avec la condition que n+n' ne soit pas supérieur à 2 et que d et da ne soit pas supérieur à 2

$R_t$ est $R_{ta}''$ défini à la revendication 1;

R est un groupe de formule Ih

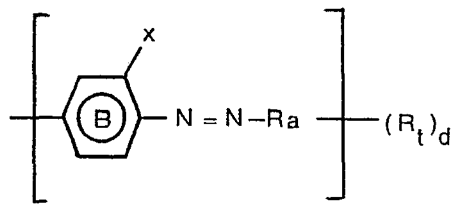

Ih

où x, Ra, $R_t$ et d' sont définis ci-dessus et

x est x' où x' est comme défini à la revendication 1;

et dans le cas des complexes métallifères la métallisation avec un métal capable de former un complexe métallifère 1:1 ou 1:2 ou capable de former un complexe métallifère 1:1 et un complexe métallifère 1:2.